# EUROPEAN PATENT APPLICATION

(11) **EP 4 712 530 A1**
(43) Date of publication of application: **18.03.2026**
(21) Application number: 24802926.6
(22) Date of filing: 06.05.2024
(51) Int. Cl.: H04W 12/06

(54) **AUTHENTICATION METHOD AND DEVICE**

(30) Priority: 06.05.2023 WO PCT/CN2023/092600
(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN)
(74) Representative: Grassi, Stefano
(86) International application number: PCT/CN2024/091199
(87) International publication number: WO 2024/230644

(57) **Abstract**

The present application relates to an authentication method, a device a computer readable storage medium, a computer program product, and a computer program. The method comprises: a first device sends a first message to a core network side device, wherein the first message carries a first response, and the first response is applied to the core network side device to execute authentication related to one or more second devices.

## Description

### CROSS-REFERENCE TO RELATED APPLICATION

This application is based on and claims priority to International Application No. PCT/CN2023/092600 filed on May 06, 2023, the disclosure of which is hereby incorporated by reference in its entirety.

### TECHNICAL FIELD

The disclosure relates to the field of communications, and more particularly to an authentication method and device, a computer-readable storage medium, a computer program product, and a computer program.

### BACKGROUND ART

In the related art, authentication and key negotiation processes between user equipment (UE) and a core network involve calculation functions of high complexity and a complicated key architecture. However, zero-power devices such as ambient Internet of Things (A-IoT) devices also have the need to access a network such as a core network. How to enable an A-IoT device to implement authentication with a network side while reducing the calculation complexity of the A-IoT device has become a problem that needs to be solved.

### SUMMARY

Embodiments of the disclosure provide an authentication method and device, a computer-readable storage medium, a computer program product, and a computer program.

Embodiments of the disclosure provide an authentication method, including: transmitting, by a first device, a first message to a core network side device, wherein the first message carries a first response used by the core network side device to perform authentication related to one or more second devices.

Embodiments of the disclosure provide an authentication method, including: receiving, by a core network side device, a first message from a first device, wherein the first message carries a first response used by the core network side device to perform authentication related to one or more second devices.

Embodiments of the disclosure provide an authentication method, including: receiving, by the first device, a second message from a core network side device, wherein the second message carries one or more first message authentication codes for authenticating the core network side device.

Embodiments of the disclosure provide an authentication method, including: transmitting, by the core network side device, a second message to the first device, wherein the second message carries one or more first message authentication codes for authenticating the core network side device.

Embodiments of the disclosure provide an authentication method, including: calculating, by a first device based on a third shared key shared with a target second device, a target verification code for authenticating the first device; and transmitting, by the first device, a third message to the target second device, wherein the third message carries the target verification code.

Embodiments of the disclosure provide an authentication method, including: receiving, by a target second device, a third message from a first device, wherein the third message carries a target verification code for authenticating the first device, and the target verification code is related to a third shared key shared by the target second device and the first device; and authenticating, by the target second device, the first device based on a target check code and the target verification code.

Embodiments of the disclosure provide an authentication method, including: receiving, by a first device, a fourth message from a target second device, wherein the fourth message carries a third response for authenticating the target second device, and the third response is related to a third shared key shared by the target second device and the first device; and authenticating, by the first device, the target second device based on the third response and a third expected response.

Embodiments of the disclosure provide an authentication method, including: transmitting, by a target second device, a fourth message to a first device, wherein the fourth message carries a third response for authenticating the target second device, and the third response is related to a third shared key shared by the target second device and the first device.

Embodiments of the disclosure provide a first device, including: a first communication unit, configured to transmit a first message to a core network side device, wherein the first message carries a first response used by the core network side device to perform authentication related to one or more second devices.

Embodiments of the disclosure provide a core network side device, including: a second communication unit, configured to receive a first message from a first device, wherein the first message carries a first response used by the core network side device to perform authentication related to one or more second devices.

Embodiments of the disclosure provide a first device, including: a first communication unit, configured to receive a second message from a core network side device, wherein the second message carries one or more first message authentication codes for authenticating the core network side device.

Embodiments of the disclosure provide a core network side device, including: a second communication unit, configured to transmit a second message to the first device, wherein the second message carries one or more first message authentication codes for authenticating the core network side device.

Embodiments of the disclosure provide a first device, including: a first processing unit, configured to calculate, based on a third shared key shared with a target second device, a target verification code for authenticating the first device; and a first communication unit, configured to transmit a third message to the target second device, wherein the third message carries the target verification code.

Embodiments of the disclosure provide a target second device, including: a third communication unit, configured to receive a third message from a first device, wherein the third message carries a target verification code for authenticating the first device, and the target verification code is related to a third shared key shared by the target second device and the first device; and a third processing unit, configured to authenticate the first device based on a target check code and the target verification code.

Embodiments of the disclosure provide a first device, including: a first communication unit, configured to receive a fourth message from a target second device, wherein the fourth message carries a third response for authenticating the target second device, and the third response is related to a third shared key shared by the target second device and the first device; and a first processing unit, configured to authenticate the target second device based on the third response and a third expected response.

Embodiments of the disclosure provide a target second device, including: a third communication unit, configured to transmit a fourth message to a first device, wherein the fourth message carries a third response for authenticating the target second device, and the third response is related to a third shared key shared by the target second device and the first device.

By means of the solutions according to the embodiments, by transmitting a first response, a first device can enable a core network side device to perform authentication related to each second device. In this way, authentication with the network side can be performed by the first device acting as a proxy for the second device, thus while ensuring that the core network side device can authenticate the second device, complex operation at the second device side can be avoided, alleviating the calculation burden of the second device.

### BRIEF DESCRIPTION OF THE DRAWINGS

FIG. 1 illustrates a schematic diagram of an application scenario according to embodiments of the disclosure.
FIG. 2 illustrates a schematic flowchart of an authentication method according to an embodiment of the disclosure.
FIG. 3 illustrates a schematic flowchart of an authentication method according to another embodiment of the disclosure.
FIG. 4 illustrates a schematic diagram of an architecture of a scenario of an authentication method according to embodiments of the disclosure.
FIG. 5a, FIG. 5b to FIG. 11 illustrate schematic flowcharts of an authentication method according to an embodiment of the disclosure.
FIG. 12 illustrates a schematic flowchart of an authentication method according to an embodiment of the disclosure.
FIG. 13 illustrates a schematic flowchart of an authentication method according to another embodiment of the disclosure.
FIG. 14 illustrates a schematic flowchart of a further authentication method according to an embodiment of the disclosure.
FIG. 15 illustrates a schematic flowchart of an authentication method according to another embodiment of the disclosure.
FIG. 16 illustrates a schematic flowchart of another authentication method according to an embodiment of the disclosure.
FIG. 17 illustrates a schematic flowchart of a further authentication method according to another embodiment of the disclosure.
FIG. 18 illustrates a schematic block diagram of a first device according to an embodiment of the disclosure.
FIG. 19 illustrates a schematic block diagram of a core network side device according to an embodiment of the disclosure.
FIG. 20 illustrates a schematic block diagram of a target second device according to an embodiment of the disclosure.

### DETAILED DESCRIPTION

The technical solutions of the embodiments of the disclosure may be applied to various communication systems, for example: Global System for Mobile Communications (GSM), Code Division Multiple Access (CDMA), Wideband CDMA (WCDMA), General Packet Radio Service (GPRS), Long Term Evolution (LTE), LTE-Advanced (LTE-A), new radio (NR), evolution of NR, Wireless Local Area Network (WLAN), Wireless Fidelity (WiFi), or other communication systems.

Various embodiments of the disclosure are described in conjunction with a network device and a terminal. The terminal may be mobile or fixed, and the terminal may also be referred to as a mobile station, a subscriber unit, or the like. The terminal may be a station in a WLAN, or may be such as a smart terminal, a wireless modem, a notebook, a tablet, or the like. In the embodiments of the disclosure, the terminal may be a virtual reality (VR) terminal/augmented reality (AR) terminal, an industrial control terminal, an unmanned driving terminal, a telemedicine terminal, a smart grid terminal, a transportation security terminal, a smart city terminal, a wireless terminal of a smart home, or the like. As an example, but not in a limiting way, in embodiments of the disclosure, the terminal may also be a wearable device.

In embodiments of the disclosure, the network device may be a device for communication with a terminal. The network device may be an access point (AP) in a WLAN, or a base station in GSM, CDMA, or WCDMA, or an Evolutional NodeB in LTE, or a relay node, or a vehicle-mounted device, a wearable device and a Next Generation Node B (gNB) in an NR network, a network device in a future evolved Public Land Mobile Network (PLMN) network, or a network in a Non-Terrestrial Network (NTN) network. As an example, but not in a limiting way, in embodiments of the disclosure, the network device may have mobility. For example, the network device may be a mobile device.

For convenience in understanding the technical solutions of the embodiments of the disclosure, the relevant technologies of the embodiments of the disclosure are described hereinafter. Any combination formed by the relevant technologies below as optional solutions and the technical solutions of the embodiments of the disclosure shall fall within the scope of protection of the embodiments of the disclosure.

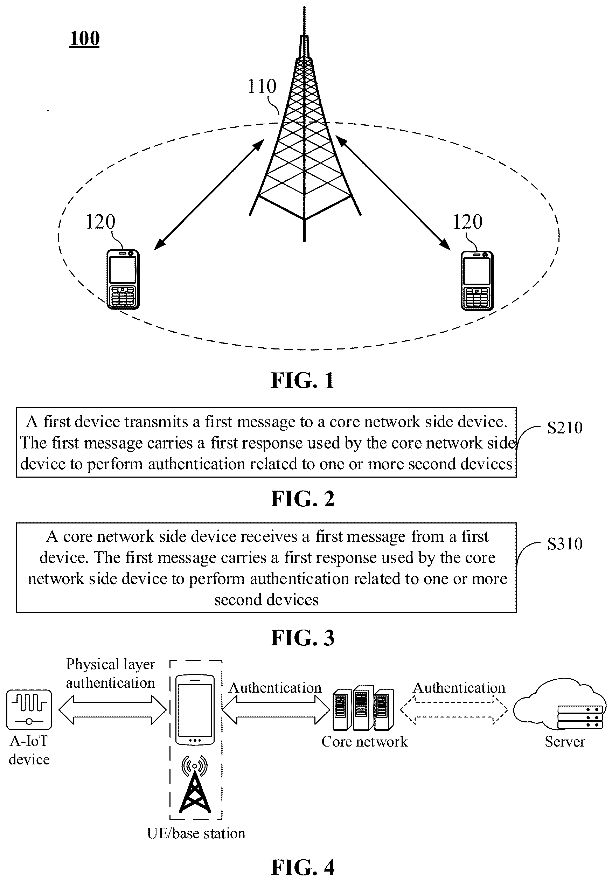

FIG. 1 exemplarily illustrates a communication system 100. The communication system includes a network device 110 and two terminals 120. In a possible implementation, the communication system 100 may include multiple network devices 110, and there may be another number of terminals 120 within the coverage of each network device 110, which is not limited in the embodiments of the disclosure. In a possible implementation, the communication system 100 may further include a mobility management entity (MME), an access and mobility management function (AFM) and other network entities, which is not limited in the embodiments of the disclosure. The network device may further include an access network device and a core network device. That is to say, the communication system may further include multiple core networks for communication with the access network device. The access network device may be a base station of an LTE system, an LTE-A system, or an NR system. With the communication system illustrated in FIG. 1 as an example, the communication devices may include a network device and terminal devices that have a communication function. The communication devices may further include other devices in the communication system, for example a network controller, a mobility management entity and other network entities, which is not limited in the embodiments of the disclosure.

FIG. 2 illustrates a schematic flowchart of an authentication method according to an embodiment of the disclosure. The method may include at least part of the following content.

At S210, a first device transmits a first message to a core network side device. The first message carries a first response used by the core network side device to perform authentication related to one or more second devices.

FIG. 3 illustrates a schematic flowchart of an authentication method according to another embodiment of the disclosure. The method may include at least part of the following content.

At S310, a core network side device receives a first message from a first device. The first message carries a first response used by the core network side device to perform authentication related to one or more second devices.

The first device includes at least one of: a terminal device or a first access network device. The second device is an Ambient Internet of Things (A-IoT) device. In some possible examples, any second device may also be a zero power device, such as an active zero power device, or a passive zero power device, or a semi-passive zero power device. Optionally, the second device may be referred to as a Tag. In some other possible examples, the second device may be a terminal with low computing capabilities. No exhaustive enumeration is made to all possible names or possible devices of the second device here.

Exemplarily, the one or more second devices may be connected to the core network in an indirect mode. In the indirect mode, the one or more second devices are connected to the core network through a terminal device or a first access network device corresponding to the terminal device. In such a case, the first device is the terminal device, or the first device may be the first access network device corresponding to the terminal device. Exemplarily, the one or more second devices may be connected to the core network in a direct mode. In the direct mode, the one or more second devices are connected to the core network through a corresponding first access network device. In this case, the first device is the first access network device. Additionally, in the case that the first device is a terminal device, the first device may be proxy UE, relay UE, or the like.

The core network side device may include one or more core network devices. The one or more core network devices may include at least one of: an authentication server function (AUSF), a Unified Data Management (UDM), an Authentication credential Repository and Processing Function (ARPF), an access and mobility management function (AMF), a user plane function (UPF), a security anchor function (SEAF), an AIoT network element. It should be understood that merely exemplary description is provided here. In actual processing, the one or more core network devices may also include other devices of the core network, but no exhaustive enumeration is made here.

In some possible implementations, at the first device side, the method further includes following: The first device calculates the first response based on at least one shared key. The at least one shared key includes at least one of: one or more first shared keys, or a second shared key. Different first shared keys of the one or more first shared keys are shared by different second devices with the first device and the core network side device. The second shared key is shared by the first device and the core network side device.

Further, the operation that the first device calculates the first response based on the at least one shared key may include: the first device calculates the first response based on identifiers of the one or more second devices and the at least one shared key.

Optionally, the first device may further calculate the first response based on the identifier(s) of the one or more second devices, the at least one shared key, and at least one of following parameters: an identifier of the first device, an identifier of the first network device, or at least one random number. No exhaustive enumeration is made to all possible parameters that may be used to calculate the first response herein.

Here, the first response may be a first RES (abbreviation for "Response").

Different second devices of the one or more second devices correspond to different first shared keys of the one or more first shared key. Different first shared keys of the one or more first shared keys are shared by different second devices of the one or more second device with the first device and the core network side device. Here, each second device, the first device, and the core network side device may have stored the corresponding first shared key before performing the authentication (i.e., S201 and S301).

Exemplarily, the first shared key corresponding to any second device is shared by the second device, the first device, and the core network side device. The first shared key corresponding to any second device may be at least one of: a pre-shared key, a pre-distributed key, a private network key, an application layer key, a physical layer key, a Physical Unclonable Function (PUF) key, or the like.

For example, the first shared key corresponding to any second device may be a root key corresponding to the second device. The above root key is merely an exemplary description; and in actual processing, any same key shared by a second device, a first device, and a core network side device falls within the protection scope of the disclosure The specific generation or distribution or configuration mode of the root key is not limited in this example.

For example, any first shared key may not be a root key of a second device, and may be an intermediate shared key corresponding to any second device. In this case, the processing by the first device may further include that the first device receives one or more first shared keys.

For example, the intermediate shared key corresponding to any second device may be obtained by negotiation between the second device and the core network side device. Then the core network side device uses the intermediate shared key as the first shared key and transmits the first shared key corresponding to the second device to the first device through the first network device, and the first device saves the first shared key. That is, the first device receives one or more first shared keys from the first network device. Accordingly, the first network device transmits the one or more first shared keys to the first device.

With an i^{th} second device (i is a positive integer) as an example, the i^{th} second device shares a root key with the core network side device and the first device does not share the root key. The i^{th} second device and the core network side device may derive an intermediate shared key of the i^{th} second device based on the root key of the i^{th} second device, and the core network side uses the intermediate shared key of the i^{th} second device as the first shared key of the i^{th} second device, and transmits the first shared key of the i^{th} second device to the first device through the first network device. Accordingly, the first device may receive the first shared key of the i^{th} second device from the first network device. In this way, the first shared key of the i^{th} second device is a key shared by the i^{th} second device, the core network side device and the first device.

The first network device includes one of: an authentication server function (AUSF), or an authentication device. The authentication device includes one of: a second access network device, an access and mobility management function (AMF), a security anchor function (SEAF), a user plane function (UPF), a service server, or an AIoT network element.

In some possible examples, the first network device may be a first core network device among core network side devices. For example, the first core network device may be any one of an AUSF, an AMF, a UPF, a SEAF, an AIOT network element, or the like. For another example, the first core network device may be an authentication device deployed in the core network. In this case, the authentication device may be an AIoT network element deployed in the core network and/or a service server deployed in the core network. The service server may be a server serving for AIoT services, and the service server may be deployed at the core network side as a network element of the core network. The AIOT network element may refer to any one of a core network element having an AIOT service function, a core network element having an AIOT function, a core network element serving an AIOT function, or the like. It should be understood that the AIOT network element may be a separately set core network element specifically for serving an AIOT function, or may be an existing core network element to which an AIOT function is added. No exhaustive enumeration is made to all possible cases in this embodiment.

In some possible examples, the first network device is an authentication device. The authentication device may be a device with an AIOT function, or a device dedicated to an AIOT authorization function, or a device dedicated to an AIOT authentication function. For example, the authentication device is an Authenticator or an AIOT authentication device (i.e., an A-IoT Authenticator). The authentication device may be deployed in the core network. That is, the first network device may be a first core network device among core network side devices, or the first network device may be an authentication device not deployed in the core network. Alternatively, the first network device may be a second access network device, and the second access network device may be an access network device having an AIoT authentication function. Alternatively, the first network device may be a service server. The service server is not deployed in the core network, but is a server capable of accessing the core network and serving AIoT services, or referred to as an AIoT server.

In the above example, the manner of generating the intermediate shared key is not limited in this embodiment. The intermediate shared key may be calculated based on a random number and a root key of the second device using a designated key calculation manner, or may be obtained in other ways. Any scheme shall fall within the protection scope of this embodiment as long as the i^{th} second device and the core network side device can obtain the same intermediate shared key. It should also be understood that the above parameter for deriving the intermediate shared key may not be a root key, and any scheme shall fall within the protection scope of this embodiment as long as a key shared only by the i^{th} second device and the core network side device and not shared by the first device is used in deriving the intermediate shared key.

The above second shared key may be at least one of: a pre-distributed second shared key, a private network second shared key, an application layer second shared key, a physical layer second shared key, a Physical Unclonable Function (PUF) second shared key, a root key of the first device, another key derived based on the root key of the first device, and the like. The acquisition manner, generation manner, and acquisition timing of the second shared key are not limited in this embodiment. Any scheme shall fall within the protection scope of this embodiment as long as the second shared key can be stored in both the first device and the core network side device before the authentication method according to this embodiment is executed.

In some possible implementations, the operation that the first device calculates the first response based on the at least one shared key includes: the first device calculates the first response based on identifiers of the one or more second devices, and the one or more first shared keys. The first response is used by the core network side device to authenticate the one or more second devices.

Optionally, besides being used by the core network side device to authenticate the one or more second devices, the first response may also be used by the core network side device to authenticate the first device serving as an intermediate node for the one or more second devices. The first device serving as an intermediate node of the one or more second devices may alternatively be referred to as: the first device serving as a proxy device for the one or more second devices, or the first device (such as UE) serving as a service binding device for the one or more second devices, or the like. No exhaustive enumeration is made here.

Optionally, the parameters used to calculate the first response may include, but are not limited to, identifiers of the one or more second devices, the one or more first shared keys. Exemplarily, the operation that the first device calculates the first response based on the identifier(s) of the one or more second devices, and the one or more first shared keys may include: the first device calculates the first response based on the identifier(s) of the one or more second devices, the one or more first shared keys, and at least one of following parameters: an identifier of the first device, an identifier of a first network device, or the second shared key.

Provided here is merely exemplary description. In actual processing, more types of parameters may be used to calculate the first response. For example, one or more random numbers may be added. The function of the one or more random numbers may be used to prevent replay attacks. The one or more random numbers may include at least one of: one or more first random numbers, one or more second random numbers, a third random number, one or more fourth random numbers, and the like. The specific usage mode or specific allocation mode of the above various types of random numbers will be described below, and no exhaustive enumeration or limitation is made herein.

Exemplarily, in the processing that the first device calculates the first response, one or more intermediate keys may be firstly calculated, and then the first response may be calculated based on the one or more intermediate keys.

For example, the first device calculates one or more first intermediate keys based on the one or more first shared keys, and calculates the first response based on one or more first intermediate keys, the identifier(s) of the one or more second devices, and at least one of following parameters: the identifier of the first device, the identifier of the first network device, the second shared key, the one or more first random numbers, or the third random number.

For example, the first device calculates one or more second intermediate keys based on the one or more first shared keys and at least one of following parameters: the identifier of the first network device, the one or more fourth random numbers, the second shared key. The first device calculates the first response based on the one or more second intermediate keys, the identifier(s) of the one or more second devices, and at least one of following parameters: the identifier of the first device, or one or more first random numbers.

For example, the first device calculates a third intermediate key based on at least one of the second shared key, the identifier of the first network device, or the third random number, and calculates, using a first calculation mode, the first response based on the third intermediate key, the identifier(s) of the one or more second devices, the one or more first shared keys, and at least one of: the identifier of the first device, or the one or more first random numbers.

For another example, the first device obtains a third intermediate key based on at least one of the second shared key, the identifier of the first network device, or a third random number, obtains the one or more first intermediate keys based on the one or more first shared keys, and calculates the first response based on the third intermediate key, the identifier(s) of the one or more second devices, the one or more first intermediate keys, and at least one of: the identifier of the first device, or the one or more first random numbers.

Exemplarily, in the processing that the first device calculates the first response, the first device may further calculate one or more second responses firstly, and then use a first calculation mode to calculate the first response based on the one or more second responses, the identifier(s) of the one or more second devices, the one or more first shared keys, and at least one of: the identifier of the first device, the one or more first random numbers, the identifier of the first network device, or the second shared key.

For example, in the processing that the first device calculates the first response, the first device may firstly calculate one or more first intermediate responses, and then calculate the first response based on the one or more first intermediate responses. For example, the first device calculates one or more first intermediate responses based on the identifier(s) of the one or more second devices, the one or more first shared keys, and at least one of: the identifier of the first device, the second shared key, the one or more first random numbers, or one or more second responses; and calculates the first response based on the one or more first intermediate responses. The operation that the first device calculates the first response based on the one or more first intermediate responses may be that the first device calculates the first response based on the one or more first intermediate responses and at least one of: a third random number, or the identifier of the first network device. In such examples, the first response may also be referred to as a group response.

In some embodiments, the operation that the first device calculates the first response based on the identifiers of the one or more second devices, and the one or more first shared keys, includes: the first device calculates the first response based on the identifier(s) of the one or more second devices, the one or more first shared keys, an identifier of the first device, and one or more first random numbers.

The operation that the first device calculates the first response based on the identifier(s) of the one or more second devices, the one or more first shared keys, the identifier of the first device, and the one or more first random numbers includes one of following: the first device calculates, using a first calculation mode, the first response based on the identifier(s) of the one or more second devices, the one or more first shared keys, the identifier of the first device, and the one or more first random numbers; the first device obtains one or more intermediate keys based on the one or more first shared keys, and calculates, using the first calculation mode, the first response based on the identifier(s) of the one or more second devices, the one or more intermediate keys, the identifier of the first device, and the one or more first random numbers; or the first device calculates one or more first intermediate responses based on the identifier(s) of the one or more second devices, the one or more first shared keys, the identifier of the first device, and the one or more first random numbers, and calculates the first response based on the one or more first intermediate responses.

In some possible examples, the first device may directly calculate the first response using the first shared key.

The operation that the first device calculates, using the first calculation mode, the first response based on the identifier(s) of the one or more second devices, the one or more first shared keys, the identifier of the first device, and the one or more first random numbers includes one of following: The first device calculates, using the first calculation mode, the first response based on one or more second responses, the identifier(s) of the one or more second devices, the one or more first shared keys, the identifier of the first device, and the one or more first random numbers, the one or more second responses being obtained based on one or more second random numbers; the first device calculates, using the first calculation mode, the first response based on the second shared key, the identifier(s) of the one or more second devices, the one or more first shared keys, the identifier of the first device, and the one or more first random numbers; or the first device calculates a third intermediate key based on the second shared key, an identifier of a first network device, and a third random number, and calculates, using the first calculation mode, the first response based on the third intermediate key, the identifier(s) of the one or more second devices, the one or more first shared keys, the identifier of the first device, and the one or more first random numbers.

The identifier(s) may include an ID and/or a network identifier. For example, the ID may include, but is not limited to, at least one of: a Subscription Permanent Identifier (SUPI), a 5^{th}-generation Globally Unique Temporary Identifier (5G-GUTI), a Generic Public Subscription Identifier (GPSI), an Index, or the like. As another example, the network identifier may include at least one of: an Internet protocol (IP) address, a Media Access Control (MAC) address, or the like. It is to be noted that in the following, for the sake of simplicity, an ID is used as an identifier for exemplary description, and the IDs mentioned in the following can be replaced with a network identifier (IP address and/or MAC address), which will not be repeated again.

The first calculation mode above may include at least one of: a first authentication function, a second authentication function, a third authentication function, a Hash algorithm, an Advanced Encryption Standard (AES), an ACSON, a Simplified New Orthogonal Frequency Division Multiplexing 3^{rd} Generation (SNOW 3G), ZU Chongzhi (ZUC), exclusive OR calculation, concatenation, and a key derivation function (KDF). The first authentication function can be expressed as f1 (), and the second authentication function can be expressed as f2 (). The Hash algorithm may be denoted as HASH (). The Hash algorithm may include Hash based Message Authentication Code-Secure Hash Algorithm-256 (HMAC-SHA-256), or other HASH algorithms may also be used, but no exhaustive enumeration is made in this embodiment. It should be understood that merely exemplary description is provided here. In actual processing, the first calculation mode may also include more possibilities, such as at least one of: a third key generation function (which may be denoted as f3 for example), a fourth key generation function (which may be denoted as f4 for example), a fifth key generation function (which may be denoted as f5 for example), or the like, and no exhaustive enumeration is made to all possible calculation functions (or algorithms) of the first calculation mode here.

In one example, in a case that the number of second devices is one, the first device calculates, using the first calculation mode, the first response based on the identifier of the second device, the first shared key, the identifier of the first device, and the first random number.

With the first shared key being a root key, the first calculation mode being a Hash algorithm, and the first device being UE as an example, the above processing of calculating the first response may be expressed by the following formula: RES'=HASH(Kr, AIoT ID, UE ID, NONCE1), where RES' represents the first response, HASH represents the Hash algorithm, Kr is the first shared key, namely the root key, AIoT ID is the identifier of the second device, UE ID is the identifier of the first device, and NONCE1 is the first random number. The Hash algorithm may be replaced with another algorithm or function of the first calculation mode, for example, a second authentication function, and the processing may be calculated using the following formula: RES'= f2 (Kr, AIoT ID, UE ID, NONCE1), where f2 represents the second authentication function, and other parameters in the formula have the same meaning as those described in the foregoing, which will not be described again. The above first shared key may also be any one of: K, a PreShared Key (PSK), a Pairwise Master Key (PMK), or the like. Kr in the respective formula examples provided in the corresponding embodiments (including the following) may alternatively be represented as K, a PSK, a PMK, or the like. No exhaustive enumeration is made here.

With the first shared key being KAUSF-A (namely the case where the intermediate shared key KAUSF-A is used as the first shared key), the first calculation mode being a Hash algorithm, and the first device being a terminal device (such as UE) as an example, the processing that the first device calculates the first response may be expressed by the following formula: RES'= HASH (KAUSF-A, AIoT ID, UE ID, NONCE1), where KAUSF-A is the first shared key, and other parameters in the formula have the same meaning as those described in the foregoing, which will not be described again. The Hash algorithm may also be replaced with the second authentication function of the first calculation mode, and may be calculated using, for example, the following formula: RES'= f2 (KAUSF-A, AIoT ID, UE ID, NONCE 1). Contents or parameters in this formula have the same meaning as those described in the above example, which will not be described here again. No exhaustive enumeration is made to specific examples about the fact that the Hash algorithm may also be replaced with other calculation modes of the first calculation mode here. Additionally, in some possible examples, the above first shared key may also be represented as K_{AUSF-A}. KAUSF-A and K_{AUSF-A} have the same meaning as each other hereinafter, unless otherwise specified, which will not be described again.

It should be understood that the above is related description about the calculation formula with the first device being UE as an example, and the first device may also be a first access network device except being UE. With the first device being a gNB as an example, the processing of calculating the first response may alternatively be calculated by any one of the following formulas: RES'= HASH (Kr, AIoT ID, gNB ID, NONCE1), RES' = f2 (Kr, AIoT ID, gNB ID, NONCE1), RES'= HASH (KAUSF-A, AIoT ID, gNB ID, NONCE1), or RES' = f2 (KAUSF-A, AIoT ID, gNB ID, NONCE1).

In the following examples involving the identifier of the first device, if description is made with the UE ID as an example, the UE ID may be replaced with the identifier of the first access network device, for example, the UE ID may be replaced with any one of an eNB ID, a gNB ID, or the like, which will not be described again for the sake of brevity.

In a case that the number of second devices is multiple, the first device calculates, using a first calculation mode, the first response based on the identifiers of the multiple second devices, multiple first shared keys, the identifier of the first device, and multiple first random numbers. In the case that the number of the second devices is multiple, the multiple second devices may be devices belonging to the same device group.

In a case that the number of the second devices is multiple, there may be a common first random number for the device group composed of the multiple second devices; in this case, the first device calculates, using a first calculation mode, the first response based on the identifiers of the multiple second devices, the multiple first shared keys, the identifier of the first device, and the first random number. With each first shared key being a root key corresponding to a second device, and the first calculation mode including a Hash algorithm and an exclusive OR algorithm as an example, the first device calculates, using the first calculation mode, the first response based on the identifiers of the multiple second devices, the multiple first random numbers, the multiple first shared keys, and the identifier of the first device, which may be expressed by the following formula: *RES' = HASH (Kr₁⊕... ... ⊕Kr_{N}, (AIoT ID-1,* ..., *AIoT ID*-*N), UE ID, NONCE1)*. RES' represents the first response. The first response may also be referred to as a first group response. In some possible examples, RES' may be denoted as RES'-Group. N is an integer greater than or equal to 2. N may represent the total number of second devices in a device group. Any Krᵢ in Kr₁~Kr_{N} may be a root key corresponding to the i^{th} second device, and i is an integer greater than or equal to 1 and less than or equal to N. Each of the AIoT ID-1 to AIoT ID-N is an identifier of a respective one of the N second devices, and the UE ID indicates an identifier of the first device being a terminal device. Other parameters in the formula have the same meaning as those described in the foregoing, which will not be described again. If the first device is a first access network device, such as a gNB, the above formula may alternatively be expressed as: *RES' = HASH (Kr₁⊕... ... ⊕Kr_{N}, (AIoT ID-1,* ..., *AIoT ID-N), gNB ID, NONCE1)*.

Exclusive OR calculation or concatenation may also be performed on the AIoT ID-1 to AIoT ID-N, for example: *(AIoT ID-1, ..., AIoT ID-N)= (AIoT ID-1*∥*AIoT ID-2*∥...∥ *AIoT ID-N)* or *(AIoT ID-1,..., AIoT ID-N)= (AIoT ID-1 ⊕AIoT ID-2⊕... ⊕ AIoT ID-N).*

In some other examples, any above Kr may also be replaced with any KAUSF-A, for example the above formula is replaced with RES' = HASH (KAUSF-A₁⊕ ...... ⊕KAUSF-A_{N}, (AIoT ID-1,..., AIoT ID-N), UE ID, NONCE1) . In the above formula, any KAUSF-Aᵢ in KAUSF-A₁∼ KAUSF-A_{N} may be the first shared key corresponding to the i^{th} second device, and other contents in the formula have the same meaning as those in the above example, which will not be described here again. If the first device is a first access network device, such as a gNB, the above formula may alternatively be expressed as: *RES' = HASH (KAUSF-A₁ ⊕... ... ⊕KAUSF-A_{N}, (AIoT ID-1,...,* AIoT *ID-N), gNB ID, NONCE1)*.

It is to be noted that, in a case that the number of second devices is multiple, each of the one or more first random numbers may correspond to a respective different second device. That is, each second device in a device group composed of the multiple second devices has a corresponding first random number. In this case, the first device calculates, using a first calculation mode, the first response based on the identifiers of the multiple second devices, multiple first shared keys, the identifier of the first device, and multiple first random numbers. With each first shared key being a root key corresponding to a second device, and the first calculation mode including a Hash algorithm and an exclusive OR algorithm as an example, the processing of calculating the first response may be expressed by the following formula: *RES' = HASH (Kr₁⊕... ... ⊕Kr_{N}, (AIoT ID-1,..., AIoT ID-N), UE ID, NONCE₁...NONCE_{N}).* Exclusive OR calculation or concatenation may be performed among NONCE₁...NONCE_{N}, all of which are within the protection scope of this embodiment. NONCE₁ to NONCE_{N} are first random numbers corresponding to N second devices respectively. If the first device is a first access network device, such as a gNB, the above formula may alternatively be expressed as: *RES' = HASH (Kr₁⊕... ... ⊕Kr_{N}, (AIoT ID-1, ..., AIoT ID-N), gNB ID, NONCE1...NONCE_{N}).*

The above is only a possible example in the scenario of multiple second devices, and the algorithm illustrated in the above formula may also be replaced with other algorithms or functions of the first calculation mode. No exhaustive enumeration is made here.

In one example, in a case that the number of second devices is one, the first device calculates, using the first calculation mode, the first response based on a second response, the identifier of the second device, the first shared key, the identifier of the first device, and the first random number.

The second response may be calculated based on a second random number, and the second random number may be transmitted by the core network side device to the first device. Exemplarily, the second response may be expressed as RES, and the calculation mode for obtaining the second response may be RES = f2 (RAND). RAND is the second random number. Merely exemplary description is provided here. In actual processing, except being calculated using the second random number, the second response may also be calculated by using other shared keys of the first device and the core network side device and the second random number. For example, the second response may be expressed as RES = f2 (RAND, K), where K may be another shared key between the first device and the core network side device. The acquisition method or generation method of said another shared key is not limited in this embodiment. In addition to the exemplified second authentication function, other algorithms or functions may also be used in the calculation manner for the second response. For example, the second authentication function may be replaced with a Hash algorithm or the like. No exhaustive enumeration is made to various possible generation algorithms or generation parameters of the second response here. It is to be noted that regarding the core network side device transmits the second random number to the first device, in a case that the first network device is a core network side device, the second random number may be transmitted to the first device by the first network device.

With the first shared key being a root key and the first calculation mode being a Hash algorithm as an example, the processing that the first device calculates the first response may be expressed by the following formula: RES'= HASH (Kr, AIoT ID, UE ID, RES, NONCE1), where RES is the second response, and other parameters in the formula have the same meaning as those described in the foregoing, which will not be described again. The Hash algorithm may be replaced with another algorithm or function of the first calculation mode, for example, the Hash algorithm may be replaced with a second authentication function, and the calculation formula may be replaced with: RES'= f2 (Kr, AIoT ID, UE ID, RES, NONCE1), where f2() represents the second authentication function, and other parameters in the formula have the same meaning as those described in the foregoing, which will not be described again. No exhaustive enumeration is made herein to specific examples about the fact that the Hash algorithm may also be replaced with other algorithms or functions of the first calculation mode.

With the first shared key being KAUSF-A and the first calculation mode being a Hash algorithm as an example, the operation that the first device calculates the first response may be expressed by the following formula: RES'= HASH (KAUSF-A, AIoT ID, UE ID, RES, NONCE1). The contents in the formula have the same meaning as those in the above embodiment, which will not be described here again. The above is merely exemplary description. In some more examples, the Hash algorithm may also be replaced with the second authentication function or other algorithms or functions of the first calculation mode. No exhaustive enumeration is made in this embodiment.

In a case that the number of second devices is multiple, the first device calculates, using a first calculation mode, the first response based on multiple second responses, the identifiers of the multiple second devices, the multiple first shared keys, the identifier of the first device, and the one or more first random numbers.

The multiple second responses may be calculated based on second random numbers corresponding to the multiple second devices respectively, and any one of the second random numbers may be transmitted by the core network side device to the first device. The acquisition manner of any second random number and the calculation manner of any second response are the same as those in the above embodiment, and will not be described again.

With each first shared key being a root key corresponding to a second device, a first calculation mode being a Hash algorithm, and multiple second devices corresponding to the same first random number as an example, the first device calculates the first response, which can be expressed by the following formula: *RES' = HASH(Kr₁⊕... ... ⊕Kr_{N}, (AIoT ID-1, ..., AIoT ID-N), UE ID, RES₁⊕... ⊕RES_{N}, NONCE₁)*, where RES₁~ RES_{N} are N second responses corresponding to the N second devices respectively, are the second responses described above. The other contents in the formula have the same meaning as those in the above embodiment, which will not be described again.

The Hash algorithm may also be replaced with other algorithms or functions of the first calculation mode. For example, the Hash algorithm may be replaced with a second authentication function, etc., or the exclusive OR calculation may be replaced with concatenation. No exhaustive enumeration is made here. Kr of each second device in the above-described formula may also be replaced with KAUSF-A of the second device, and possible replacement manners of the above-described formula will not be described one by one in this embodiment. In addition, the same one first random number in this example may also be replaced with the first random number corresponding to each second device, that is, the first device calculates, using a first calculation mode, the first responses based on multiple second responses, the identifiers of the multiple second devices, the multiple first random numbers, the multiple first shared keys, and the identifier of the first device, which will not be described again.

In one example, in a case that the number of second devices is one, the first device calculates, using the first calculation mode, the first response based on the second shared key, the identifier of the second device, the first shared key, the identifier of the first device, and the first random number.

With the first shared key being a root key and the first calculation mode including a second authentication function and concatenation as an example, the operation that the first device calculates the first response may be expressed by the following formula: RES' = f2 (KAUSF-UE ∥ Kr, AIoT ID, UE ID, NONCE1), where "∥" denotes concatenation, and KAUSF-UE is a second shared key with the first device being UE as an example. Description of the remaining parameters is the same as that in the above example, and will not be described here again. The first calculation mode may also be replaced with a Hash function and concatenation. For example, the first calculation mode may be expressed as: RES' = HASH (KAUSF-UE ∥ Kr, AIoT ID, UE ID, NONCE1). Description of each parameter in the formula is the same as that in the above example, and will not be repeated. Alternatively, the first calculation mode may also be replaced with a Hash function and exclusive OR calculation, for example, the first calculation mode may be expressed as: *RES' = HASH(KAUSF-UE⊕Kr, AIoT ID, UE ID, NONCE₁)*, where ⊕ represents exclusive OR calculation. Description of each parameter in the formula is the same as that in the above example, and will not be repeated.

In the above-described example, the first shared key may also be replaced with KAUSF-A, and the above processing may be expressed by the following formula: RES' = f2 (KAUSF-UE ∥ KAUSF-A, AIoT ID, UE ID, NONCE1), where "∥" represents concatenation. Description of each parameter in the formula is the same as that in the above example, and will not be repeated. The first calculation mode in the above example may also be replaced with a Hash function and exclusive OR calculation. For example, the first calculation mode may be expressed as: RES' = HASH (KAUSF-UE ⊕ KAUSF-A, AIoT ID, UE ID, NONCE1). Description of each parameter in the formula is the same as that in the above example, and will not be repeated.

In the above example, the second shared key KAUSF-UE with the first device being UE as an example may also be represented as K_{AUSF-UE}. KAUSF-UE and K_{AUSF-UE} have the same meaning as each other hereinafter, unless otherwise specified, which will not be described again. In addition, the second shared key may also be replaced with a root key of UE. For example, the second shared key may be denoted as Kr-UE, or KrUE, or Kr_{UE}. Alternatively, the second shared key may be replaced with another key derived based on the root key of the UE, such as a Ciphering Key (CK) corresponding to the UE, or an Integrity Key (IK) corresponding to the UE, or a KSEAF (which may be denoted as K_{SEAF} or K_{SEAF-UE}).

If the first device is a first access network device, the corresponding second shared key may be a KAUSF-gNB (or a KAUSF-eNB, or the like). In addition, the second shared key may also be replaced with the root key of the first access network device, for example, the second shared key may be denoted as Kr-gNB, or KrgNB, or Kr_{gNB}. Alternatively, the second shared key may be replaced with another key derived based on the root key of the first access network device, such as a CK corresponding to the first access network device, an IK corresponding to the first access network device, or a KSEAF (which may be denoted as K_{SEAF} or K_{SEAF-gNB}).

For example, in each formula in the above example, the KAUSF-UE may be replaced with the KAUSF-gNB, and the UE ID may be replaced with gNB ID, for example, RES' = f2 (KAUSF-gNB ∥ KAUSF-A, AIoT ID, gNB ID, NONCE 1), *RES' = HASH (KAUSF-gNB ⊕ Kr, AIoT ID, gNB ID,* NONCE1), RES' = HASH (KAUSF-gNB ∥ Kr, AIoT ID, gNB ID, NONCE1), RES' = f2 (KAUSF-gNB ∥ Kr, AIoT ID, gNB ID, NONCE1). The UE ID involved in various following examples may be replaced with a gNB ID (or an identifier of an access network device such as an eNB ID) in a case that the first device is a first access network device, and the KAUSF-UE involved in various following examples may be replaced with a KAUSF-gNB (or a second shared key between an access network device and a core network, such as a KAUSF-eNB) in a case that the first device is a first access network device, which will not be described again hereinafter, for sake of brevity.

The foregoing second response may further be added to the above example, that is, the first device may calculate, using the first calculation mode, the first response based on the second shared key, the identifier of the first device, the identifier of the second device, the first random number, the second response, and the first shared key. For example, the first calculation mode includes a Hash function and concatenation, and the above processing may be expressed as: RES' = HASH (KAUSF-UE ∥ KAUSF-A, AIoT ID, UE ID, RES, NONCE 1), and each parameter in the formula has the same meaning as that in the above example, which will not be described again. In each formula in the above example, the KAUSF-UE may be replaced with the KAUSF-gNB, and the UE ID may be replaced with the gNB ID, which will not be described again.

In a case that the number of second devices is multiple, the first device calculates, using the first calculation mode, the first response based on the second shared key, the identifiers of the multiple second devices, the multiple first shared keys, the identifier of the first device, and the one or more first random numbers.

With each first shared key being a root key corresponding to a second device, the first calculation mode including a second authentication function and concatenation, and multiple second devices corresponding to the same first random number as an example, the operation that the first device calculates the first response may be expressed by the following formula: RES' = f2 (KAUSF-UE ∥Kr₁∥...∥Kr_{N}, AIoT ID-1...AIoT ID-N, UE ID, NONCE1). Description of each parameter is the same as that in the above example, and will not be repeated. The first calculation mode may also be replaced with a Hash function and exclusive OR calculation, for example, the first calculation mode may be expressed as: *RES' = HASH (KAUSF-UE ⊕ Kr₁... ⊕Kr_{N}, AIoT ID-1...AIoT ID-N, UE ID, NONCE1)*, where ⊕ represents exclusive OR calculation. Description of each parameter in the formula is the same as that in the above example, and will not be repeated. Each first shared key in the above example may also be replaced with a KAUSF-A, which will not be described here again.

Multiple second responses may further be added to the above example. For example, the first calculation mode includes a Hash function and concatenation, then the above processing may be expressed as: RES' *=* f2 (KAUSF-UE ∥Kr₁∥...∥Kr_{N}, AIoT ID-1...AIoT ID-N, UE ID, RES₁∥...∥RES_{N}, NONCE1), and each parameter in the formula has the same meaning as that in the above example, which will not be described again.

It should be understood that the above is merely exemplary description, and no exhaustive enumeration is made to all possible combinations in the foregoing first calculation mode. Any first calculation mode shall fall within the protection scope of this embodiment as long as the first response can be calculated by using one or more algorithms or functions of the first calculation mode.

In one example, in a case that the number of second devices is one, the first device obtains a third intermediate key based on the second shared key, an identifier of a first network device, and a third random number, and calculates, using the first calculation mode, the first response based on the third intermediate key, the identifier of the second device, the first shared key, the identifier of the first device, and the first random number.

The above operation that the first device obtains the third intermediate key based on the second shared key, the identifier of the first network device, and the third random number may include: the first device calculates, using a second calculation mode, the third intermediate key based on the second shared key, the identifier of the first network device, and the third random number. The second calculation mode may include KDF. In some possible examples, the second calculation mode may further include other calculation functions, such as any one of: a third key generation function (f3), a fourth key generation function (f4), a fifth key generation function (f5), or the like, and no exhaustive enumeration is made to all possible calculation functions of the second calculation mode in this embodiment.

For example, the third intermediate key calculated by the first device may be calculated using the following formula: KUE = KDF (KAUSF-UE, A-IoT Authenticator ID, NONCE2), where KUE is the third intermediate key in a case that the first device is a terminal device, KDF () is a KDF function or a KDF calculation function, KAUSF-UE is a second shared key, A-IoT Authenticator ID is an identifier of the first network device foregoing, and NONCE2 is a third random number (the third random number may also be replaced with RAND). The KAUSF-UE may also be denoted as K_{AUSF-UE}, the KUE may also be denoted as K_{UE}. Unless otherwise specified hereinafter, KAUSF-UE and K_{AUSF-UE} have the same meaning as each other, and KUE and K_{UE} have the same meaning as each other, which will not be described again.

The first network device may specifically refer to an authentication device, for example, an AIOT authentication device (i.e., an A-IoT Authenticator). It should be understood that the first network device may also be an AUSF, then the A-IoT Authenticator ID may be replaced with an AUSF ID, and accordingly, the above formula may be replaced with KUE = KDF (KAUSF-UE, AUSF ID, NONCE2), all of which are within the protection scope of this embodiment.

The third random number may be transmitted by the first network device to the first device, and the transmission timing of the third random number, as long as being before the execution of the operations S201 and S301, falls within the protection range of this embodiment. It is to be noted that regarding the operation that the first network device transmits the third random number to the first device: in a case that the first network device is a core network side device, the core network side device may transmit the third random number to the first device; and in a case that the first network device is not a core network side device, the first network device performs transmission of the third random number.

With the first shared key being a root key and the first calculation mode including a second authentication function and concatenation as an example, the operation that the first device calculates the first response may be expressed as: RES' = HASH (KUE ∥ Kr, AIoT ID, UE ID, NONCE1), where KUE is the third intermediate key, Kr denotes the root key, and other parameters in this formula have the same meanings as those in the above embodiment, which will not be described again. With the first shared key being a KAUSF-A, and the first calculation mode including a second authentication function and concatenation as an example, the calculation formula for calculating the first response may be expressed as RES' = f2 (KUE ∥ KAUSF-A, AIoT ID, UE ID, NONCE1), where KAUSF-A is the first shared key, and other parameters have the same meaning as those in other previous embodiments, which will not be described again.

In the above examples, HASH and f2 may both be replaced by any other algorithm or function of the first calculation mode, and the direct connection algorithm may also be replaced by any other algorithm or function of the first calculation mode, for example, RES' = f2 (KUE ⊕ Kr, AIoT ID, UE ID, NONCE1). Additionally, in the above examples, a second response may also be added, for example, RES' = f2 (KUE ⊕ Kr, AIoT ID, UE ID, RES, NONCE1). No exhaustive enumeration is made to all possible cases and combinations here.

If the first device is a first access network device, the corresponding second shared key may be denoted as a KAUSF-gNB (or KAUSF-eNB, etc.). In the formulas in the above example, the KAUSF-UE may be replaced with the KAUSF-gNB, the UE ID may be replaced with the gNB ID, and the respective third intermediate key KUE may also be replaced with a KgNB, a KeNB, or the like which represents a third intermediate key of the first access network device. For example, KgNB = KDF (KAUSF-gNB, A-IoT authenticator ID, NONCE2), and KgNB = KDF (KAUSF-gNB, AUSF ID, NONCE2). Correspondingly, the formula for calculating the first response may also be replaced with any one of: RES' = HASH (KgNB ∥ Kr, AIoT ID, gNB ID, NONCE1), RES' = f2 (KgNB ∥ KAUSF-A, AIoT ID, gNB ID, NONCE1), RES' = f2 (KgNB⊕Kr, AIoT ID, gNB ID, NONCE1), RES' = f2 (KgNB⊕Kr, AIoT ID, gNB ID, RES, NONCE1) and so on. The UE ID involved in the following examples may be replaced with a gNB ID (or an identifier of an access network device such as an eNB ID) in a case that the first device is a first access network device. The KAUSF-UE involved in the following examples may be replaced with a KAUSF-gNB (or a second shared key between the access network device and a core network such as a KAUSF-eNB) in a case that the first device is the first access network device. The KUE involved in the following examples may be replaced with a KgNB (or a KeNB, etc.) in a case that the first device is the first access network device. Description will not be made again hereinafter, for sake of brevity.

In a case that the number of second devices is multiple, the first device obtains a third intermediate key based on the second shared key, the identifier of the first network device, and the third random number, and calculates, using the first calculation mode, the first response based on the third intermediate key, the identifiers of the multiple second devices, the multiple first shared keys, the identifier of the first device, and the one or more first random numbers. The way in which the first device obtains the third intermediate key based on the second shared key, the identifier of the first network device, and the third random number is the same as that in the above embodiment, which will not be described again.

With each first shared key being a root key corresponding to a second device, the first calculation mode including a second authentication function and concatenation, and multiple second devices corresponding to the same first random number as an example, the operation that the first device calculates the first response may be expressed as: RES' =HASH (KUE ∥Kr₁...∥Kr_{N}, AIoT ID-1...AIoT ID-N, UE ID, NONCE1), where KUE is the third intermediate key, and other parameters in this formula have the same meanings as those in the above embodiment, which will not be described again. In the above example, each root key may also be replaced with KAUSF-A, and the first calculation mode includes a second authentication function and concatenation. The formula for calculating the first response may be expressed as RES' =f2(KUE ∥KAUSF-A₁...∥KAUSF-A_{N}, AIoT ID-1...AIoT ID-N UE ID, NONCE1). Parameters in the formula have the same meaning as those in other previous embodiments, which will not be described again.

In the above examples, HASH and f2 may both be replaced by any other algorithm or function of the first calculation mode, and the direct connection algorithm may also be replaced by any other algorithm or function of the first calculation mode. No exhaustive enumeration is made to all possible cases and combinations here. In addition, the same one first random number in this example may also be replaced with the first random numbers corresponding to each second devices, which will not be described again.

In some possible examples, the first device may calculate a first intermediate key using the first shared key, and then calculate the first response based on the first intermediate key.

The operation that the first device obtains one or more intermediate keys based on the one or more first shared keys, and calculates, using the first calculation mode, the first response based on the identifier(s) of the one or more second devices, the one or more intermediate keys, the identifier of the first device, and the one or more first random numbers includes one of following:
the first device obtains one or more first intermediate keys based on the one or more first shared keys, and calculates, using the first calculation mode, the first response based on one or more second responses, the identifier(s) of the one or more second devices, the one or more first intermediate keys, the identifier of the first device, and the one or more first random numbers, the one or more second responses being obtained based on one or more second random numbers;
the first device obtains the one or more intermediate keys based on the one or more first shared keys, and calculates, using the first calculation mode, the first response based on the second shared key, the identifier(s) of the one or more second devices, the one or more first intermediate keys, the identifier of the first device, and the one or more first random numbers, the second shared key being shared by the first device and the core network side device;
the first device calculates one or more second intermediate keys based on the one or more first shared keys, an identifier of a first network device, and one or more fourth random numbers, and calculates, using the first calculation mode, the first response based on the identifier(s) of the one or more second devices, the one or more second intermediate keys, the identifier of the first device, and the one or more first random numbers; or
the first device obtains a third intermediate key based on the second shared key, the identifier of the first network device, and a third random number, obtains the one or more first intermediate keys based on the one or more first shared keys, and calculates, using the first calculation mode, the first response based on the third intermediate key, the identifier(s) of the one or more second devices, the one or more first intermediate keys, the identifier of the first device, and the one or more first random numbers.

In one example, in a case that the number of second devices is one, the first device obtains the first intermediate key based on the first shared key, and calculates, using the first calculation mode, the first response based on a second response, the identifier of the second device, the first intermediate key, the identifier of the first device, and the first random number.

Here, the operation that the first device obtains the first intermediate key based on the first shared key may include: in a case that the first shared key is a root key, the first device calculates the first intermediate key based on the root key. In this case, the first shared key may be a root key, and the first intermediate key may be a KAUSF-A'. The root key may be shared by the first device, the second device, and the core network side device; therefore, the first device and the core network side device can obtain the same first intermediate key KAUSF-A' in the same manner based on the root key. The calculation mode of obtaining the first intermediate key based on the first shared key is not limited in this example. For example, the KAUSF-A' may be calculated using a Ciphering Key (CK) and an Integrity Key (IK). The CK and the IK may be derived from the root key shared by the core network side device, the second device, and the first device. The specific generation method of the CK and the IK are not limited in this embodiment. Alternatively, the operation that the first device obtains the first intermediate key based on the first shared key may include: in a case that the first shared key is not a root key, the first device calculates the first intermediate key based on the first shared key. In this case, the first shared key may be transmitted by the first network device to the first device, that is, the aforementioned KAUSF-A, and the first intermediate key may be KAUSF-A'. It is to be noted that regarding the operation that the first network device transmits the first shared key to the first device: in a case that the first network device is a core network side device, a first network device among core network side devices may transmit the first shared key to the first device; and in a case that the first network device is not a core network side device, the first network device performs transmission of the first shared key.

For example, the above processing of obtaining the first intermediate key based on the first shared key may be expressed as: KAUSF-A' = X (KAUSF-A), or KAUSF-A' = X (Kr), where X () may be a calculation function of obtaining the first intermediate key based on the first shared key, and the calculation function may include but is not limited to at least one of KDF, f1, HASH, f2, f3, or the like. KAUSF-A' in the above formula may also be obtained in combination with other parameters, such as at least one of an anonymous key (AK), other random numbers, other identifiers, etc. No exhaustive enumeration is made for all possible parameters and algorithms (or functions) here.

With the first calculation mode including a Hash algorithm as an example, the operation that the first calculation mode is used to calculate the first response based on the identifier of the first device, the first intermediate key, the identifier of the second device, and the first random number may be expressed as: RES' = HASH (KAUSF-A', A-IoT ID, UE ID, NONCE1).

In a case that the number of second devices is multiple, the first device obtains multiple first intermediate keys based on the multiple first shared keys, and calculates, using the first calculation mode, the first response based on multiple second responses, the identifiers of the multiple second devices, the multiple first intermediate keys, the identifier of the first device, and the one or more first random numbers. Here, the processing of obtaining a first intermediate key based on any first shared key is the same as that in the above example, which will not be described again.

With the first calculation mode including a Hash algorithm and multiple second devices corresponding to the same first random number as an example, the calculation of the first response may be expressed as: RES' = HASH (KAUSF-A'₁⊕...⊕KAUSF-A'_{N}, (AIoT ID-1... AIoT ID-N), UE ID, NONCE1). In addition, the same one first random number in this example may also be replaced with the first random numbers corresponding to each second devices, which will not be described again. It is to be noted that the calculation functions in the calculation formulas in the above example may all be replaced with other functions included in the first calculation mode, no exhaustive enumeration is made in this embodiment.

In one example, in a case that the number of second devices is one, the first device obtains the first intermediate key based on the first shared key, and calculates, using the first calculation mode, the first response based on a second response, the identifier of the second device, the first intermediate key, the identifier of the first device, and the first random number. The obtaining the first intermediate key based on the first shared key may be using a root key as the first shared key, and the processing method of obtaining the first intermediate key based on the first shared key is the same as that in the above embodiment, which will not be described again.

With the first calculation mode being a Hash algorithm as an example, the calculation of the first response may be expressed as: RES' = HASH (KAUSF-A', A-IoT ID, UE ID, RES, NONCE1), where KAUSF-A' is the first intermediate key. Other contents in the formula have the same meaning as those in the above embodiment, and the contents in the formula may be replaced in the same way as those in the above embodiment, which will not be described again.

In a case that the number of second devices is multiple, the first device obtains multiple first intermediate keys based on the multiple first shared keys, and calculates, using the first calculation mode, the first response based on multiple second responses, the identifiers of the multiple second devices, the multiple first intermediate keys, the identifier of the first device, and the one or more first random numbers.

With the first calculation mode being a Hash algorithm and multiple second devices corresponding to the same first random number as an example, the calculation of the first response may be expressed as: RES' = HASH(KAUSF-A'₁⊕ ...⊕KAUSF-A'_{N}, (AIoT ID-1...AIoT ID-N), UE ID, (RES₁...RES_{N}),NONCE1). The contents in the formula have the same meaning as those in the above embodiment. The same one first random number in this example may also be replaced with the first random number corresponding to each second device. The contents in the formula may be replaced in the same way as those in the above embodiment, which will not be described again.

In one example, in a case that the number of second devices is one, the first device obtains the first intermediate key based on the first shared key, and calculates, using the first calculation mode, the first response based on the second shared key, the identifier of the second device, the first intermediate key, the identifier of the first device, and the first random number.

The specific description about the first device obtaining the first intermediate key based on the first shared key is the same as that in the above embodiment, which will not be described again.

With the first calculation mode including a second authentication function and concatenation as an example, the calculation of the first response may be expressed as RES' *=* f2(KAUSF-UE∥KAUSF-A', A-IoT ID, UE ID, NONCE1), where the KAUSF-A' in the formula is the first intermediate key, and the remaining parameters have the same meaning as those in the previous embodiment, which will not be described again. The f2 () function of the first calculation mode may also be replaced by HASH or other calculation manners of the first calculation mode, and the concatenation may also be replaced by exclusive OR calculation. No exhaustive enumeration is made to all possible cases here. In the above example, a second response may also be added for calculation, such as RES' = f2 (KAUSF-UE ∥ KAUSF-A', A-IoT ID, UE ID, RES, NONCE1). No exhaustive enumeration is made to various possible combinations of this example here.

In a case that the number of second devices is multiple, the first device obtains multiple first intermediate keys based on the multiple first shared keys, and calculates, using the first calculation mode, the first response based on the second shared key, the identifiers of the multiple second devices, the multiple first intermediate keys, the identifier of the first device, and the one or more first random numbers.

With the first calculation mode including a second authentication function and concatenation and multiple second devices corresponding to the same first random number as an example, the calculation of the first response may be expressed as RES' *=* f2(KAUSF-UE∥KAUSF-A'₁...∥KAUSF-A'_{N}, AIoT ID-1...AloT ID-N, UE ID, NONCE1), where the KAUSF-A' in the formula is the first intermediate key, and the remaining parameters have the same meaning as those in the previous embodiment, which will not be described again. The f2 () function of the first calculation mode may also be replaced by HASH or other calculation manners of the first calculation mode, and the concatenation may also be replaced by exclusive OR calculation. No exhaustive enumeration is made to all possible cases here. In addition, the same one first random number in this example may also be replaced with the first random numbers corresponding to each second devices. In the above example, a second response may also be added for calculation the first response, such as RES' = f2 (KAUSF-UE ∥ KAUSF-A', A-IoT ID, UE ID, RES, NONCE1). No exhaustive enumeration is made to various possible combinations of this example here.

In one example, in a case that the number of second devices is one, the first device calculates a second intermediate key based on the first shared key, the identifier of the first network device, and one or more fourth random numbers, and calculates, using the first calculation mode, the first response based on the identifier of the second device, the second intermediate key, the identifier of the first device, and the first random number.

For example, the operation that the first device calculates the second intermediate key based on the first shared key, the identifier of the first network device, and the fourth random number may refer to: the first device calculates, using a second calculation mode, the second intermediate key based on the first shared key, the identifier of the first network device, and the fourth random number.

With the first shared key being KAUSF-A and the second calculation mode being a KDF as an example, the operation that the first device calculates the second intermediate key may be expressed as KA-IoT = KDF (KAUSF-A, A-IoT authenticator ID, nonce3), where KA-IoT may represent the second intermediate key corresponding to the second device, KAUSF-A is the first shared key, and nonce3 is the fourth random number. Other contents in the formula have the same meaning as those in the above embodiment, which will not be described again. Exemplarily, the above KA-IoT may also be denoted as K_{A-IoT}. With the first shared key being a root key and the second calculation mode being a KDF as an example, the operation that the first device calculates the second intermediate key may be expressed as KA-IoT = KDF (Kr, A-IoT authenticator ID, nonce3). Other contents in the formula have the same meaning as those in the above embodiment, which will not be described again.

With the first calculation mode specifically being f2 as an example, the calculation of the first response may be expressed as RES' = f2(KA-IoT, A-IoT ID, UE ID, NONCE1). The contents in the formula have the same meaning as those in the previous embodiment, which will not be described again. A second response may also be added to the calculation. For example, the above formula may also be expressed as RES' = f2 (KA-IoT, A-IoT ID, UE ID, RES, NONCE1), where RES represents the second response. The specific description is the same as that in the above embodiment, which will not be described again.

Besides that fact that the first network device may be the A-IoT authenticator, the first network device may also be a core network device such as an AUSF, an AMF, a SEAF, an AIoT network element, or a UPF, and thus the AIoT Authenticator ID may be replaced with at least one of: an AUSF ID, an AMF ID, a SEAF ID, an AIoT network element ID, or a UPF ID, for example, KA-IoT = KDF (Kr, AMF ID, nonce3), or KA-IoT = KDF (KAUSF-A, AMF ID, nonce3). No exhaustive enumeration is made to all possible cases here.

For example, the operation that the first device calculates the second intermediate key based on the first shared key, the identifier of the first network device, and the fourth random number may refer to: the first device obtains a first intermediate key based on the first shared key, and calculates, using a second calculation mode, the second intermediate key based on the first intermediate key, the identifier of the first network device, and the fourth random number. With the first shared key being a root key as an example, the first device obtains the first intermediate key based on the first shared key, which may refer to calculating KAUSF-A' based on Kr. Related examples are the same as those in the above embodiment, which will not be described again. Alternatively, with the first shared key being KAUSF-A as an example, the operation that the first device obtains the first intermediate key based on the first shared key may refer to calculating KAUSF-A' based on the KAUSF-A. Related examples are the same as those in the above embodiment, which will not be described again. Accordingly, with the second calculation mode being a KDF as an example, the calculation of the second intermediate key based on the first intermediate key, the identifier of the first network device, and the fourth random number using the second calculation mode may be expressed as KA-IoT = KDF (KAUSF-A', A-IoT authenticator ID, nonce3), where KAUSF-A' is the first intermediate key. Other contents in the formula have the same meaning as those in the above embodiment, which will not be described again.

In a case that the number of second devices is multiple, the first device calculates multiple second intermediate keys based on the multiple first shared keys, the identifier of the first network device, and multiple fourth random numbers, and calculates, using the first calculation mode, the first response based on the identifiers of the multiple second devices, the multiple second intermediate keys, the identifier of the first device, and the one or more first random numbers.

For example, with any of the multiple second devices being denoted as an i^{th} second device, the first shared key of the i^{th} second device being KAUSF-Ai, and the second calculation mode being a KDF as an example, the operation that the first device calculates, using the second calculation mode, an i^{th} second intermediate key (i.e., the second intermediate key of the i^{th} second device) based on an i^{th} first shared key, the identifier of the first network device, and an i^{th} fourth random number may be expressed as KA-IoT-i = KDF (KAUSF-Ai, A-IoT authenticator ID, nonce3i), where KA-IoT-i may represent the i^{th} second intermediate key corresponding to the i^{th} second device, KAUSF-Ai is the i^{th} first shared key (namely the first shared key of the i^{th} second device), and nonce3i represents the fourth random number corresponding to the i^{th} second device. Other contents in the formula have the same meaning as those in the above embodiment, which will not be described again.

With any of the multiple second devices being denoted as an i^{th} second device, the first shared key of the i^{th} second device being Kri, and the second calculation mode being a KDF as an example, the operation that the first device calculates, using the second calculation mode, an i^{th} second intermediate key (i.e., the second intermediate key of the i^{th} second device) based on an i^{lh} first shared key, the identifier of the first network device, and an i^{th} fourth random number may be expressed as KA-IoTi = KDF (Kri, A-IoT authenticator ID, nonce3i). Other contents in the formula have the same meaning as those in the above embodiment, which will not be described again.

Besides the fact that the first network device may be the A-IoT authenticator, the first network device may also be a core network device such as an AUSF, an AMF, a SEAF, an AIoT network element, or a UPF, and thus the AIoT Authenticator ID may be replaced with at least one of: an AUSF ID, an AMF ID, a SEAF ID, an AIoT network element ID, or a UPF ID, for example, KA-IoT-i = KDF(Kri, AMF ID, nonce3i), or KA-IoT-i = KDF(KAUSF-Ai, AMF ID, nonce3i). No exhaustive enumeration is made to all possible cases here.

With the first calculation mode specifically being f2 and multiple second devices corresponding to the same first random number as an example, the calculation of the first response may be expressed as RES' = f2(KA-IoT-1⊕...⊕KA-IoT-N, AIoT ID-1...AIoT ID-N, UE ID, NONCE1), where KA-IoT-1 to KA-IoT-N are the second intermediate keys corresponding to N second devices respectively. Contents in the formula have the same meaning as those in the above embodiment, which will not be described again. It is also be noted that multiple second responses may be added to the calculation, and/or the same one first random number may also be replaced with the first random number corresponding to each second device. The contents in the formula may be replaced in the same way as those in the above embodiment, which will not be described again.

In one example, in a case that the number of second devices is one, the first device obtains a third intermediate key based on the second shared key, the identifier of the first network device, and a third random number, obtains a first intermediate key based on the first shared key, and calculates, using the first calculation mode, the first response based on the third intermediate key, the identifier of the second devices, the first intermediate key, the identifier of the first device, and the first random number.

The processing manner in which the first device obtains the third intermediate key based on the second shared key, the identifier of the first network device, and the third random number has been detailed in the above embodiment, which will not be described again. The specific processing manner of obtaining the first intermediate key based on the first shared key is the same as that in the above embodiment, which will not be described again.

With the first calculation mode being f2 as an example, the calculation of the first response may be expressed as: RES' = f2(KUE ∥KAUSF-A', A-IoT ID, UE ID, NONCE1), where KAUSF-A' is the first intermediate key. Other contents in the formula may be replaced in the same way as those in the above embodiment, which will not be described again.

In a case that the number of second devices is multiple, the first device obtains the third intermediate key based on the second shared key, the identifier of the first network device, and a third random number, obtains multiple first intermediate keys based on multiple first shared keys, and calculates, using the first calculation mode, the first response based on the third intermediate key, the identifiers of the multiple second devices, the multiple first intermediate keys, the identifier of the first device, and the one or more first random numbers.

The processing manner in which the first device obtains the third intermediate key based on the second shared key, the identifier of the first network device, and the third random number has been detailed in the above embodiment, which will not be described again. The specific processing manner of obtaining the multiple first intermediate keys based on the multiple first shared keys is the same as that in the above embodiment, which will not be described again.

With the first calculation mode being f2 and multiple second devices corresponding to the same first random number as an example, the calculation of the first response may be expressed as: RES' = f2(KUE ∥KAUSF-A'1...∥KAUSF-A'N, (AIoT ID-1...AloT ID-N), UE ID, NONCE1), where KAUSF-A'1 to KAUSF-A'N are the first intermediate keys corresponding to N second devices respectively, and KUE is the third intermediate key. The contents in the formula have the same meaning as those in the above embodiment, and the contents in the formula may be replaced in the same way as those in the above embodiment, which will not be described again.

It is to be noted that, in the above examples, the first calculation mode described in an exemplary way as including at least one of HASH, f2, a direct connection algorithm, or an exclusive OR algorithm may be replaced with each of other functions or algorithms of the first calculation mode previously described, which will not be described again for the sake of brevity.

In some possible examples, the first shared key is used to obtain a first intermediate response, so as to calculate the first response based on the first intermediate response.

For example, the first device calculates, using the first calculation mode, one or more intermediate responses based on the identifier(s) of the one or more second devices, the one or more first random numbers, the one or more first shared keys, and the identifier of the first device, and the first device calculates the first response based on the one or more first intermediate responses. The operation that the first device calculates the first response based on the one or more first intermediate responses includes: the first device calculates, using the first calculation mode, the first response based on the one or more first intermediate responses and at least one of: an identifier of a first network device, or a third random number.

The operation that the first device calculates the one or more first intermediate responses based on the identifier(s) of the one or more second devices, the one or more first shared keys, the identifier of the first device, and the one or more first random numbers includes one of following:
the first device calculates, using the first calculation mode, the one or more first intermediate responses respectively based on one or more second responses, the identifiers of the one or more second devices, the one or more first shared keys, the identifier of the first device, and the one or more first random numbers, the one or more second responses being obtained based on one or more second random numbers;
the first device calculates, using the first calculation mode, the one or more first intermediate responses respectively based on the second shared key, the identifier(s) of the one or more second devices, the one or more first shared keys, the identifier of the first device, and the one or more first random numbers, the second shared key being shared by the first device and the core network side device;
the first device calculates a third intermediate key based on the second shared key, an identifier of a first network device, and a third random number, and calculates, using the first calculation mode, the one or more first intermediate responses respectively based on the third intermediate key, the identifiers of the one or more second devices, one or more first intermediate keys, the identifier of the first device, and the one or more first random numbers;
the first device obtains the one or more first intermediate keys respectively based on the one or more first shared keys, and calculates, using the first calculation mode, the one or more first intermediate responses respectively based on the one or more second responses, the identifier(s) of the one or more second devices, the one or more first intermediate keys, the identifier of the first device, and the one or more first random numbers;
the first device obtains the one or more first intermediate keys based on the one or more first shared keys, and calculates, using the first calculation mode, the one or more first intermediate responses respectively based on the second shared key, the identifiers of the one or more second devices, the one or more first intermediate keys, the identifier of the first device, and the one or more first random numbers;
the first device calculates one or more second intermediate keys based on the one or more first shared keys, the identifier of the first network device, and one or more fourth random numbers, and calculates, using the first calculation mode, the one or more first intermediate responses respectively based on the identifiers of the one or more second devices, the one or more second intermediate keys, the identifier of the first device, and the one or more first random numbers; or
the first device obtains the third intermediate key based on the second shared key, the identifier of the first network device, and a third random number, obtains the one or more first intermediate keys based on the one or more first shared keys, and calculates, using the first calculation mode, the one or more first intermediate responses respectively based on the third intermediate key, the identifiers of the one or more second devices, the one or more first intermediate keys, the identifier of the first device, and the one or more first random numbers.

For example, in a case that the number of second devices is one, with the first shared key being a root key and the first calculation mode being a Hash algorithm as an example, the operation that the first device calculates, using the first calculation mode, the first intermediate response based on the identifier of the second device, the first shared key, the identifier of the first device, and the first random number may be expressed by the following formula: RES" = HASH (Kr, AIoT ID, UE ID, NONCE1), where RES" represents the first intermediate response, and other parameters in this formula have the same meanings as those in the above embodiment, which will not be described again.

For example, in a case that the number of second devices is multiple, taking the first shared key being a root key and the first calculation mode being a Hash algorithm as an example, the operation that the first device calculates, using the first calculation mode, the first intermediate response based on the second response, the identifier of the second device, the first shared key, the identifier of the first device, and the first random number may be expressed by the following formula: RES" = HASH (Kr, AIoT ID, UE ID, RES, NONCE1), where RES" represents the first intermediate response, and other parameters in this formula have the same meanings as those in the above embodiment, which will not be described again.

Generally, in a case that the number of second devices is one, the processing in this scenario is different from the example of the first device calculating the first response in the above embodiment only in that the first device takes the first response of one second device obtained in the above examples as the first intermediate response rather than the final first response. For distinction from RES' (first response) in the above embodiment, the first intermediate response is represented by RES" in this example. Various calculation modes that may be used to calculate the first response in the processing that the first device calculates the first response of the second device in the above embodiment are all used to generate the first intermediate response of the second device in this embodiment, but are not listed enumeratively.

The operation that the first device calculates the first response based on the one or more first intermediate responses includes one of following: the first device calculates, using the first calculation mode, the first response based on the one or more first intermediate responses, the identifier of the first network device, or a third random number; the first device calculates, using the first calculation mode, the first response based on the one or more first intermediate responses and the identifier of the first network device; or the first device calculates, using the first calculation mode, the first response based on the one or more first intermediate responses and the third random number.

In a case that the number of second devices is one, the operation that the first device calculates, using the first calculation mode, the first response based on the one or more first intermediate responses, the identifier of the first network device, and the third random number may be: the first device calculates, using the first calculation mode, the first response based on the first intermediate response, the identifier of the first network device, and the third random number.

With the first calculation mode being a Hash algorithm as an example, the above processing may be expressed as: RES' = HASH(RES", A-IoT authenticator ID, nonce2), where RES' has the same meaning as that in the above example and represents the first response, and RES" represents the first intermediate response. The remaining contents in the formula have the same meaning as those in the above embodiment, which will not be described again.

The operation that the first device calculates, using the first calculation mode, the first response based on the one or more first intermediate responses and the identifier of the first network device may include: the first device calculates, using the first calculation mode, the first response based on the first intermediate responses and the identifier of the first network device. With the first calculation mode being a second authentication function as an example, the above processing may be expressed as RES' = f2(RES", A-IoT authenticator ID). The contents in the formula have the same meaning as those in the previous embodiment, which will not be described again.

The operation that the first device calculates, using the first calculation mode, the first response based on the one or more first intermediate responses and the third random number may include: the first device calculates, using the first calculation mode, the first response based on the first intermediate responses and the third random number. With the first calculation mode being a Hash algorithm as an example, the above processing may be expressed as: RES' = HASH(RES", nonce2). The contents in the formula have the same meaning as those in the above embodiment, which will not be described again.

Described above is the way in which the first device generates the first intermediate response of the second device and calculates the first response based on the first intermediate response in a case that the number of second devices is one.

Next, the way in which the first device generates the first intermediate response of each of multiple second devices and calculates the first response based on the first intermediate response of each second device in a case that the number of second devices is multiple is described.

In this case, the method of calculating the first intermediate response of each of multiple second devices is also the same as the method of calculating the first response of any second device in the above embodiment.

For example, with an i^{th} first shared key (the first shared key of an i^{th} second device) being an i^{th} root key and the first calculation mode being an Hash algorithm as an example, the operation that the first device calculates an i^{th} first intermediate response based on an identifier of the i^{th} second device, an i^{th} first random number, an i^{th} first shared key, and an identifier of the first device may be expressed by the following formula: RES"i = HASH (Krᵢ, AIoT ID-i, UE ID, NONCE 1i), where RES"i represents the i^{th} first intermediate response (that is, the first intermediate response of the i^{th} second device), and NONCEli is the i^{th} first random number, that is, a first random number corresponding to the i^{th} second device. Other parameters in this formula have the same meanings as those in the above embodiment, which will not be described again.

For example, with an i^{th} first shared key (the first shared key of an i^{th} second device) being an i^{th} root key and the first calculation mode being an Hash algorithm as an example, the operation that the first device calculates an i^{th} first intermediate response based on the second shared key, the identifier of the first device, an identifier of the i^{th} second device, an i^{th} first random number, and an i^{th} first shared key may be expressed by the following formula: RES" i = f2(KAUSF-UE ∥ Krᵢ, AIoT ID-i, UE ID, NONCE1i), where "∥" represents concatenation, and the other parameters have the same meanings as those described in the above example, which will not be described again.

Generally, in a case that the number of second devices is multiple, the processing of any second device calculating a first intermediate response is different from the example of the first device calculating the first response of a second device in the above embodiment only in that the first device uses the way, in which the first response of a second device is calculated in the above examples, to calculate the first intermediate response of any second device rather than the final first response. For distinction from RES' (first response) and RES" in the above embodiment, the first intermediate response is represented by RES''' in this example. Various calculation modes that may be used to calculate the first response in the processing that the first device calculates the first response of a second device in the above embodiment are all used to generate the first intermediate response of any second device in this embodiment, but are not listed enumeratively.

Further, the way in which the first device generates a first response based on the first intermediate response of each of multiple second devices in a case that the number of second devices is multiple is described exemplarily.

Optionally, the operation that the first device calculates the first response based on the one or more first intermediate responses may include: the first device calculates the first response based on multiple first intermediate responses. For example, exclusive OR calculation or concatenation may be performed on multiple first intermediate responses to calculate the first response, which for example may be expressed as: RES' = RES"1⊕...⊕RES"N, where RES" 1 to RES"N are first intermediate responses of the N second devices respectively. For another example, a combination of multiple calculation functions may be used for calculation, for example, an exclusive OR calculation and a Hash algorithm may be combined to calculate the first response, which is expressed by the following formula: RES' = HASH (RES"1⊕...⊕RES"N). It should be understood that merely exemplary description is provided here. The above specific method of calculating the first response directly based on multiple first intermediate responses may also be implemented by one or more other combinations of algorithms and/or functions. No exhaustive enumeration is made here.

Optionally, the first device calculates, using the first calculation mode, the first response based on the multiple first intermediate responses, the identifier of the first network device, and one or more third random numbers. The number of the third random numbers may also be one or more; and in a preferred example, there is one third random number. With the first calculation mode including an exclusive OR algorithm and a Hash algorithm as an example, the above processing may be expressed as: RES' = HASH(RES" 1⊕.. .⊕RES" N, A-IoT authenticator ID, nonce2), where RES' has the same meaning as that in the above example and represents the first response, and RES" represents the first intermediate response. The remaining contents in the formula have the same meaning as those in the above embodiment, which will not be described again.

Optionally, the first device calculates, using the first calculation mode, the first response based on the multiple first intermediate responses and the identifier of the first network device. With the first calculation mode being a second authentication function as an example, the above processing may be expressed as RES' = f2(RES" 1⊕... (DRES" N, A-IoT authenticator ID). The contents in the formula have the same meaning as those in the previous embodiment, which will not be described again.

Optionally, the first device calculates, using the first calculation mode, the first response based on the multiple first intermediate responses and the third random number. With the first calculation mode including a direct connection algorithm and a Hash algorithm as an example, the above processing may be expressed as: RES' = HASH(RES" 1∥...∥RES" N, nonce2). The contents in the formula have the same meaning as those in the above embodiment, which will not be described again.

It should be understood that the above is merely exemplary description. In actual processing, in calculating the first response, in addition to using one or more first shared keys, at least one of: the identifier(s) of the one or more second devices, the identifier of the first device, the identifier of the first network device, the second shared key, and various random numbers (such as a first random number, a second random number, a third random number, and a fourth random number) may be used, all of which are within the scope of protection of this embodiment, but no limitation or exhaustive enumeration is made. In addition, the parameters used to calculate the first response may include other types of parameters in addition to the possible parameters described above, and no limitation or exhaustive enumeration is made either.

In some embodiments, the operation that the first device calculates the first response based on the at least one shared key includes: the first device calculates the first response based on the second shared key and at least one of following parameters: an identifier of the first device, identifiers of the one or more second devices, or an identifier of a first network device. The first response is used by the core network side device to authenticate the first device serving as an intermediate node for the one or more second devices. In other words, in this embodiment, the first response is used by the core network side device to authenticate the first device, and is further used by the core network side device to authenticate that the first device can serve as an intermediate node of one or more second devices.

The operation that the first device calculates the first response based on the at least one shared key includes: the first device calculates the first response based on the second shared key, the identifier(s) of the one or more second devices, and at least one of following parameters: an identifier of the first device, or an identifier of a first network device. Merely exemplary description is provided here. More types of parameters may also be used to calculate the first response, for example, one or more random numbers may be added. Description about the random numbers is similar to that in the above embodiment, and will not be repeated.

Exemplarily, the operation that the first device calculates the first response based on the at least one shared key includes: the first device calculates, using the first calculation mode, the first response based on the second shared key, the identifier(s) of the one or more second devices, the identifier of the first device, and a third random number. The description about the third random number is the same as that in the above embodiment, and will not be repeated.

With the first device being UE, the first calculation mode including a second authentication function, and there is one second device as an example, the calculation of the first response may be expressed by the following formula: RES' = f2(K_{AUSF-UE}, AIoT ID, UE ID, NONCE2), where K_{AUSF-UE} is the second shared key. Description of the remaining parameters is the same as that in the above example, and will not be repeated. The first calculation mode may also be replaced by a Hash function; for example, the calculation of the first response may be expressed as: RES' = HASH(K_{AUSF-UE}, AIoT ID, UE ID, NONCE2). Alternatively, the first calculation mode may also be replaced by a KDF. For example, the calculation of the first response may be expressed as: RES' = KDF(K_{AUSF-UE}, AIoT ID, UE ID, NONCE2). Description of each parameter in the formula is the same as that in the above example, and will not be repeated. The second shared key K_{AUSF-UE} may be replaced with a root key of UE (such as Kr_{UE}), or another key derived from the root key of the UE (such as an IK corresponding to the UE, or a CK corresponding to the UE, or K_{SEAF-UE}), or the like. No exhaustive enumeration is made here.

In the above example, the parameters used to calculate the first response may also be added to an identifier of the first network device. With the first device being UE, the first calculation mode including a second authentication function, and there is one second device as an example, the calculation of the first response may be expressed by the following formula: RES' *=* f2(K_{AUSF-UE}, AIoT ID, UE ID, A-IoT authenticator ID, NONCE2), where the A-IoT authenticator ID represents the identifier of the first network device (the AIoT Authenticator ID may also be replaced with at least one of: an AUSF ID, an AMF ID, a SEAF ID, an AIoT network element ID, a UPF ID, or the like). Description of the remaining parameters in the formula is the same as that in the above example, and will not be repeated. The first calculation mode may also be replaced by a Hash function or the like, and no exhaustive enumeration is made. The second shared key K_{AUSF-UE} may be replaced in the same way as those in the above embodiment, which will not be described again. In addition, the first device may be replaced with a first access network device, and the description about the method of calculating the first response corresponding to the first access network device is also the same as that about the above embodiment, and will not be repeated.

In a case that the number of second devices is multiple, "AIoT ID" in the formulas in the above examples may be replaced with "AIoT ID-1... AIoT ID-N". Alternatively, "AIoT ID-1... AIoT ID-N" may also be calculated by concatenation, exclusive OR calculation, or other calculation manners, and then replace the "AIoT ID" in the formulas, which will not be described here again.

The above is exemplary description made with the first device being UE as an example. The first device may be replaced with a first access network device; and accordingly, in the above formulas, "UE ID" may be replaced with "gNB ID", "K_{AUSF-UE}" may be replaced with" K_{AUSF-gNB}", or the like, which will not be described here again. The second shared key K_{AUSF-gNB} may be replaced with a root key of the first access network device (e.g., Kr_{gNB}), or another key derived from the root key of the first access network device (such as an IK, a CK, or a K_{SEAF-gNB}), or the like. No exhaustive enumeration is made here.

Exemplarily, the first device may further calculate one or more second responses firstly, and then use a first calculation mode to calculate the first response based on the one or more second responses, the identifier(s) of the one or more second devices, the second shared key, and at least one of: the identifier of the first device, the one or more first random numbers, or the identifier of the first network device. The description about the second response is the same as that in the above embodiment, and will not be repeated.

With the first device being UE and the first calculation mode being a HASH algorithm as an example, the processing of calculating the first response may be expressed as: RES' *=* HASH(K_{AUSF-UE}, AIoT ID, UE ID, RES, NONCE1), where RES is the second response, RES may be equal to f2 (RAND). Other parameters in the formula have the same meaning as those described in the foregoing, which will not be described again. The Hash algorithm may also be replaced with other algorithms or functions of the first calculation mode. No exhaustive enumeration is made here. Replacement description about possible replacement forms of the second shared key, the first device being replaceable with the first access network device, and that the number of second devices may be multiple are similar to those of the above embodiment, and will not be repeated.

Exemplarily, the operation that the first device calculates the first response based on the at least one shared key includes: the first device calculates a third intermediate key based on the second shared key and at least one of: the identifier of the first network device, or the third random number, and calculates, using the first calculation mode, the first response based on the third intermediate key, the identifier(s) of the one or more second devices, and at least one of: the identifier of the first device, or the one or more first random numbers.

The method of calculating the third random number is the same as that in the above embodiment, which will not be described again.

With the first device being UE and the first calculation mode being a Hash algorithm as an example, the calculation of the first response may be expressed as: RES' = HASH(KUE, AIoT ID, UE ID, NONCE1), where KUE = KDF(KAUSF-UE, A-IoT authenticator ID, NONCE2). KUE represents the third intermediate key. Other parameters have the same meanings as those in the above embodiment, which will not be described again. Replacement description about possible replacement forms of the second shared key, the first device being replaceable with the first access network device, and that the number of second devices may be multiple are similar to those of the above embodiment, and will not be repeated.

For example, in the processing that the first device calculates the first response, the first device may firstly calculate one or more first intermediate responses, and then calculate the first response based on the one or more first intermediate responses. For example, the first device calculates one or more first intermediate responses based on the identifier(s) of the one or more second devices, the second shared key, and at least one of: the identifier of the first device, the one or more first random numbers, or one or more second responses; and calculates the first response based on the one or more first intermediate responses. The operation that the first device calculates the first response based on the one or more first intermediate responses may be that the first device calculates the first response based on the one or more first intermediate responses and at least one of: a third random number, or the identifier of the first network device. In this example, the description about calculating the first intermediate response is similar to that of the above embodiment, except that the first shared key in the above embodiment is replaced with only the second shared key in this example, and thus the description will not be repeated.

The processing of calculating the first response based on the one or more first intermediate responses and at least one of: a third random number, or the identifier of the first network device in this embodiment is also same as that in the above embodiment, and will not be described again.

How the first device generates the first response in different scenarios including the number of second devices being one and the number of second devices being multiple is exemplarily described in the above embodiment.

In some possible implementations, at the core network side device, the method includes following: the core network side device performs authentication related to the one or more second devices based on a first expected response and the first response. The first expected response is calculated based on at least one first shared key. The at least one shared key includes at least one of: one or more first shared keys, or a second shared key. Different first shared keys of the one or more first shared keys are shared by different second devices with the first device and the core network side device. The second shared key is shared by the first device and the core network side device. That is, the first expected response also needs to be obtained at the core network side device. The first expected response may be denoted as a first XRES (Expected Response).

In some possible implementations, the core network side device includes a first network device that obtains the first expected response from another other network device. The method further includes that the first network device receives the first expected response from a second network device. In this case, the first network device performs authentication processing.

Alternatively, the core network side device may not contain the first network device, and the core network side device receives the first expected response from the second network device.

In such an implementation, the second network device may include at least one of: UDM, or an ARPF.

In some possible implementations, the method further includes that the core network side device calculates the first expected response based on the at least one shared key.

Further, the operation that the core network side device calculates the first expected response based on the at least one shared key may include: the core network side device calculates the first expected response based on an identifier(s) of the one or more second devices, and at least one shared key.

Optionally, the core network side device may further calculate the first expected response based on the identifier(s) of the one or more second devices, the at least one shared key, and at least one of following parameters: an identifier of the first device, an identifier of the first network device, or at least one random number. No exhaustive enumeration is made to all possible parameters that may be used to calculate the first response herein.

In some embodiments, the operation that the core network side device calculates the first expected response based on the at least one shared key includes: the core network side device calculates the first expected response based on identifiers of the one or more second devices, and the one or more first shared keys. The operation that the core network side device performs the authentication related to the one or more second devices based on the first expected response and the first response includes: the core network side device performs authentication of the one or more second devices based on the first expected response and the first response.

The operation of performing authentication of the one or more second devices based on the first expected response and the first response may include: it is determined that the authentication of the one or more second devices is successful or passed in a case that the first expected response and the first response are the same as each other; and/or it is determined that the authentication of the one or more second devices fails or is not passed in a case that the first expected response and the first response are different from each other. Optionally, in a case that the first expected response and the first response are the same as each other, in addition to determining that the authentication of the one or more second devices is passed, it may also be determined that the authentication of the first device as an intermediate node of the one or more second devices is passed or successful.

Optionally, the parameters used to calculate the first expected response may include, but are not limited to, identifiers of the one or more second devices, the one or more first shared keys. For example, in calculating the first expected response, other parameters may be used in addition to the identifier(s) of the one or more second devices and the one or more first shared keys. Exemplarily, the operation that the core network side device calculates the first expected response based on the identifiers of the one or more second devices, and the one or more first shared keys may include: the core network side device calculates the first expected response based on the identifier(s) of the one or more second devices, the one or more first shared keys, and at least one of following parameters: an identifier of the first device, an identifier of a first network device, or the second shared key.

It is to be noted that the calculation mode used by the core network side device to calculate the first expected response is also the first calculation mode, and the parameters used by the core network side device to calculate the first expected response and related processing should be the same as the parameters used by the first device to calculate the first response and related processing.

Exemplarily, if the first device firstly calculates one or more intermediate keys, and then calculates the first response based on the one or more intermediate keys, then the core network side device also calculates one or more intermediate keys, and then calculates a first expected response based on the one or more intermediate keys.

Exemplarily, if the first device firstly calculates one or more second responses, and then uses a first calculation mode to calculate the first response based on the one or more second responses, the identifier(s) of the one or more second devices, the one or more first shared keys, and at least one of: the identifier of the first device, the one or more first random numbers, the identifier of the first network device, or the second shared key, then accordingly, the core network side device firstly calculates one or more second expected responses, and then uses a first calculation mode to calculate the first expected response based on the one or more second expected responses, the identifier(s) of the one or more second devices, the one or more first shared keys, and at least one of: the identifier of the first device, the one or more first random numbers, the identifier of the first network device, or the second shared key.

For example, if the first device firstly calculates one or more first intermediate responses, and then calculates the first response based on the one or more first intermediate responses, then the core network side device firstly calculates one or more second intermediate responses, and then calculates the first expected response based on the one or more second intermediate responses. The parameters and method used to calculate the second intermediate response should be the same as the parameters and method used by the first device to calculate the first intermediate response.

In some embodiments, the core network side device calculates the first expected response based on the identifiers of the one or more second devices, the one or more first shared keys, an identifier of the first device, and one or more first random numbers.

The operation that the core network side device calculates the first expected response based on the identifiers of the one or more second devices, the one or more first shared keys, the identifier of the first device, and the one or more first random numbers may include one of following: the core network side device calculates, using a first calculation mode, the first expected response based on the identifiers of the one or more second devices, the one or more first shared keys, the identifier of the first device, and the one or more first random numbers; the core network side device obtains one or more intermediate keys based on the one or more first shared keys, and calculates, using the first calculation mode, the first expected response based on the identifiers of the one or more second devices, the one or more intermediate keys, the identifier of the first device, and the one or more first random numbers; or the core network side device calculates one or more second intermediate responses based on the identifiers of the one or more second devices, the one or more first shared keys, the identifier of the first device, and the one or more first random numbers, and calculates the first expected response based on the one or more second intermediate responses.

The operation that the core network side device calculates, using the first calculation mode, the first expected response based on the identifiers of the one or more second devices, the one or more first shared keys, the identifier of the first device, and the one or more first random numbers includes one of following: the core network side device calculates, using the first calculation mode, the first expected response based on one or more second expected responses, the identifiers of the one or more second devices, the one or more first shared keys, the identifier of the first device, and the one or more first random numbers, the one or more second expected responses being obtained based on one or more second random numbers; the core network side device calculates, using the first calculation mode, the first expected response based on the second shared key, the identifiers of the one or more second devices, the one or more first shared keys, the identifier of the first device, and the one or more first random numbers, the second shared key being shared by the first device and the core network side device; or the core network side device calculates a third intermediate key based on the second shared key, an identifier of a first network device, and a third random number, and calculates, using the first calculation mode, the first expected response based on the third intermediate key, the identifiers of the one or more second devices, the one or more first shared keys, the identifier of the first device, and the one or more first random numbers.

The operation that the core network side device obtains the one or more intermediate keys based on the one or more first shared keys, and calculates, using the first calculation mode, the first expected response based on the identifiers of the one or more second devices, the one or more intermediate keys, the identifier of the first device, and the one or more first random numbers includes one of following: the core network side device obtains one or more first intermediate keys based on the one or more first shared keys, and calculates, using the first calculation mode, the first expected response based on one or more second responses, the identifiers of the one or more second devices, the one or more first intermediate keys, the identifier of the first device, and the one or more first random numbers, the one or more second expected responses being obtained based on one or more second random numbers; the core network side device obtains the one or more first intermediate keys based on the one or more first shared keys, and calculates, using the first calculation mode, the first expected response based on the second shared key, the identifiers of the one or more second devices, the one or more first intermediate keys, the identifier of the first device, and the one or more first random numbers, the second shared key being shared by the first device and the core network side device; or the core network side device calculates one or more second intermediate keys based on the one or more first shared keys, an identifier of a first network device, and one or more fourth random numbers, and calculates, using the first calculation mode, the first expected response based on the identifiers of the one or more second devices, the one or more second intermediate keys, the identifier of the first device, and the one or more first random numbers; or the core network side device obtains a third intermediate key based on the second shared key, the identifier of the first network device, and a third random number, obtains the one or more first intermediate keys based on the one or more first shared keys, and calculates, using the first calculation mode, the first expected response based on the third intermediate key, the identifiers of the one or more second devices, the one or more first intermediate keys, the identifier of the first device, and the one or more first random numbers.

The operation that the core network side device calculates the one or more second intermediate responses based on the identifiers of the one or more second devices, the one or more first shared keys, the identifier of the first device, and the one or more first random numbers includes one of following: the core network side device calculates, using the first calculation mode, the one or more second intermediate responses respectively based on one or more second expected responses, the identifiers of the one or more second devices, the one or more first shared keys, the identifier of the first device, and the one or more first random numbers, the one or more second expected responses being obtained based on one or more second random numbers; the core network side device calculates, using the first calculation mode, the one or more second intermediate responses respectively based on the second shared key, the identifiers of the one or more second devices, the one or more first shared keys, the identifier of the first device, and the one or more first random numbers, the second shared key being shared by the first device and the core network side device; the core network side device calculates a third intermediate key based on the second shared key, an identifier of a first network device, and a third random number, and calculates, using the first calculation mode, the one or more second intermediate responses respectively based on the third intermediate key, the identifiers of the one or more second devices, one or more first intermediate keys, the identifier of the first device, and the one or more first random numbers; the core network side device obtains the one or more first intermediate keys respectively based on the one or more first shared keys, and calculates, using the first calculation mode, the one or more second intermediate responses respectively based on the one or more second responses, the identifiers of the one or more second devices, the one or more first intermediate keys, the identifier of the first device, and the one or more first random numbers; the core network side device obtains the one or more first intermediate keys based on the one or more first shared keys, and calculates, using the first calculation mode, the one or more second intermediate responses respectively based on the second shared key, the identifiers of the one or more second devices, the one or more first intermediate keys, the identifier of the first device, and the one or more first random numbers; the core network side device calculates one or more second intermediate keys based on the one or more first shared keys, the identifier of the first network device, and one or more fourth random numbers, and calculates, using the first calculation mode, the one or more second intermediate responses respectively based on the identifiers of the one or more second devices, the one or more second intermediate keys, the identifier of the first device, and the one or more first random numbers; or the core network side device obtains the third intermediate key based on the second shared key, the identifier of the first network device, and the third random number, obtaining, by the core network side device, the one or more first intermediate keys based on the one or more first shared keys, and calculates, using the first calculation mode, the one or more second intermediate responses respectively based on the third intermediate key, the identifiers of the one or more second devices, the one or more first intermediate keys, the identifier of the first device, and the one or more first random numbers.

The operation that the core network side device calculates the first expected response based on the one or more second intermediate responses includes one of following: the core network side device calculates, using the first calculation mode, the first expected response based on the one or more second intermediate responses, an identifier of a first network device, and a third random number; the core network side device calculates, using the first calculation mode, the first expected response based on the one or more second intermediate responses and the identifier of the first network device; or the core network side device calculates, using the first calculation mode, the first expected response based on the one or more second intermediate responses and the third random number.

In the above processing, the description of the first shared key, the first calculation mode, and the second calculation mode is the same as that of the above embodiment, and will not be repeated. The detailed processing about the core network side device obtaining the first intermediate key, the second intermediate key, and the third intermediate key in the above processing is also the same as the processing by the first device obtaining the first intermediate key, the second intermediate key, and the third intermediate key in the above embodiment, which will not be described again.

In this embodiment, the core network side device may include the first network device, and the processing of calculating the first expected response may be performed by the first network device. Alternatively, the core network side device does not include the first network device, and in this case, the first network device may also calculate the first expected response; that is, the processing by the core network side device may be performed by the first network device instead, which will not be described again. The first network device may be an AUSF or an authentication device, and the detailed description of the authentication device has been provided in detail in the above embodiment, and will not be repeated here. The following description is made with the core network side device as an example, which does not mean that other network-side devices (for example, the first network device executes the processing and the first network device is not the core network side device) cannot execute the same processing, but description is not repeated.

The specific method used in the processing that the core network side device calculates the first expected response of a second device should be the same as that used in the processing that the first device calculates the first response of a second device in the above embodiment.

For example, in a case that the number of second devices is one, the first device calculates, using the first calculation mode, the first response based on the identifier of the second device, the first random number, the first shared key, and the identifier of the first device. Accordingly, the core network side device also needs to use the first calculation mode to calculate the first expected response based on the identifier of the second device, the first random number, the first shared key, and the identifier of the first device.

With the first shared key being a root key and the first calculation mode being a Hash algorithm as an example, the operation that the core network side device calculates, using the first calculation mode, the first expected response based on the identifier of the second device, the first random number, the first shared key, and the identifier of the first device may be expressed by the following formula: XRES' = HASH (Kr, AIoT ID, UE ID, NONCE1), where XRES' represents the first expected response, HASH represents the HASH algorithm, Kr is the first shared key, namely the root key, AIoT ID is the identifier of the second device, UE ID is the identifier of the first device, and NONCE1 is the first random number.

As can be seen from the above example, if the core network side device calculates the first expected response by using the root key and the Hash function, the formula used is the same as the formula RES' = HASH (Kr, AIoT ID, UE ID, NONCE1) used by the first device to calculate the first response by using the root key and the Hash function, except that in this example, the first expected response obtained by the core network side device is denoted as XRES' for distinction. This is because the core network side device and the first device are different executing subjects respectively, and XRES' and RES' are used to represent the results calculated by the core network side device and the first device based on the same formula respectively, but in essence, both of the core network side device and the first device need to use the same parameters and the same calculation mode to achieve the purpose of verification.

In other possible examples in which the core network side device obtains the first expected response of one or more second devices, the same calculation formula is also used as in the other possible examples in which the first device obtains the first response of one or more second devices; therefore, the calculation manner of the core network side device will not be described again.

In addition, the core network side device may also calculate a second intermediate response by the first shared key, and then calculate the first expected response based on the second intermediate response.

The specific method used in the processing that the core network side device calculates the second intermediate response of one or more second devices should be the same as that used in the processing that the first device calculates the first intermediate response of one or more second devices in the above embodiment.

For example, in a case that the number of second devices is multiple, with an i^{th} first shared key (the first shared key of an i^{th} second device) being an i^{th} root key, and the first calculation mode being a Hash algorithm as an example, the first device calculates, using the first calculation mode, an i^{th} first intermediate response based on the identifier of the i^{th} second device, an i^{th} first random number, the i^{th} first shared key, and the identifier of the first device. Accordingly, the core network side device also uses the first calculation mode to calculate an i^{th} second intermediate response based on the identifier of the i^{th} second device, the i^{th} first random number, the i^{th} first shared key, and the identifier of the first device; and for example, the operation may be expressed as RES"i = HASH(Krᵢ, AIoT ID-i, UE ID,NONCE1i).

That is, the processing method used by the core network side device calculating the second intermediate response needs to be the same as that used by the first device calculating the first intermediate response, except that in this example, the second intermediate response obtained by the core network side device is denoted as XRES" for distinction, and the second response of the first device side is replaced with the second expected response (which may be denoted as XRES for example). This is because the core network side device and the first device are different executing subjects respectively, and XRES" and RES" are used to represent the results calculated by the core network side device and the first device based on the same formula respectively, but in essence, both of the core network side device and the first device need to use the same parameters and the same calculation mode to achieve the purpose of verification. In other possible examples in which the core network side device obtains the second intermediate response of a second device, the same calculation formula is also used as in the other possible examples in which the first device obtains the first intermediate response of a second device; therefore, the calculation manner of the core network side device will not be described again.

The specific method used in the processing that the core network side device calculates the first expected response using the second intermediate response(s) of one or more second devices should be the same as that used in the processing that the first device calculates the first response using the first intermediate response(s) of one or more second devices in the above embodiment.

For example, with the first calculation mode including an exclusive OR algorithm and a Hash algorithm as an example, the processing that the first device calculates the first response may be expressed as: RES' = HASH(RES" 1⊕... ⊕RES" N, A-IoT authenticator ID, nonce2), and accordingly the processing that the core network side device calculates the first expected response may be expressed as: XRES' = HASH(XRES" 1⊕...⊕XRES" N, A-IoT authenticator ID, nonce2), where XRES' has the same meaning as that in the above example and represents the first expected response, RES" represents the first intermediate response, and XRES"1 to XRES"N represent the second intermediate responses of N second devices respectively. The remaining contents in the formula have the same meaning as those in the above embodiment, which will not be described again.

In other possible examples in which the core network side device obtains the first expected response based on the second intermediate response of a second device, the same calculation formula is also used as in the other possible examples in which the first device calculates the first response based on the first intermediate response of a second device; therefore, the calculation manner of the core network side device will not be described again.

In some embodiments, the operation that the core network side device calculates the first expected response based on the at least one shared key includes: the core network side device calculates the first expected response based on the second shared key and at least one of following parameters: an identifier of the first device, identifiers of the one or more second devices, or an identifier of a first network device. The operation that the core network side device performs the authentication related to the one or more second devices based on the first expected response and the first response includes: the core network side device performs, based on the first expected response and the first response, authentication of the first device serving as an intermediate node for the one or more second devices.

The operation that the core network side device performs, based on the first expected response and the first response, the authentication of the first device serving as the intermediate node for the one or more second devices may include: it is determined that the authentication of the first device serving as the intermediate node for the one or more second devices is successful or passed in a case that the first expected response and the first response are the same as each other; and/or it is determined that the authentication of the first device serving as the intermediate node for the one or more second devices fails or is not passed in a case that the first expected response and the first response are different from each other.

The operation that the core network side device calculates the first expected response based on the at least one shared key includes: the core network side device calculates the first expected response based on the second shared key, the identifier(s) of the one or more second devices, and at least one of following parameters: an identifier of the first device, or an identifier of a first network device.

Exemplarily, the operation that the core network side device calculates the first expected response based on the at least one shared key includes: the core network side device calculates, using the first calculation mode, the first expected response based on the second shared key, the identifier(s) of the one or more second devices, the identifier of the first device, and a third random number.

Exemplarily, the core network side device may further calculate one or more second expected responses firstly, and then use a first calculation mode to calculate the first expected response based on the one or more second expected responses, the identifier(s) of the one or more second devices, the second shared key, and at least one of: the identifier of the first device, the one or more first random numbers, or the identifier of the first network device. The description about the second expected response is the same as that in the above embodiment, and will not be repeated.

Exemplarily, the core network side device calculates a third intermediate key based on the second shared key and at least one of: the identifier of the first network device, or the third random number, and calculates, using the first calculation mode, the first expected response based on the third intermediate key, the identifier(s) of the one or more second devices, and at least one of: the identifier of the first device, or the one or more first random numbers.

Exemplarily, the core network side device calculates one or more second intermediate responses, and then calculates the first expected response based on the one or more second intermediate responses. For example, the core network side device calculates one or more second intermediate responses based on the identifier(s) of the one or more second devices, the second shared key, and at least one of: the identifier of the first device, the one or more first random numbers, or one or more second responses; and calculates the first expected response based on the one or more second intermediate responses. The operation that the core network side device calculates the first expected response based on the one or more second intermediate responses may be that the first device calculates the first expected response based on the one or more second intermediate responses and at least one of: a third random number, or the identifier of the first network device. The processing of calculating the first expected response based on the one or more second intermediate responses and at least one of: a third random number, or the identifier of the first network device in this embodiment is also same as that in the above embodiment, and will not be described again.

Merely exemplary description is provided here. More types of parameters may also be used to calculate the first expected response, and the parameters and the calculation mode used to calculate the first expected response should be the same as those used to calculate the first response, and thus are not described again.

In the above embodiment, detailed processing methods in which the first device calculates the first response and the core network side device calculates the first expected response in different scenarios including the number of second devices being one and the number of second devices being multiple are described in detail. Next, an interaction flow between the first device and the core network side device will be described.

In some possible implementations, performing of the authentication method may be triggered by the second device.

The processing by the first device may further include: the first device receives an authentication request from each of the one or more second devices. The authentication request carries an identifier of the second device. Further, the processing by the first device may further include: the first device transmits an authentication request to the core network side device. The authentication request carries the identifiers of the one or more second devices. Accordingly, the core network side device receives the authentication request from the first device.

Further, the processing by the core network side device may further include: the core network side device transmits a second message to the first device. The second message carries at least one of: identifiers of the one or more second devices, or an identifier of a device group. The device group includes multiple second devices. The second message may be a response message for the authentication request. Exemplarily, the second message may be referred to as an authentication response.

Optionally, the second message may further carry one or more first random numbers. Optionally, the second message may further carry at least one of: one or more second random numbers, one or more fourth random numbers, or a third random number.

Accordingly, the first device may execute the processing of calculating the first response, after receiving the second message from the core network side device. Then the first device transmits a first message to the core network side device. The core network side device receives the first message from the first device, and performs authentication related to the one or more second devices based on a first expected response and the first response.

Optionally, the method further includes at least one of following: the first device receives binding information from a fourth network device, the binding information including one or more second devices having a binding relationship with the first device; the first device determines, based on preset binding information, the one or more second devices having the binding relationship; and the first device takes the one or more second devices that have passed the authentication as the one or more second devices having the binding relationship, the authentication including physical layer authentication and/or air interface authentication.

When receiving an authentication request from each of the second devices, the first device may firstly determine, according to the binding information, whether or not each of the second devices is a device having a binding relationship with the first device, and when it is determined that each of the second devices is a device having a binding relationship with the first device, the first device may forward the authentication request from each of the second devices to the core network side device.

The processing that the first device receives the binding information from the fourth network device may be before the calculation of the first response or before the first device forwards the authentication request. The binding information may include one or more devices having a binding relationship with the first device. For example, the binding information may include at least one of: an identifier of each of one or more devices having a binding relationship with the first device, an identifier of each of one or more device groups having a binding relationship with the first device, and an identifier of each device included in each device group having a binding relationship with the first device. The fourth network device may be the same as or different from the first network device, and the fourth network device is not limited in this embodiment.

The preset binding information may be directly configured in advance in the first device, and the content of the preset binding information may be the same as the above binding information, which will not be described here again.

The specific processing procedure of the physical layer authentication and/or the air interface authentication is not limited in this embodiment. That is, as long as the first device has performed physical layer authentication and/or air interface authentication with any second devices, the first device saves the identifier of the second device and records the second device a device having a binding relationship with the first device itself.

In some possible examples, the number of second devices is one.

The first device transmits an authentication request before calculating the first response, and the first device may further add an identifier of the first device to the authentication request to be transmitted to the core network side device.

Exemplarily, the core network side device may include a first network device, and the first network device may check whether there is a binding relationship between the first device and the second device, and forward the authentication request to a second network device when it is determined that the binding relationship exists. Accordingly, the first network device receives the first expected response from the second network device. After receiving the authentication request forwarded by the first network device, the second network device calculates a first expected response corresponding to the second device (i.e., XRES' in the above embodiment), and transmits the first expected response to the first network device. The second network device may include a UDM and/or an ARPF. The processing method in which the second network device specifically obtains the first expected response should be the same as the method in which the first expected response is calculated in the above embodiment, which will thus not be described again. The above processing is particularly applicable to a case where the first network device is not an authentication device, for example, the first network device is a first core network device, such as an AUSF.

The first network device may check whether there is a binding relationship between the first device and the second device have based on the binding information corresponding to the first device stored by the first network device itself. For example, the first network device may check whether the identifier(s) of one or more binding devices contained in the binding information corresponding to the first device contains the identifier of the second device, and if yes, the first network device may determine that there is a binding relationship between the first device and the second device. Optionally, the first network device may further determine whether the first device can provide a wireless connection and/or a relay connection to the second device. For example, the first network device may determine, based on relevant data of the first device, whether the first device can provide a wireless connection and/or whether the first device has a relay function, so as to determine whether the first device can provide a wireless connection and/or a relay connection to the second device.

Optionally, the core network side device may include a first network device. The first network device may further receive at least one of following from the second network device: a first Message authentication code (MAC), a second expected response (denoted as for example XRES in the above embodiment), a KAUSF, or the like. Optionally, the first network device may further receive at least one of following from the second network device: a first random number, a second random number, a third random number, or a fourth random number. Contents such as the first expected response, the first message authentication code, and the second expected response may be carried by the a 5G Home Environment Authentication Vector (HE AV) transmitted by the second network device to the first network device.

The first network device may carry at least one of the first random number, the second random number, the third random number, or the fourth random number from the second network device in a second message and transmit same to the first device. Accordingly, after receiving the second message, the first device may calculate the first response. Then the first device transmits the first response to the first network device, and then the first network device determines that the authentication of the second device is successful if the first expected response is the same as the first response.

Exemplarily, the first network device may check whether there is a binding relationship between the first device and the second device, and the first network device calculates a first expected response of the second device when it is determined that the binding relationship exists. The manner in which the first network device calculates the first expected response in such an example has been described in detail in the above embodiment, and will not be described again.

When calculating the first expected response, the first network device may also obtain any one of: the first message authentication code of the second device, the second expected response, the KAUSF, or the like, and the first network device side may also generate at least one of: the first random number, the second random number, the third random number, and the fourth random number. The first network device may then transmit a second message to the first device. The second message carries at least one of: the first message authentication code, the second expected response, the KAUSF, the first random number, the second random number, the third random number, the fourth random number, or the like. The processing that can be performed by the first device and the authentication processing that can be subsequently performed by the first network device are the same as those in the above example, and will not be described again.

In some possible examples, the number of second devices is multiple, and multiple second devices may belong to the same device group.

The first device transmits an authentication request before calculating the first response.

In this scenario, each of the multiple second devices may transmit an authentication request to the first device on the same time-domain resource. For example, the time-domain resource may be a time, and each second device sets the same time for triggering the authentication request, and when the time for triggering the authentication request is reached, the second devices transmit authentication requests to the first device simultaneously. Of course, the time-domain resource may be a time range. For example, each second device may transmit an authentication request to the first device at any time within a designated time range. The time range may be set according to actual situations. For example, the time range may be a range of 11:00 to 11:10, or may be longer or shorter, which is not limited here. Accordingly, if the time-domain resource is one time, the first device may receive authentication requests sent by the second devices simultaneously, and different authentication requests carry different identifiers of the second devices. If the time domain resource is a time range, the first device may transmit, to the core network side device at the end of the time range, the authentication request of each second device received within the time range.

In the processing that the first device forwards the authentication request to the core network side device, the first device may further add an identifier of the first device to the authentication request. In addition, the authentication request may also include an identifier of a device group to which the multiple second devices belong.

Exemplarily, the core network side device may include a first network device, and the first network device may check whether there is a binding relationship between the first device and multiple second devices, and forward the authentication request of the multiple second devices to a second network device when it is determined that the binding relationship exists. Accordingly, the first network device receives the first expected response from the second network device. In this case, the first expected response may be a group first expected response of the device group to which the multiple second devices belong. After receiving the authentication request of the multiple second devices forwarded by the first network device, the second network device calculates a first expected response corresponding to the multiple second devices (i.e., XRES' in the above embodiment), and transmits the first expected response to the first network device. The second network device may include a UDM and/or an ARPF. The processing method in which the second network device specifically obtains the first expected response should be the same as the method in which the first network device calculates the first expected response in the above embodiment, which will thus not be described again. The method in which the first network device checks whether there is a binding relationship between the first device and each second device may include: the first network device determines, through an identifier of a device group to which the multiple second devices belong, whether there is a binding relationship between the first device and the device group, and the first network device determines that there is a binding relationship between the first device and each second device if yes.

Alternatively, the first network device may further receive at least one of following from the second network device: one or more first random numbers, one or more second random numbers, a third random number, or one or more fourth random numbers. The first expected response, the one or more random numbers, and the like may be carried by a 5G HE AV transmitted by the second network device to the first network device. The first network device may carry at least one of following in a second message: the one or more first random numbers, the one or more second random numbers, the third random number, or the one or more fourth random numbers from the second network device, and transmit same to the first device. Accordingly, after receiving the second message, the first device may calculate the first response. Then the first device transmits the first response to the first network device, and then the first network device determines that the authentication of the second device is successful if the first expected response is the same as the first response. Exemplarily, the first network device may check whether there is a binding relationship between the first device and the second devices, and the first network device calculates a first expected response when it is determined that the binding relationship exists. When calculating the first expected response, the first network device side may also generate at least one of: the one or more first random numbers, the one or more second random numbers, the third random number, or the one or more fourth random numbers. The first network device may then transmit a second message to the first device. The second message carries at least one of: the one or more first random numbers, the one or more second random numbers, the third random number, the one or more fourth random numbers or the like. The processing that can be performed by the first device and the authentication processing that can be subsequently performed by the first network device are the same as those in the above example, and will not be described again.

Optionally, the first message further carries one or more first random numbers. Optionally, the first message may further carry at least one of: one or more second random numbers, one or more fourth random numbers, or a third random number.

In this case, the processing by the first device further includes that the first device generates the one or more first random numbers. The first device then performs the above processing of calculating the first response. Accordingly, the core network side device performs the processing of receiving the first message from the first device.

For example, the core network side device includes a first network device. The first network device calculates a first expected response based on the one or more first random numbers, or the first network device transmits the one or more first random numbers to a second network device, and receives a first expected response from the second network device. Then the first network device determines that the authentication of the one or more second device is successful in a case that the first expected response is the same as the first response. In a scenario in which the number of second devices is one, the first device forwards an authentication request from the second device to the first network device. Accordingly, the first network device receives the authentication request of the second device forwarded by the first device. In the processing that the first device forwards the authentication request to the first network device, the first device may further add an identifier of the first device to the authentication request. Exemplarily, the first network device may check whether there is a binding relationship between the first device and the second device, and the first network device transmits a second message to the first device when it is determined that the binding relationship exists. Different from the above example, the second message is only used for authentication acknowledgement, and carries no information such as a random number. After receiving the second message, the first device generates each random number by itself, then calculates a first response, carries the first response and each random number in the first message and transmits same to the first network device. The first network device may calculate the first expected response based on the first random number corresponding to the second device transmitted by the first device, or may transmit the first random number corresponding to the second device to the second network device. The 5G HE AV corresponding to the second device is still calculated by the second network device. The processing of obtaining the 5G HE AV is the same as that in the above embodiment, and will not be described again. In a scenario in which the number of second devices is multiple, the first device receives an authentication request from multiple second devices simultaneously and forwards the authentication request to the first network device. Accordingly, the first network device receives the authentication request of the multiple second devices forwarded by the first device. In the processing that the first device forwards the authentication request to the first network device, the first device may further add an identifier of the first device to the authentication request. The first network device may check whether there is a binding relationship between the first device and multiple second devices, and may transmit a second message to the first device when it is determined that the binding relationship exists. The second message is only used for authentication acknowledgement, and carries no information such as a random number. After receiving the second message, the first device generates random numbers corresponding to the multiple second devices respectively by itself, then calculates a first response, carries the first response and the random numbers in the first message and transmits same to the first network device. The first network device may calculate the first expected response based on the first random number corresponding to each second device transmitted by the first device, or may transmit the first random number corresponding to the second device to the second network device. The 5G HE AV corresponding to the second device is still calculated by the second network device. The processing of obtaining the 5G HE AV is the same as that in the above embodiment, and will not be described again.

In some possible implementations, performing of the authentication method may be triggered by the second device.

The processing by the first device may further include: the first device receives an authentication request from each of the one or more second devices. The authentication request carries an identifier of the second device. After receiving the authentication request of each second device, the first device performs the processing of calculating a first response. In the processing of calculating the first response, the first device generates one or more first random numbers. In addition, the first device may further generate the one or more second random numbers, the third random number, and the one or more fourth random numbers. The first device then transmits a first message. Besides the first response, the first message may further carry at least one of: one or more first random numbers, one or more second random numbers, a third random number, and one or more fourth random numbers.

The processing by the core network side device may include that the core network side device receives a first message from the first device.

Optionally, the core network side device includes a first network device. The first network device may receive a first message from the first device, obtain each random number from the first message, transmit each random number to the second network device, and receive a first expected response from the second network device. The first network device may determine that the authentication of each second devices is successful in a case that the first expected response is the same as the first response. Further, the first network device may further transmit a notification message of authentication success to the first device.

Alternatively, the first network device may receive a first message from the first device, obtain each random number from the first message, and calculate a first expected response based on each random number. The first network device may determine that the authentication of each second device is successful in a case that the first expected response is the same as the first response. Further, the first network device may further transmit a notification message of authentication success to the first device.

The above implementation is applied in the scenario of only one second device or the scenario of multiple second devices. The processing that the first device calculates the first response, and the processing that the first network device or the second network device generates the first expected response are the same as those in the above embodiment, and will not be described again.

In addition, regardless of the scenario of one second device or the scenario of multiple second devices, after receiving the first message, the core network side device may verify whether there is a binding relationship between the first device and each second device, and the specific processing method is the same as that in the above embodiment, and will not be described again.

In some possible implementations, the authentication may be triggered by the network side.

The second message is used for requesting authentication. The core network side device includes a first network device. The method further includes that the first network device receives an authentication request from a third network device. The authentication request carries at least one of: identifiers of the one or more second devices, or an identifier of a device group. The device group includes multiple second devices.

The third network device may be a server, for example, a server having an A IoT service function or the like, and all possible examples are not exhaustively listed here.

In a case that the number of second devices is one, the authentication request may carry an identifier of the second device. In a case that the number of second devices is multiple, the authentication request may include identifiers of the multiple second devices. Alternatively, the authentication request may carry an identifier of the device group. Further, in a case that the authentication request carries the identifier of the device group, the first network device may further determine the identifier of each of the multiple second devices included in the device group based on the identifier of the device group.

In some possible examples, the first network device may be a first core network device, such as an AUSF. That is, the first core network device may obtain a first expected response from the second network device or calculate the first expected response by itself after determining the identifier of each of the second devices. The processing is the same as that in the above embodiment, and will not be described again. The first network device may then transmit a second message to the first device for requesting authentication. The second message may carry one or more first random numbers. In addition, the other random numbers described above may be carried. The first device performs processing such as calculating a first response and transmitting a first message to the first network device, and the specific processing methods are the same as those in the above embodiment, and will not be described again.

In some possible examples, the first network device may be an authentication device. The first network device may receive an authentication request from the third network device through another core network device. Said another core network device may include at least one of: AUSF, UDM, or ARPF. Said another core network device may firstly calculate authentication information of each second device based on the authentication request of the third network device, and the authentication information of each second device may include at least one of: a message authentication code of the second device, a second expected response of the second device, a second random number corresponding to the second device, or the like. Further, in this case, said another core network device may carry the authentication information in the authentication request and transmit same to the first network device. The first network device may perform the processing of calculating a first expected response and transmitting a second message to the first device, and he first device performs processing such as calculating a first response and transmitting a first message to the first network device; and the specific processing methods are the same as those in the above embodiment, and will not be described again. In this example, the first network device may be any one of core network side devices, such as AUSF. Alternatively, the first network device may not be a core network side device, for example the first network device may be an authentication device.

In the above embodiment, the core network side device may also include no first network device. In this case, the processing executed by the first network device in the above embodiment may be executed by the core network side device instead, and will not be described again.

In some possible implementations, the first device may also verify or authenticate the core network side device. Specifically, the second message carries one or more first message authentication codes for authenticating the core network side device.

Here, the first message authentication code may be used for a first device serving as an intermediate node of one or more second devices to authenticate the core network side device. That is, since the first device is an intermediate node of the one or more second devices, the first device may authenticate the core network side device by verifying the first message authentication code instead of the one or more second devices. Different from the above embodiment, the second message in this embodiment may carry one or more first message authentication codes in addition to the contents involved in the above embodiment, and other related description (such as a transmission timing) of the second message is the same as those in the above embodiment, and will not be repeated.

The method further includes that the core network side device calculates the one or more message authentication codes based on the at least one shared key.

Optionally, the operation that the core network side device calculates the one or more first message authentication codes based on the at least one shared key includes: the core network side device calculates a first message authentication code based on the at least one shared key and at least one of following parameters: an identifier of a first network device, identifiers of the one or more second devices, or an identifier of the first device.

Accordingly, at the first device side, the method further includes that: the first device calculates a second message authentication code based on the at least one shared key, and the first device authenticates the core network side device based on the second message authentication code and the one or more first message authentication codes.

In some embodiments, the operation that the core network side device calculates the one or more first message authentication codes based on the at least one shared key includes: the core network side device calculates a first message authentication code based on the at least one shared key and at least one of following parameters: an identifier of a first network device, identifiers of the one or more second devices, or an identifier of the first device.

The second message carries a first message authentication code, and the operation that the first device calculates the second message authentication code based on the at least one shared key includes: the first device calculates the second message authentication code based on the at least one shared key and at least one of following parameters: an identifier of a first network device, identifiers of the one or more second devices, or an identifier of the first device.

In this embodiment, the operation that the first device authenticates the core network side device based on the second message authentication code and the one or more first message authentication codes may include: in a case that the second message authentication code is the same as the first message authentication code, the first device determines that authentication of the core network side device is passed or successful (or determining that authentication of the core network side device performed instead of one or more second devices is passed or successful ); and/or in a case that the second message authentication code is different from the first message authentication code, the first device determines that authentication of the core network side device is not passed or fails (or determining that authentication of the core network side device performed instead of one or more second devices fails or is not passed).

Further, the parameter for calculating the first message authentication code may further include one or more random numbers.

In an example, the core network side device calculates the first message authentication code based on the one or more first shared keys.

The operation that the core network side device calculates the first message authentication code based on the one or more first shared keys includes one of following:
the core network side device calculates one or more second intermediate keys based on the one or more first shared keys and at least one of: an identifier of a first network device, or one or more fourth random numbers, and calculates, using a third calculation mode, the first message authentication code based on the one or more second intermediate keys, the identifiers of the one or more second devices, and the identifier of the first device.

The core network side device calculates one or more intermediate verification codes based on the one or more first shared keys, and calculates, using the third calculation mode, the first message authentication code based on the one or more intermediate authentication codes and the identifier of the first network device.

The third calculation mode may be at least one of: a first authentication function, a second authentication function, a third authentication function, a Hash algorithm, AES, ACSON, SNOW 3G, ZUC, exclusive OR calculation, concatenation, KDF, or the like. The third calculation mode may be the same as or different from the first calculation mode. Gor example, the first calculation mode may be Hash calculation, and the third calculation mode may be a first authentication function, or the like.

In the processing by the first device, the method further includes: the first device calculates a second message authentication code based on the one or more first shared keys, and in a case that the second message authentication code is the same as the first message authentication code, the first device determines that the authentication of the core network side device is completed.

The operation that the first device calculates the second message authentication code based on the one or more first shared keys includes one of following: the first device calculates one or more second intermediate keys based on the one or more first shared keys and at least one of: an identifier of a first network device, or one or more fourth random numbers, and calculates, using a third calculation mode, the second message authentication code based on the one or more second intermediate keys, the identifiers of the one or more second devices, and the identifier of the first device; and the first device calculates one or more intermediate verification codes based on the one or more first shared keys, and calculates, using the third calculation mode, the second message authentication code based on the one or more intermediate authentication codes and the identifier of the first network device.

This example is particularly applicable to the scenario of multiple second devices. In this scenario, the first message authentication code may be a first group message authentication code. That is, for the situation that multiple second devices form a device group, a total first message authentication code is generated for the device group. However, this example may also be used in a scenario of one second device, and the scenario to which this example is applicable is not limited here.

Optionally, the core network side device calculates one or more second intermediate keys based on the one or more first shared keys, an identifier of a first network device, and one or more fourth random numbers, and calculates, using a third calculation mode, the first message authentication code based on the one or more second intermediate keys, the identifiers of the one or more second devices, and the identifier of the first device.

The processing method that the core network side device calculates each second intermediate key is the same as the processing method that the first device calculates each second intermediate key, and will not be described here again.

In the processing of calculating, using the third calculation mode, the first message authentication code based on the one or more second intermediate keys, the identifiers of the one or more second devices, and the identifier of the first device, other parameters may be added. For example, at least one of a sixth random number, a Sequence number (SQN), or the like may also be included. Other parameters may also be included in addition to the sixth random number and the Sequence number (SQN), and no exhaustive enumeration is made here.

With the third calculation mode being the first authentication function as an example, the calculation of the first message authentication code may be expressed as: MAC-Group = f1 (KA-IoT-1⊕...⊕KA-IoT-N, (Tag ID-1,..., Tag ID-N), UE ID, RAND', SQN), where MAC-Group is the first message authentication code, f1 is the first authentication function, KA-IoT-1 to KA-IoT-N are second intermediate keys of N second devices respectively, Tag ID-1 to Tag ID-N are identifiers of N second devices respectively, RAND' is a sixth random number, and SQN is a sequence number. The Tag ID may be replaced with the A-IoT ID in the above embodiment, and the RAND' may be the same as the above second random number in some possible cases, and may be different from the above second random number in some other possible cases.

With the third calculation mode being a Hash algorithm as an example, the calculation of the first message authentication code based on the one or more second intermediate keys, the identifiers of the one or more second devices, the identifier of the first device, and the sixth random number using the first calculation mode may be expressed as: MAC-Group = HASH (KA-IoT-1⊕...⊕KA-IoT-N, (Tag ID-1,..., Tag ID-N), UE ID, RAND'). The contents in the formula have the same meaning as those in the above embodiment, and will not be described again.

Optionally, the core network side device calculates one or more intermediate verification codes based on the one or more first shared keys, and calculates, using the third calculation mode, the first message authentication code based on the one or more intermediate authentication codes and the identifier of the first network device.

With any second device being an i^{th} second device as an example, the MAC corresponding to the i^{th} second device is obtained based on at least one of: the first shared key of the i^{th} second device, the sequence number, the sixth random number, the AMF name, or the like, and the MAC corresponding to the i^{th} second device is used as the i^{th} intermediate verification code. With the third calculation mode as a Hash algorithm as an example, the calculation of the first message authentication code based on the one or more intermediate authentication codes and the identifier of the first network device using the third calculation mode may be expressed as: MAC_Group = HASH (MAC-1 ⊕ ... (DMAC-N, A-IoT authenticator ID, RAND'), where MAC-1 to MAC-N are intermediate verification codes corresponding to N second devices respectively. Other contents in the formula have the same meaning as those in the above embodiment, and will not be described again.

It should be understood that the above is merely exemplary description. In actual processing, the algorithms or functions in each of the above exemplified formulas may also be replaced with one or more other algorithms or functions of the third calculation mode. For example, the exclusive OR calculation may be replaced with the concatenation, f1 may be replaced with f3, HASH may be replaced with f2, and the like, and no exhaustive enumeration is made here.

In this example, the parameters and algorithms (or functions) used in the processing that the first device side calculates the second message authentication code should be the same as those used in the processing that the core network side device calculates the first message authentication code. In this embodiment, the first message authentication code and the second message authentication code are used for distinguishing the message authentication codes obtained by different subjects merely. The second message authentication code obtained at the first device side may be denoted as XMAC-Group, and the processing by the first device will not be described here again.

It should also be noted that other parameters such as the second shared key may be used in the above calculation of the first message authentication code and the second message authentication code, and no exhaustive enumeration or limitation is made here.

In one example, the core network side device calculates the first message authentication code based on the second shared key.

The operation that the core network side device calculates the first message authentication code based on the second shared key includes: the core network side device calculates a first message authentication code based on the second shared key and at least one of following parameters: an identifier of a first network device, identifiers of the one or more second devices, or an identifier of the first device.

In the processing by the first device, the method further includes: the first device calculating the second message authentication code based on the second shared key and at least one of the following parameters: an identifier of a first network device, identifiers of the one or more second devices, or an identifier of the first device, and the first device determines that authentication of the core network side device is completed in a case that the second message authentication code is the same as the first message authentication code.

The parameters used in calculating the first message authentication code and calculating the second message authentication code may further include one or more random numbers, for example, a sixth random number may be included. It should be noted that the calculation of the first message authentication code and the calculation of the second message authentication code may involve the same parameters, and may be performed in the same manner.

For example, the calculation of the first message authentication code may be expressed as: MAC-1 = f1(K_{AUSF-UE}, Tag ID, UE ID, RAND'), where MAC-1 is the first message authentication code, f1 is a first authentication function, K_{AUSF-UE} is the second shared key, Tag ID is an identifier of the second device, and RAND' is a sixth random number. The Tag ID may be replaced with the A-IoT ID in the above embodiment. Only the scenario that one second device is included is described here. In actual processing, multiple second device may be included. The tag ID in the above formula may be replaced with (tag ID-1, ... , tag ID-N). The replacement description of the second shared key and the replacement description of the UE ID in the above formula are similar to those in the above embodiment, and will not be repeated.

In the above embodiment, the parameters and algorithms (or functions) used in the processing that the first device side calculates the second message authentication code should be the same as those used in the processing that the core network side device calculates the first message authentication code. In this embodiment, to distinguish the message authentication codes obtained by different subjects merely, the second message authentication code obtained at the first device side may be denoted as XMAC-2, and the processing by the first device will not be described here again.

In some possible examples, the second message further carries one or more first message authentication codes. The operation that the core network side device calculates the one or more first message authentication codes based on the at least one shared key includes: for each of the one or more second devices, the core network side device calculates a corresponding first message authentication code based on the one or more first shared keys.

In the processing by the first device, the operation that the first device calculates the second message authentication code based on the at least one shared key includes: the first device calculates the second message authentication code based on a first shared key corresponding to a target second device among the one or more second devices. The operation that the first device authenticates the core network side device based on the one or more second message authentication codes and the one or more first message authentication codes includes: the core network side device is authenticated based on the target second message authentication code and a target first message authentication code of the one or more first message authentication codes. The target first message authentication code is associated with the target second device.

The operation that the core network side device is authenticated based on the target second message authentication code and the target first message authentication code of the one or more first message authentication codes may include: in a case that the target second message authentication code is the same as the target first message authentication code, it is determined that authentication of the core network side device is passed or successful; and/or in a case that the target second message authentication code is different from the target first message authentication code, it is determined that authentication of the core network side device is not passed or fails.

This example is different from the above example in that: in this example, the core network side device calculates a corresponding first message authentication code for each second device. The method of calculating the first message authentication code for each second device and other parameters that may be used in the calculation are not limited in this embodiment, and any scheme shall fall within the protection scope of this embodiment as long as the first shared key of each second device is related.

In a case that the number of second devices is one, the first device side may consider the second device and a current target second device and calculates a target second message authentication code of the target second device.

In a case that the number of the second devices is multiple, the first device side may arbitrarily select one of multiple second devices as the target second device, and calculate a target second message authentication code of the target second device, then determine, from multiple first message authentication codes, a first message authentication code corresponding to the target second device, and considers the first message authentication code as the target first message authentication code. Any method in which the first device calculates the target second message authentication code shall fall within the scope of protection of this embodiment, as long as being the same as the manner of calculating the first message authentication code and being related to the first shared key. The specific calculation method is not limited.

In some other possible examples, the operation that the core network side device calculates the one or more first message authentication codes based on the at least one shared key includes: for each of the one or more second devices, the core network side device calculates a corresponding first message authentication code based on the second shared key and the identifier of the device. The method of calculating the first message authentication code for each second device and other parameters that may be used in the calculation are not limited in this embodiment, and any scheme shall fall within the protection scope of this embodiment as long as the identifier and the second shared key of each second device is related. Accordingly, the processing that the first device calculates the target second message authentication code should be the same as the method of calculating the target first message authentication code, the processing that the first device authenticates the core network side device based on the target second message authentication code and the target first message authentication code of the one or more first message authentication codes is also the same as that in the above example, and is thus not described again.

In some possible embodiments, mutual authentication is also performed between the first device and the second device.

In some possible examples, physical layer authentication is performed between the first device and the second device such that the second device authenticates the first device.

Optionally, the method further includes following. The first device transmits a third message to a target second device among the one or more second devices. The third message is used for instructing the target second device to authenticate the first device. The first device receives a pilot signal transmitted by the target second device. The first device calculates a target verification code corresponding to the target second device based on the pilot signal transmitted by the target second device. The first device transmits the target verification code to the target second device. The first device receives a fourth message from the target second device. The fourth message indicates an authentication result of the target second device for the first device. The authentication result may include authentication being passed (or verification or authentication of the first device is passed), or authentication failure (or verification or authentication of the first device fails).

The third message may be a physical-layer authentication request. The pilot signal transmitted by the target second device may be a secret pilot transmitted by the target second device. The secret pilot is calculated from the first shared key (such as Kr), and channel information between the first device (such as UE) and the second device (such as an A-IoT device), is confidential and private, and can be verified only by the first device.

Exemplarily, the first device calculates a target verification code corresponding to the target second device based on the first shared key of the target second device and the secret pilot of the target second device.

The target second device is any one of one or more second devices, and each second device performs the same processing as the target second device. For example, the first device transmits a third message to each of the one or more second devices, the third message being used for instructing each second device to authenticate the first device. The first device receives a pilot signal transmitted by each second device. The first device calculates a verification code corresponding to each second device based on the pilot signal transmitted by the second device. The first device transmits a corresponding verification code to each of second device. The first device receives a fourth message from each of second device. The fourth message of each second device indicates whether the authentication of the first device by the second device is successful. Here, the processing of each second device will not be described in detail.

Optionally, the method further includes: the first device calculates, based on a third shared key shared with a target second device among the one or more second devices, a target verification code for authenticating the first device; and the first device transmits a third message to the target second device. The third message carries the target verification code. The operation that the first device calculates target verification code may specifically be: the target verification code is calculated based on the third shared key and at least one of: a fifth random number, an identifier of the target second device, or an identifier of the first device.

The processing at the target second device side may include following. The target second device receives a third message from a first device. The third message carries a target verification code for authenticating the first device, and the target verification code is related to a third shared key shared by the target second device and the first device. The target second device authenticates the first device based on a target check code and the target verification code.

The method further includes: the target second device calculates the target check code based on the third shared key and at least one of: a fifth random number, an identifier of the target second device, or an identifier of the first device.

In some possible examples, the third shared key is shared by the target second device and the first device. The third shared key corresponding to the target second device may be at least one of: a pre-shared key (such as a root key), a pre-distributed key, a private network key, an application layer key, a physical layer key, a Physical Unclonable Function (PUF) key, or the like. In some possible examples, besides being shared by the target second device and the first device, the third shared key may also be shared by the core network side device. That is, the third shared key may also be a key shared by the target second device, the first device, and the core network side device. In such examples, the third shared key may be the same as the first shared key in the above embodiment. That is, as long as the third shared key is stored in advance between the target second device and the first device, regardless of whether the third shared key is shared between the target second device and the first device, or the third shared key is shared among the target second device, the first device, and the core network side device, the third shared key is within the scope of protection of this embodiment.

The operation that the first device calculates, based on the third shared key shared with the target second device among the one or more second devices, the target verification code for authenticating the first device includes: the first device calculates the target verification code for authenticating the first device based on the third shared key shared with the target second device among the one or more second devices and at least one of: a fifth random number, the identifier of the target second device, or an identifier of the first device.

The fifth random number may be generated by the first device. The fifth random number may be carried by the third message, so as to be transmitted to the target second device. It should also be noted that different second devices may correspond to different fifth random numbers respectively, and the configuration method of the fifth random number corresponding to each second device will not be described exhaustively herein. In addition, the calculation manner of the target verification code corresponding to the target second device may be configured according to the actual situation, such as at least one of: a first authentication function (such as fl), a second authentication function (such as f2), a third authentication function (such as f3), f4 (such as referred to as an IK derivation function), f5 (such as an AK derivation function), a Hash algorithm, AES, ACSON, SNOW 3G, ZUC, exclusive OR calculation, concatenation, or KDF.

For example, the operation that the first device calculates the target verification code corresponding to the target second device may be expressed as: MAC'_A = f1(Kr, Tag ID, UE ID, nonce3), where Kr is a third shared key shared between the target second device and the UE, and nonce3 denotes a fifth random number. Description of the remaining parameters is the same as that in the above embodiment, and will not be repeated. Replacement description of the UE ID is the same as that in the above embodiment, and will not be described again.

The method in which the target second device calculates the target check code should be the same as the method in which the first device calculates the target check code corresponding to the target second device, for example, the calculation of the target check code at the target second device side may be denoted as: XMAC'_A = f1(Kr, Tag ID, UE ID, nonce3).

The operation that the target second device authenticates the first device based on the target check code and the target verification code may include: it is determined that the authentication of the first device is passed or successful in a case that the target check code is the same as the target verification code; otherwise, it is determined that the authentication of the first device fails.

Further, the processing by the target second device may further include transmitting a fourth message to the first device. The fourth message carries an authentication result of the first device, and the authentication result may include authentication success or authentication failure. Accordingly, the processing by the first device may include receiving the fourth message from the target second device.

The target second device is any one of one or more second devices, and each second device performs the same processing as the target second device. The processing of each second device will not be described herein again. After the first device receives the fourth message from each of second device, the method may further include: in a case that all second device indicate successful authentication of the first device, the first device may complete all authentication processing. Alternatively, in a case where all second devices indicate successful authentication of the first device, the first device performs the aforementioned processing of calculating the first response (or performing S210).

In some possible examples, the first device authenticates the second device.

Optionally, the first device may authenticate each second device using a PUF principle. For example, with any second device being an i^{th} second device as an example, the first device authenticates the i^{th} second device according to the PUF principle, and the first device transmits an authentication pass message to the i^{th} second device after the authentication is passed.

Optionally, the method further includes following. The first device receives a fourth message from a target second device among the one or more second devices. The fourth message carries a third response for authenticating the target second device, and the third response is related to a third shared key shared by the target second device and the first device. The first device authenticates the target second device based on the third response and a third expected response. The first device calculates the third expected response based on the third shared key and at least one of following: a fifth random number, an identifier of the target second device, or an identifier of the first device.

Accordingly, the processing by the target second device may include: the target second device transmits a fourth message to a first device. The fourth message carries a third response for authenticating the target second device, and the third response is related to a third shared key shared by the target second device and the first device. The method further includes: the target second device calculates the third response based on the third shared key and at least one of: a fifth random number, an identifier of the target second device, or an identifier of the first device.

Before receiving the fourth message, the first device may further transmit a third message to the target second device. The third message carries the fifth random number. The description about the fifth random number is the same as that in the above embodiment, and will not be repeated. Moreover, alternatively, the third message may also carry a sixth random number different from the fifth random number, and accordingly, the "fifth random number" in the parameters used in calculating the third response and calculating the third expected response may be replaced with the "sixth random number".

The third message may be an authentication response corresponding to the target AloT device or an authentication request corresponding to the target AloT device. The fourth message may be an authentication acknowledgement corresponding to the target AIoT device or an authentication response corresponding to the target AIoT device.

The calculation manner of the third expected response of the target second device may be configured according to the actual situation, such as at least one of: a first authentication function (such as f1), a second authentication function (such as f2), a third authentication function (such as f3), f4 (such as referred to as an IK derivation function), f5 (such as an AK derivation function), a Hash algorithm, AES, ACSON, SNOW 3G, ZUC, exclusive OR calculation, concatenation, or KDF. It should be noted that the calculation manner used in calculating the third expected response or the third response is different from the calculation manner used in calculating the target verification code or the target check code in the above embodiment, and/or the parameters used in calculating the third expected response or the third response are different from the parameters used in calculating the target verification code or the target check code in the above embodiment. For example, the calculation manner used in calculating the third expected response or the third response may be f1, and the calculation manner used in calculating the target verification code or the target check code in the above embodiment may be f2 or a Hash algorithm.

For example, with the calculation of the third expected response based on a fifth random number and a third shared key corresponding to the target second device (the third shared key may be the same as the first shared key) as an example, the calculation may be expressed in the following calculation formula: XRES-AIOT-i = HASH (Kri, fifth random number), or XRES-AIOT-i = f2 (KAUSF-A-i, fifth random number), where XRES-AIOT-i denotes the third expected response of the target second device, and the meaning of other contents in the formula will not be described again.

For example, with the calculation of the third expected response based on a fifth random number and a third shared key corresponding to the target second device (the third shared key is different from the first shared key) as an example, the first device calculates the third expected response in any one of the following calculation formulas. XRES'_A = KDF (Kr, Tag ID, UE ID, nonce3), or XRES'_A = HASH (Kr, Tag ID, UE ID, nonce3), or XRES'_A = f2 (Kr, Tag ID, UE ID, nonce3). XRES'_A represents the third expected response of the target second device, and the meaning of other contents in the formula will not be repeated. Kr is a third shared key of the target second device, and nonce3 denotes a fifth random number. Description of the remaining parameters is the same as that in the above embodiment, and will not be repeated. Replacement description of the UE ID is the same as that in the above embodiment, and will not be described again.

The method in which the target second device side calculates the third response is the same as the method in which the first device calculates the third expected response of the target second device. For example, the operation that the target second device side calculates the third response may be expressed as any one of the following: RES'_A = KDF (Kr, Tag ID, UE ID, nonce3), or RES'_A = HASH (Kr, Tag ID, UE ID, nonce3), or RES'_A = f2 (Kr, Tag ID, UE ID, nonce3).

The operation that the first device authenticates the target second device based on the third response and the third expected response may be: the first device determines that the authentication of the target second device is successful in a case that the third response is the same as the third expected response, otherwise, the first device determines that the authentication of the target second device fails.

The processing of each second device is the same as that of the target second device, and the related processing of each second device will not be described in detail herein.

After determining that the authentication of each second device is successful, the first device may perform the processing of transmitting a first message, or the first device may perform the processing of calculating a first response, or the first device may perform the aforementioned processing of transmitting a third message to each of the one or more second devices. No exhaustive enumeration is made to various possible processing.

For each example provided in the embodiments of the disclosure (including the following examples), the first device may be a terminal device or a first access network device. Therefore, the UE ID involved in each above example or formula may be replaced with any one of: a gNB ID, an eNB ID, or the like, and the UE-related key(s) (such as a shared key or an intermediate key) involved in each formula may be replaced with a key related to the first access network device (for example, KUE may be replaced with KgNB, KAUSF-UE may be replaced with KAUSF-gNB, and the like). Further, the first network device may be a core network device such as AUSF, AMF, SEAF, an AIoT network element, UPF, etc., besides being an A-IoT authenticator; therefore, the AIoT Authenticator ID in each above example or formula may be replaced with at least one of: an AUSF ID, an AMF ID, a SEAF ID, an AIoT network element ID, a UPF ID, etc. No exhaustive enumeration is made to all possible cases here.

In combination with the indirect mode processing architecture of the A-IoT device (i.e., any above second device) provided in FIG. 4, possible exemplary description is made for the above authentication method: the UE/base station (i.e., the first device), as an authentication proxy, authenticates the A-IoT device, and the core network only authenticates the UE and does not authenticate the A-IoT device. Further, the A-IoT device and the UE or the base station (hereinafter, description is made only with the UE as an example) have a shared key, which may be the root key Kr of the A-IoT device shared with the core network, and the A-loT device authenticates the UE by physical layer authentication. The core network authenticates the A-IoT according to the root key Kr of the A-IoT device. Since the UE has the root key Kr of the A-IoT, the authentication of the A-IoT can be completed at the UE proxy, and the 5G AKA and the RES' for authenticating the A-IoT (i.e., the first response described above) do not need to be calculated at the A-IoT, thereby alleviating the calculation burden of the A-IoT. In addition, authentication may also be performed between the core network and a server (for example, a third-party server for AIOT service), and this part of processing is not limited in this embodiment.

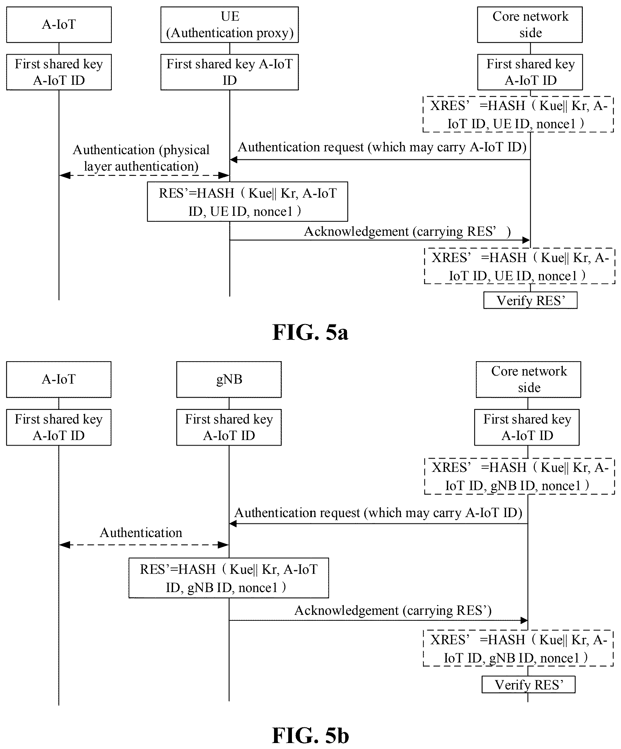

Exemplary description is made to the above authentication method with reference to FIG. 5a. With the second device being A-IoT (i.e., an A-IoT device), the first device being UE (performing authentication as a proxy), and the core network side device being denoted as a core network side as an example, the A-IoT, the UE, and the core network side may perform authentication processing using the same first shared key and the A-IoT ID. Specifically, after receiving the authentication request (which may carry the A-IoT ID) from the core network side, the UE generating the RES' (i.e., the first response) needs to include the Kr of the A-IoT device or the shared key (i.e., the first shared key) to achieve the purpose of authentication. A possible calculation manner RES' is schematically illustrated in FIG. 5a: RES' = HASH (Kue ∥ Kr, A-IoT ID, UE ID, nonce1). Parameters in this formula have the same meaning as those in the afore embodiment, and will not be described again. The core network generates XRES' (i.e., the aforementioned first expected response) in the same manner as the UE, and verifies that RES' = XRES' to complete the authentication of the IoT device. Before the UE calculates the first response, the A-IoT device may also authenticate the UE such as physical layer authentication. The A-IoT device may also be replaced with a zero-power device, and the A-IoT ID in the above formula may also be replaced with a tag ID, which will not be described here again. It should also be noted regarding FIG. 5a that the core network side may calculate the XRES' before transmitting the authentication request (for example, as shown in the first dashed box of the core network side in FIG. 5a), or the core network side may calculate the XRES' after receiving the acknowledgement (carrying the RES') from the UE (as shown in the second dashed box of the core network side in FIG. 5a). The execution timing of the core network side specifically calculating the XRES' is not limited in this example. Further, the shared key may be derived from the root key Kr of the A-IoT device. In the processing that the A-IoT device authenticates the UE by way of physical layer authentication, the A-IoT device may need to perform part of authentication calculation.

Exemplary description is made to the above authentication method with reference to FIG. 5b. With the second device being A-IoT (i.e., an A-IoT device), the first device being a first access network device (such as the gNB in FIG. 5b), and the core network side device being denoted as a core network side as an example, the A-IoT, the gNB, and the core network side may perform authentication processing using the same first shared key and the A-IoT ID. Specifically, after receiving the authentication request (which may carry the A-IoT ID) from the core network side, the gNB generating the RES' (i.e., the first response) needs to include the Kr of the A-IoT device or the shared key (i.e., the first shared key) to achieve the purpose of authentication. A possible calculation manner of RES' is schematically illustrated in FIG. 5b: RES' = HASH (Kue ∥ Kr, A-IoT ID, gNB ID, nonce1). Parameters in this formula have the same meaning as those in the afore embodiment, and will not be described again. The core network generates XRES' (i.e., the aforementioned first expected response) in the same manner as the gNB, and verifies that RES' = XRES' to complete the authentication of the IoT device. Before the gNB calculates the first response, the A-IoT device may also authenticate the gNB. The A-IoT device may also be replaced with a zero-power device, and the A-IoT ID in the above formula may also be replaced with a tag ID, which will not be described here again. It should also be noted regarding FIG. 5b that the core network side may calculate the XRES' before transmitting the authentication request to the gNB (for example, as shown in the first dashed box of the core network side in FIG. 5b), or the core network side may calculate the XRES' after receiving the acknowledgement (carrying the RES') from the gNB (as shown in the second dashed box of the core network side in FIG. 5b). The execution timing of the core network side specifically calculating the XRES' is not limited in this example. Further, the shared key may be derived from the root key Kr of the A-IoT device. In the processing that the A-IoT device authenticates the gNB, the A-IoT device may need to perform part of authentication calculation.

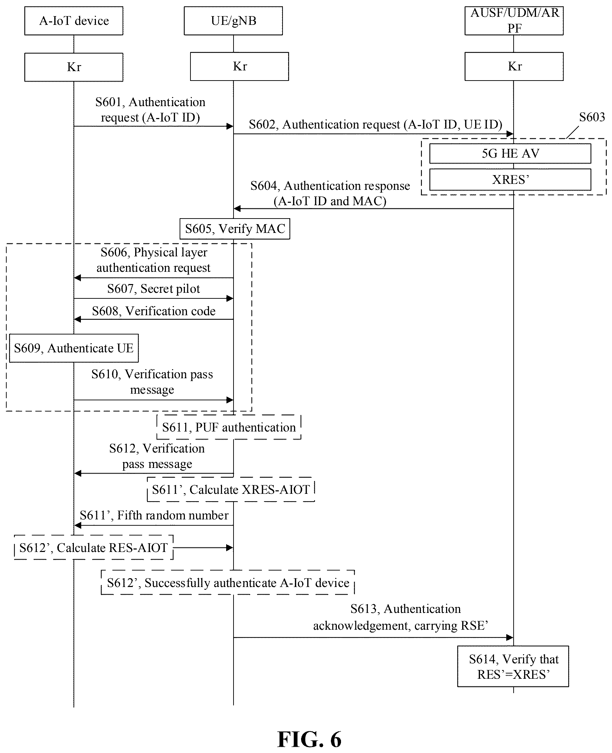

Referring to FIG. 6, the authentication method according to the above embodiment will be exemplarily described. In FIG. 6, a scenario of one second device is taken as an example. The second device is denoted as an A-IoT device. The first device is a terminal device or a first access network device, and the first device is denoted as a UE/gNB (that is, the first device is a UE or gNB), and the first shared key is a root key Kr. The core network side device is merged as a core network side network element, and is denoted as AUSF/UDM/ARPF in FIG. 6 for simplicity. In the authentication method of FIG. 6, UE authenticates an A-IoT device according to a root key. The processing procedure of FIG. 6 is summarized as follows. Preset conditions are used: the A-IoT device shares the root key Kr of the A-IoT device with the UE/gNB and a core network side network element. The authentication method includes: the UE generates RES', and the generation of RES' needs to involve the Kr of the A-IoT or the shared key of the A-IoT to achieve the purpose of authentication. The specific method is any one of the following: RES' = HASH (Kr, Tag ID, UE ID, nonce1), RES' = f2 (Kr, Tag ID, UE ID, nonce1), RES' = HASH (Kr, Tag ID, UE ID, RES, nonce1), where the tag ID may be replaced with the A-IoT ID. The core network side network element uses the same method to generate XRES', and verifies that RES' = XRES' to complete the authentication of the IoT device. Alternatively, the authentication method includes: the gNB generates RES', and the generation of RES' needs to involve the Kr of the A-IoT or the shared key of the A-IoT to achieve the purpose of authentication. The specific method is any one of the following: RES' = HASH (Kr, Tag ID, gNB ID, nonce1), RES' = f2 (Kr, Tag ID, gNB ID, nonce1), RES' = HASH (Kr, Tag ID, gNB ID, RES, nonce1), where the tag ID may be replaced with the A-IoT ID. The core network side network element uses the same method to generate XRES', and verifies that RES' = XRES' to complete the authentication of the IoT device.

The specific processing procedure of FIG. 6 includes following:
At S601, the A-IoT device transmits an authentication request to the UE/gNB. The authentication request carries the A-IoT ID. Here, the UE may be relay UE or proxy UE.

Optionally, the procedure may further include S600 before S601. In S600, the UE/gNB triggers the AIoT device. For example, the UE/gNB may transmit a trigger message to the AIoT device to trigger the AIoT device to transmit the authentication request.

At S602, the UE/gNB forwards the authentication request to an AUSF. The authentication request carries the A-IoT ID and UE ID.

At S603, the AUSF/UDM/ARPF calculates XRES' (i.e., first expected response).

Specifically, the AUSF checks whether a whitelist includes a binding relationship between the UE/gNB and the A-IoT device, and whether the UE/gNB can provide a wireless connection or a relay connection for the A-IoT device. If a check result is "yes", the procedure proceed to the next operation, if the check result is "not", the procedure is suspended. The AUSF transmits the authentication request carrying the A-IoT ID to the UDM/ARPF. The UDM/ARPF performs 5G AKA to calculate the 5G HE AV of the A-IoT. The the 5G HE AV includes a MAC, an XRES, a KAUSF, and a RAND. The UDM/ARPF calculates XRES' and transmits same to the AUSF.

If the first device is UE, the calculation of XRES' may include XRES' = HASH (Kr, A-IoT ID, UE ID, nonce1). If the first device is a gNB, the calculation of XRES' may include XRES' = HASH (Kr, A-IoT ID, gNB ID, nonce1). Other possible calculation formulas are the same as those in the above embodiment, and will not be described again.

At S604, the AUSF transmits an authentication response to the UE/gNB. The authentication response carries the A-IoT ID and a MAC (i.e., the first message authentication code). The authentication response may be the second message in the above embodiment.

At S605, the UE/gNB calculates a RES, a MAC, and a KAUSF according to Kr, and the UE verifies the MAC to successfully complete the authentication of the core network side.

Optionally, the A-IoT device performs physical layer authentication of the UE based on Kr: at S606, the UE/gNB transmits a physical layer authentication request to the A-IoT device. At S607, the A-IoT device transmits a secret pilot to the UE. At S608, the UE/gNB calculates a verification code based on Kr and the secret pilot, and the UE/gNB transmits the verification code to the A-IoT device. At S609, the A-IoT device successfully authenticates the UE/gNB based on the verification code. At S610, the A-IoT device transmits an authentication pass message to the UE/gNB.

Optionally, the UE/gNB authenticates the A-IoT device, for example, the A-IoT device may be authenticated by the PUF principle, including: at S611, the UE/gNB may authenticate the A-IoT device according to the PUF principle. At S612, after authenticating the A-IoT device according to the PUF principle, the UE/gNB transmits a verification pass message.

Optionally, authentication of the AIOT device by the UE/gNB may be realized by calculating a third expected response (XRES-AIOT) of the AIOT device, which for example, may include: at S611', the UE/gNB calculates the XRES-AIOT according to the Kr or the KAUSF-A, and transmits a fifth random number used in calculating the XRES-AIOT to the A-IoT device. The method of calculating the XRES-AIOT in this operation is the same as that in the above embodiment, and will not be described again. At S612', the A-IoT device calculates a RES-AIOT according to the Kr and transmits same to the UE/gNB, and the UE/gNB verifies that XRES-AIOT = RES-AIOT, to successfully authenticate the A-IoT device.

At S613, the UE/gNB transmits an authentication acknowledgement to the AUSF. The authentication acknowledgement carries an RSE'. The method of calculating RES' by the UE/gNB has been described in detail in the above embodiment, and will not be described again.

At S614, the AUSF verifies that RES'= XRES', to successfully verify the A-IoT device.

It is to be noted that, the above S613 and S614 may be executed after the authentication of the core network side is successfully completed by executing S605, and S606 to S612 may not be executed, and/or S611 to S612 may not be executed, and/or S611' to S612' may not be executed. Alternatively, the above S613 and S614 may be executed after the authentication of the core network side is successfully completed in S605 and after the above S610 is completed. That is, the above S611 to S612 may not be executed and/or S611' to S612' may not be executed. Alternatively, the above S613 and S614 may be executed after the authentication of the core network side is successfully completed in S605, after the above S610 is completed, and S612 is further completed, in which case, S611' to S612' are not executed. Alternatively, the above S613 and S614 may be executed after the authentication of the core network side is successfully completed in S605, after the above S610 is completed, and S612' is further completed, in which case, S611 to S612 are not executed.

It should also be noted that the authentication response in S604 in the above processing may carry various random numbers (such as the first random number, the second random number, and the like in the above embodiment, and no exhaustive enumeration is made); accordingly, the authentication acknowledgement in S613 carries only RES'. Alternatively, the authentication response in S604 in the above processing may carry no random number; accordingly, in addition to RES', the authentication acknowledgement in S613 may further carry various random numbers for calculating RES'.

Still in conjunction with FIG. 6, another exemplary description of the authentication method is made. In another example, 5G AKA may be performed according to the second shared key of the UE (which may be for example the root key KAUSF-UE of the UE) to complete the authentication of the network.

S601 to S602 in this example are the same as those in the above example, and will not be described again.

The processing that the AUSF/UDM/ARPF calculates XRES' (i.e., the first expected response) in S603 may be the following in this example: the UE/gNB and the network perform 5G AKA according to the root key of the UE/gNB, to obtain the 5G HE AV of the UE, and to complete the authentication of the network. Specifically, the AUSF checks whether a whitelist includes a binding relationship between the UE/gNB and the A-IoT device, and whether the UE/gNB can provide a wireless connection or a relay connection for the A-IoT device. If a check result is "yes", the AUSF transmits the authentication request carrying the UE ID (or gNB ID) to the UDM/ARPF. The UDM performs 5G AKA to calculate the 5G HE AV of the UE (or gNB), including the MAC, the XRES, the XRES', the KAUSF-UE, and the RAND, and transmits the 5G HE AV to the AUSF. If the check result is "not", the procedure is suspended.

In addition, in this example, the root key of the UE/gNB is also added to the processing of calculating the XRES'. The processing may include, for example, one of following: XRES' = f2(KAUSF-UE ∥Kr, A-IoT ID, UE ID, nonce1), XRES' = HASH(KAUSF-UE ∥Kr, A-IoT ID, UE ID, nonce1), XRES' = f2(KAUSF-UE ∥KAUSF-A, A-IoT ID, UE ID, nonce1), XRES' = HASH(KAUSF-UE ∥KAUSF-A, A-IoT ID, UE ID, nonce1), XRES' = f2(KAUSF-UE ∥Kr, A-IoT ID, gNB ID, nonce1), XRES' = HASH(KAUSF-UE ∥Kr, A-IoT ID, gNB ID, nonce1), XRES' = f2(KAUSF-UE ∥KAUSF-A, A-loT ID, gNB ID, nonce1), or XRES' = HASH(KAUSF-UE ∥KAUSF-A, A-IoT ID, gNB ID, nonce1), The above ∥ may be replaced by an algorithm such as an exclusive OR algorithm, and the parameters of each of the formulas have the same meanings as those in the above embodiment, and will not be described again.

The processing of S604 to S612 or S604 to S612' in this example are the same as those in the above example, and will not be described again.

In the processing of S613, the UE/gNB calculates RES' in the same manner as the XRES' is calculated above, and will not be described again.

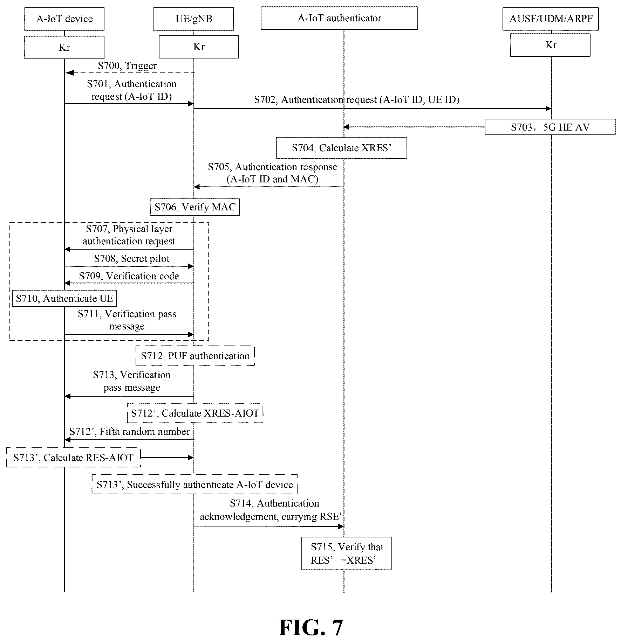

In conjunction with FIG. 7, another exemplary description of the foregoing authentication method is made still with one second device as an example, and an authentication network element (i.e., an authentication device) A-IoT authenticator is added to the example of FIG. 7. In FIG. 7, the second device is an A-IoT device, the first device is a UE/gNB, the first network device is an A-IoT authenticator, and the core network side device(s) other than the first network device is denoted as AUSF/UDM/ARPF. In the example of FIG. 7, the A-IoT authenticator generates the random number nonce2 (i.e., the third random number described above), generates the KA-IoT (i.e., the second intermediate key) according to the KAUSF-A (i.e., the first shared key), and generates the XRES' according to the KA-IoT.

Optionally, at S700, the UE/gNB triggers the AIoT device. For example, the UE/gNB may transmit a trigger message to the AIoT device to trigger the AIoT device to transmit the authentication request.

In the specific processing procedure, the processing of S701 to S702 is the same as that of S601 to S602 described above, and will not be described again.

At S703, the AUSF/UDM/ARPF calculates the 5G HE AV and transmits same to the A-IoT authenticator. For example, the AUSF transmits the 5G HE AV (including XRES, that is, the aforementioned second expected response, including the MAC) to the authentication network element A-IoT authenticator. The A-IoT authenticator may be a base station, an AMF, a SEAF, a UPF, a service server, an A-IoT network element, or the like.

At S704, the A-IoT authenticator calculates an XRES' (i.e., the first expected response).

Optionally, the A-IoT authenticator generates a random number nonce2, generates the KA-IoT according to the KAUSF-A, and generates the XRES' according to the KA-IoT, and the A-IoT authenticator replaces the XRES in the 5G HE AV with XRES' and saves the 5G HE AV locally. Alternatively, the AUSF generates a random number nonce2, generates the KA-IoT according to the KAUSF-A, generates XRES' according to the KA-IoT, and transmits XRES' to the A-IoT authenticator. The calculation manner of KA-IoT is the same as that in the above embodiment, and will not be described again. If the first device is UE, the calculation of the XRES' may include one of following: XRES' = f2 (KA-IoT, A-IoT ID, UE ID, nonce1), or XRES' = HASH (KA-IoT, A-IoT ID, UE ID, nonce 1). The various possible processing is the same as that in the above embodiment, and will not be described again. If the first device is a gNB, the calculation of the XRES' may include one of following: XRES' = f2 (KA-IoT, A-IoT ID, gNB ID, nonce1), or XRES' = HASH (KA-IoT, A-IoT ID, gNB ID, nonce1). The various possible processing is the same as that in the above embodiment, and will not be described again.

Optionally, the A-IoT authenticator performs 5G AKA according to the root key of the UE (i.e., KAUSF-UE). For example, the A-IoT authenticator generates a random number nonce2, generates a KUE (third intermediate key) according to the KAUSF-UE of the UE, and then calculates the XRES' according to the third intermediate key. The method of calculating the KUE is the same as that in the above embodiment, and will not be described again. Accordingly, the method of calculating the XRES' based on the KUE may include one of following: XRES' = f2 (KUE ∥ Kr, A-IoT ID, UE ID, nonce1), XRES' = HASH (KUE ∥ Kr, A-IoT ID, UE ID, nonce1), XRES' = f2 (KUE ∥ KAUSF-A, A-IoT ID, UE ID, nonce1), or XRES' = HASH (KUE ∥ KAUSF-A, A-IoT ID, UE ID, nonce1).

Optionally, the A-IoT authenticator performs 5G AKA according to the root key of the gNB (i.e., KAUSF-gNB). For example, the A-IoT authenticator generates a random number nonce2, generates a KUE (third intermediate key) according to the KAUSF-gNB of the gNB, and then calculates the XRES' according to the third intermediate key. The method of calculating KgNB is the same as that in the above embodiment, and will not be described again. Accordingly, the method of calculating the XRES' based on the KgNB may include one of following: XRES' = f2 (KgNB ∥ Kr, A-IoT ID, gNB ID, nonce1), XRES' = HASH (KgNB ∥ Kr, A-IoT ID, gNB ID, nonce1), XRES' = f2 (KgNB ∥ KAUSF-A, A-IoT ID, gNB ID, nonce1), or XRES' = HASH (KgNB ∥ KAUSF-A, A-IoT ID, gNB ID, nonce1).

The calculation manner of the XRES' may also be HASH (XRES, A-IoT authenticator ID, nonce1), which will not be described here.

The specific processing of S705 to S715 is the same as that specifically for S604 to S614 in the aforementioned example, except that the method of calculating the RES' is the same as that of calculating the XRES' in S704, and thus will not be described here again.

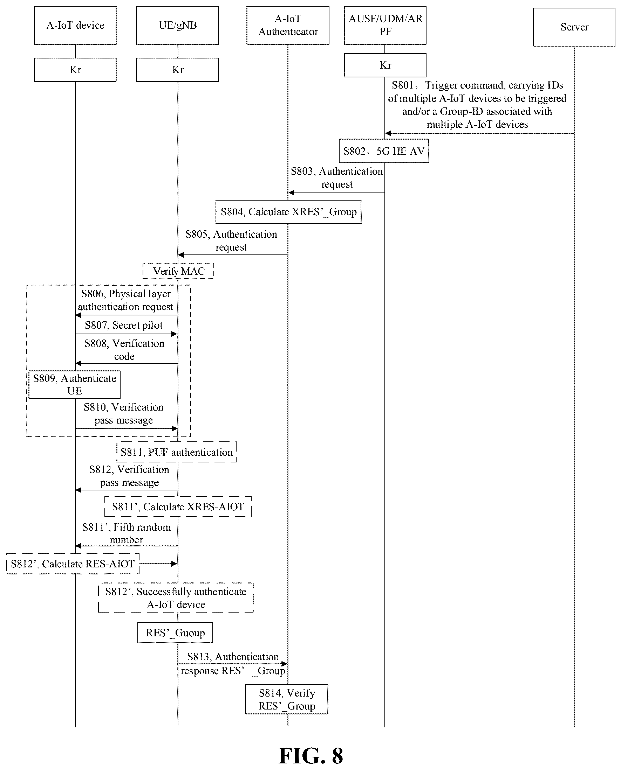

In conjunction with FIG. 8, another exemplary description of the foregoing authentication method is made still with a device group composed by multiple second devices as an example, and an authentication network element (i.e., an authentication device) A-IoT authenticator is also contained in the example of FIG. 8. FIG. 8 merely illustrates any one of multiple second devices, for the sake of brevity. The second device is denoted as an A-IoT device. In addition, the example in FIG. 8 is described with the first device being a UE/gNB, the first network device being an A-IoT authenticator, and the core network side device(s) other than the first network device being denoted as AUSF/UDM/ARPF.

At S801, a server transmits a trigger command. The trigger command carries IDs of multiple A-IoT devices to be triggered and/or a Group-ID associated with the multiple A-IoT devices.

At S802, the AUSF obtains the 5G HE AV of each A-IoT.

For example, the AUSF checks a whitelist, to find and determine a binding relationship(s) of the Group-ID and the A-IoT IDs, and find a UE ID (or gNB ID) bound to the Group-ID and the A-IoT IDs. These UE/gNBs can provide a wireless connection or a relay connection for the A-IoT device. An authentication network element A-IoT authenticator bound to the Group-ID and the A-IoT IDs are found. Further, the AUSF transmits an authentication request to the UDM/ARPF, carrying the A-IoT IDs, and/or the Group ID, an authenticator ID, and a UE ID; and the UDM/ARPF performs 5G AKA to calculate the 5G HE AV of the A-IoT, including MAC, XRES, KAUSF, and RAND, and transmits the 5G HE AC of each A-IoT device to the AUSF.

At S803, the AUSF transmits an authentication request to the A-IoT authenticator. Since the authentication is triggered by the server on the network side, the authentication request is transmitted to the A-IoT authenticator by the AUSF. The authentication request carries the 5G HE AV. The A-IoT authenticator may be a base station, an AMF, a SEAF, a UPF, a service server, an A-IoT network element, or the like.

At S804, the A-IoT authenticator calculates an XRES'_Group. For example, the A-IoT authenticator generates a random number nonce-i for each A-IoT device, generates KA-IoT-i based on the KAUSF-i, and generates an XRES'_Group based on the KA-IoT-i of each A-IoT device. The manner of calculating the XRES'-Group has been described in detail in the above embodiment, and will not be described again.

S805, the A-IoT authenticator transmits an authentication request to the UE/gNB. The authentication request carries each A-IoT ID, the MAC of each A-IoT, the A-IoT authenticator ID, and the like.

Optionally, after S805 is completed, at least one of following may be further performed: each A-IoT device performs physical layer authentication on the UE/gNB based on the Kr; the UE/gNB authenticates each A-IoT device; or the UE/gNB authenticates each AIoT device. Procedures of the various authentication processing between the UE/gNB and each A-IoT device, that is, S806 to S810, S811 to S812, and S811' to S812', are the same as those of S606 to S610, S611 to S612, and S611' to S612', and will not be described here again.

At S813, the UE/gNB transmits an authentication response to the A-IoT authenticator. The authentication response carries the RSE'-Group. The UE calculates the RES'-Group in the same manner as the XRES'-Group is calculated above.

At S814, the A-IoT Authenticator verifies that RES'_Group = XRES'_Group, to successfully authenticate a group of A-IoTs, trusts that the A-IoTs are not malicious devices, and also trusts data transmitted by the A-IoTs.

Optionally, the authentication request in S803 may further carry random numbers of A-IoT devices (for example, the first random number of the i^{th} A-IoT device is denoted as NONCE 1 i) and the XRES'_Group. That is, the AUSF generates a random number nonce1 for each A-IoT device, generates a KA-IoT based on the KAUSF-A, and generates an XRES'_Group based on the KA-IoTs of the A-IoT devices. The AUSF transmits an authentication request including the XRES'_Group to the A-IoT authenticator. Then, S805 is performed: the A-IoT authenticator forwards the authentication request including MAC, A-IoT authenticator ID, A-IoT ID-1... A-IoT ID-1, nonce-1... nonce-i, RAND to the UE.

Optionally, before the processing of S813, for example, before S806, the method may further include: the UE/gNB performs 5G AKA according to any Kr to calculate RES, MAC, and KAUSF, and the UE/gNB verifies the MAC, to successfully complete the authentication of the core network side.

Optionally, in S802, the calculation of the MAC may be calculating and generating a MAC_Group for the group of A-IoT devices, and the MAC_Group is carried in the authentication request in S805. Accordingly, the UE authenticating the MAC refers to the UE/gNB authenticating the MAC_Group. The method of calculating the MAC_Group is the same as that in the above embodiment, and will not be described again.

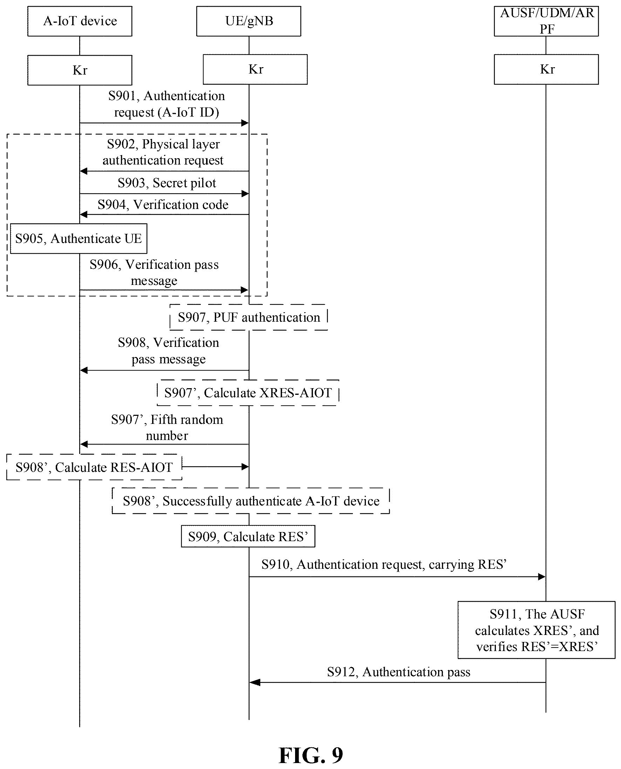

In conjunction with FIG. 9, another exemplary description of the foregoing authentication method is made still with one second device as an example. In FIG. 9, the second device is denoted as an A-IoT device, the first device is denoted as UE/gNB, and the core network side device is simplified as an AUSF/UDM/ARPF as an example.

At S901, the A-IoT device transmits an authentication request to the UE/gNB. The authentication request carries the A-IoT ID.

After completing S901, the A-IoT device and the UE/gNB may further perform at least one of following: the A-IoT device performs physical layer authentication on the UE/gNB based on Kr; the UE/gNB authenticates the A-IoT device; or the UE/gNB authenticates the AIoT device. Procedures of the various authentication processing between the UE and the A-IoT device, that is, S902 to S906, S907 to S908, and S907' to S908', are the same as those of S606 to S610, S611 to S612, and S611' to S612', and will not be described here again.

At S909, the UE/gNB generates each random number and calculates RES'. The calculation manner of the RES' is the same as that in the aforementioned embodiment, and will not be described again.

At S910, the UE/gNB transmits an authentication request to the AUSF, and the authentication request carries the RES'.

At S911, the AUSF calculates XRES', and verifies that RES' = XRES'. The calculation manner of the XRES' is the same as that in the above embodiment, which will not be described again.

At S912, in a case of authentication success, the AUSF transmits "authentication pass" to the UE.

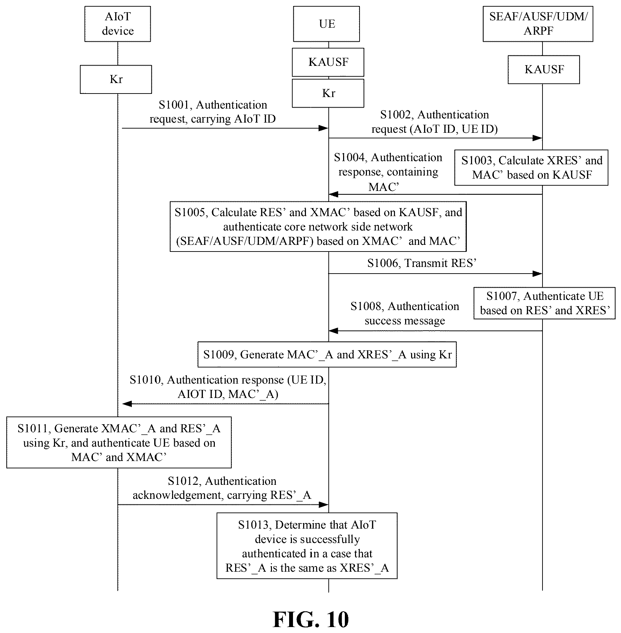

In conjunction with FIG. 10, another exemplary description of the foregoing authentication method is made with a second device being an A-IoT device as an example.

At S1001, the A-IoT device transmits an authentication request to UE. The authentication request carries an A-IoT ID. Here, the UE may be relay UE or proxy UE.

At S1002, the UE initiates an authentication request to a SEAF/AUSF/UDM/ARPF (core network side device). the authentication request carries UE ID and the AIoT ID.

In this example, the authentication request in S1002 may carry only one AloT ID. In some possible examples, if multiple AIoT devices all perform S1001, the authentication request in S1002 may carry multiple AIoT IDs. Additionally, the core network side device receiving the authentication request may be the AUSF, or may be at least one of: the SEAF, the UDM, or the ARPF. The core network side device receiving the authentication request is not limited or exhaustively enumerated here.

At S1003, the SEAF/AUSF/UDM/ARPF (core network side device) calculates XRES' (i.e., first expected response) and MAC' (i.e., first message authentication code) based on the root key of the UE (KAUSF shared by the UE and the core network side device).

For example, the SEAF/AUSF/UDM/ARPF checks whether a whitelist or subscription data includes a binding relationship between the UE and the A-IoT terminal, and whether the UE can provide a wireless connection or a relay connection for the A-IoT terminal. If a check result is "yes" (for example, the UE is an intermediate node of the A-IoT terminal, or the UE is a proxy device of the A-IoT terminal, or the UE is a service binding device for the A-IoT terminal, or the like), the processing of obtaining the XRES' and the MAC' is executed; otherwise, the procedure is suspended.

Optionally, the above processing of checking the binding relationship may be performed by the AUSF. If a check result is "yes", the processing of obtaining the XRES' and the MAC' performed by the AUSF may include: transmitting an authentication request to the UDM/ARPF, the authentication request carrying the UE ID and the A-IoT ID. The UDM/ARPF uses the root key of the UE (KAUSF-UE) to perform calculation similar to 5G AKA, so as to obtain the 5G HE AV of the UE, including MAC', XRES, XRES', KAUSF-UE, and RAND, and the UDM/ARPF transmits the 5G HE AV to the AUSF. The specific calculation manner of the XRES' and the MAC' are the same as those in the above embodiment, and will not be described again.

At S1004, the SEAF/AUSF/UDM/ARPF transmits an authentication response (i.e., the second message in the above embodiment) to the UE. The authentication response may contain the MAC'.

At S1005, the UE calculates RES' (first response) and XMAC' (second message authentication code) according to the root key of the UE (KAUSF shared by the UE and the core network side device), and the UE authenticates the core network side network (SEAF/AUSF/UDM/ARPF) based on the XMAC' and the MAC'. For example, in the case where the XMAC' is the same as the MAC', authentication of the core network side network is successfully completed, and then S1006 is executed. The specific calculation manners of the RES' and the XMAC' are the same as those in the above embodiment, and will not be described again.

At S1006, the UE transmits the RES' to the SEAF/AUSF/UDM/ARPF. The RES' may be carried by the first message in the above embodiment.

At S1007, the SEAF/AUSF/UDM/ARPF authenticates the UE based on the RES' and the XRES'. Specifically, in a case that the RES' is the same as the XRES', it is determined that the authentication of the UE is completed. The authorized UE may be UE providing a wireless connection or a relay connection for the A-IoT terminal, or there is a binding relationship between the UE and the A-IoT terminal, or the UE may connect to the A-IoT terminal for an appropriate service.

At S1008, the SEAF/AUSF/UDM/ARPF transmits an authentication success message to the UE.

After receiving the authentication success message, the UE starts authentication with the A-IoT terminal.

Optionally, the authentication may be performed in the authentication manner provided in each of the above examples.

Optionally, the authentication may be performed using the root key Kr of the A-IoT device. The root key of the A-IoT device is shared by the A-IoT device and the UE.

At S1009, the UE may generate MAC'_A (a verification code corresponding to the A-IoT device) and XRES'_A (a third expected response of the A-IoT device) using Kr, and specific calculation manners of the MAC'_A and the XRES'_A are the same as those in the above embodiment, and will not be described again.

At S1010, the UE transmits an authentication response to the A-IoT device. The authentication response carries the UE ID, the A-IoT ID, the MAC'_A, and nonce3 (i.e., the fifth random number). The authentication response may be referred to as an authentication response corresponding to the A-IoT device.

At S1011, the A-IoT device generates XMAC'_A (a check code corresponding to the A-IoT device) and RES'_A (a third response) using Kr, and authenticates the UE based on the MAC'_A and the XMAC'_A. Specifically, in a case that the MAC'_A is the same as the XMAC'_A, it is determined that the UE is successfully authenticated. The specific calculation manners of the XMAC'_A and the RES'_A are the same as those in the above embodiment, and will not be described again.

At S1012, the A-IoT device transmits an authentication acknowledgement to the UE. The authentication acknowledgement carries the RES'_A.

At S1013, in a case that RES'_A is the same as XRES'_A, the UE determines that the A-IoT device is successfully authenticated.

It should also be noted that the execution order of the above procedure may be adjusted. For example, the above S1009 to S1012 may be executed after S1001 and before S1002 instead. Alternatively, the above S1009 to S1012 may be also executed in other steps instead, and no limitation or exhaustive enumeration is made here.

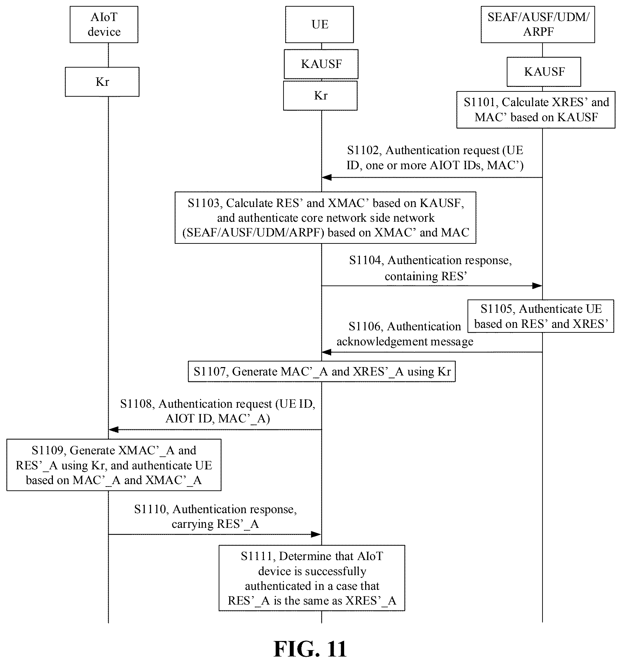

Another exemplary description of the above authentication method is provided in conjunction with FIG. 11.

At S1101, a SEAF/AUSF/UDM/ARPF (core network side device) calculates XRES' (i.e., a first expected response) and MAC' (i.e., a first message authentication code) based on a root key of UE (KAUSF shared by the UE and the core network side device).

At S1102, the SEAF/AUSF/UDM/ARPF (core network side device) transmits an authentication request (i.e., the second message in the above embodiment) to the UE. The authentication request may contain a UE ID, one or more A-IoT IDs (IDs of one or more A-IoT devices), and a MAC'.

At S1103, the UE calculates RES' (first response) and XMAC' (second message authentication code) according to the root key of the UE (KAUSF shared by the UE and the core network side device), and the UE authenticates the core network side network (SEAF/AUSF/UDM/ARPF) based on the XMAC' and the MAC'. For example, in the case that the XMAC' is the same as the MAC', authentication of the core network side network is successfully completed, and then S1104 is executed.

At S1104, the UE transmits the RES' to the SEAF/AUSF/UDM/ARPF by carrying the RES' in an authentication response. The authentication response may be the first message in the above embodiment.

At S1105, the SEAF/AUSF/UDM/ARPF authenticates the UE based on the RES' and the XRES'. Specifically, in a case that the RES' is the same as the XRES', it is determined that the authentication of the UE is completed. The authorized UE may be UE providing a wireless connection or a relay connection for the A-IoT terminal, or there is a binding relationship between the UE and the A-IoT terminal, or the UE may connect to the A-IoT terminal for an appropriate service.

At S1106, the SEAF/AUSF/UDM/ARPF transmits an authentication acknowledgement message to the UE.

After receiving the authentication acknowledgement message, the UE starts authentication with the A-IoT terminal.

At S1107, the UE may generate MAC'_A (a verification code corresponding to the A-IoT device) and XRES'_A (a third expected response of the A-IoT device) using Kr, and specific calculation manners of the MAC'_A and the XRES'_A are the same as those in the above embodiment, and will not be described again.

At S1108, the UE transmits an authentication request to an A-IoT device (which for example may be each of the one or more A-IoT devices, and only one A-IoT device is illustrated in FIG. 11 for brevity). The authentication request carries a UE ID, an A-IoT ID, a MAC'_A, nonce3 (i.e., a fifth random number). The authentication response may be referred to as an authentication response corresponding to the A-IoT device.

At S1109, the A-IoT device generates XMAC'_A (a check code corresponding to the A-IoT device) and RES'_A (a third response) using Kr, and authenticates the UE based on the MAC'_A and the XMAC'_A. Specifically, in a case that the MAC'_A is the same as the XMAC'_A, it is determined that the UE is successfully authenticated. The specific calculation manners of the XMAC'_A and the RES'_A are the same as those in the above embodiment, and will not be described again.

At S1110, the A-IoT device transmits an authentication response to the UE. The authentication response carries the RES'_A.

At S1111, in a case that RES'_A is the same as XRES'_A, the UE determines that the A-IoT device is successfully authenticated.

It can be seen that in the above authentication method, by transmitting a first response, a first device can enable a core network side device to perform authentication related to each second device. In this way, authentication with the network side can be performed by the first device acting as a proxy for the second device, thus while ensuring that the core network side device can authenticate the second device, complex operation at the second device side can be avoided, alleviating the calculation burden of the second device.

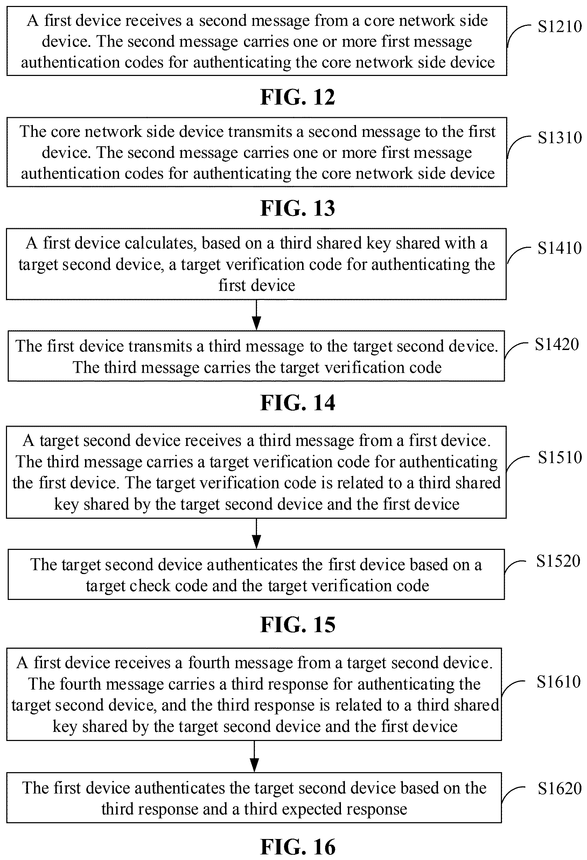

FIG. 12 illustrates a schematic flowchart of an authentication method according to an embodiment of the disclosure. The method may include at least part of the following content.

At S1210, a first device receives a second message from a core network side device. The second message carries one or more first message authentication codes for authenticating the core network side device.

FIG. 13 illustrates a schematic flowchart of an authentication method according to another embodiment of the disclosure. The method may include at least part of the following content.

At S1310, the core network side device transmits a second message to the first device. The second message carries one or more first message authentication codes for authenticating the core network side device.

The method at the first device side further includes following. The first device calculates a second message authentication code based on at least one shared key. The at least one shared key includes at least one of: one or more first shared keys, or a second shared key. Different first shared keys of the one or more first shared keys are shared by different second devices with the first device and the core network side device. The second shared key is shared by the first device and the core network side device. The first device authenticates the core network side device based on the second message authentication code and the one or more first message authentication codes.

The method at the core network side device side further includes following. The core network side device calculates the one or more first message authentication codes based on at least one shared key. The at least one shared key includes at least one of: one or more first shared keys, or a second shared key. Different first shared keys of the one or more first shared keys are shared by different second devices with the first device and the core network side device. The second shared key is shared by the first device and the core network side device.

In this embodiment, description of the first message authentication code, the second message authentication code, the first shared key, the second shared key, and related processing are the same as those in the above embodiment, and will not be repeated.

It should be noted that the processing of authenticating the core network side device in the authentication method according to this embodiment may be performed only. That is, in the simplest embodiment, the core network side device may be authenticated only by the first device instead of the one or more second devices.

If the one or more second devices trigger performing authentication, the first device may further perform processing of receiving authentication requests from the one or more second devices and transmitting the authentication requests to the core network side device. Accordingly, the core network side device may transmit a second message after receiving the authentication requests.

With FIG. 10 as an example, the processing of S1001 to S1005 may be executed only, and the processing of calculating RES' and calculating XRES' therein may not be executed, so as to realize that the first device authenticates the SEAF/AUSF/UDM/ARPF (core network side device) instead of one or more second devices (AIoT device);. In a case that the authentication is successful, the UE may also transmit an authentication acknowledgement to the SEAF/AUSF/UDM/ARPF (core network side device) to indicate authentication success, and/or the UE may transmit an authentication response to the AloT device to indicate that the authentication of the core network side device is completed.

If the core network side device triggers performing authentication, the core network side device may directly transmit a second message. The second message may also be used to request authentication.

With FIG. 11 as an example, the processing of S1101 to S1103 may be performed only, and the processing of calculating RES' and calculating XRES' therein may not be executed, so as to realize that the first device authenticates the SEAF/AUSF/UDM/ARPF (core network side device) instead of one or more second devices. In a case that the authentication is successful, the UE may also transmit an authentication response to the SEAF/AUSF/UDM/ARPF (core network side device) to indicate authentication success. Optionally, in a case that the authentication is successful, the UE may transmit an authentication response to the AIoT device to indicate that the authentication of the core network side device is completed.

In this embodiment, the first device may also perform authentication with each second device, and the specific processing method is the same as that in the above embodiment, which will not be described again.

It can be seen that in the above authentication method, the first device may receive one or more first message authentication codes from the core network side device to authenticate the core network side device. In this way, it can be realized that the first device, as a proxy for the second device, authenticates the network side, and complex calculation on the second device side can also be avoided, thereby alleviating the calculation burden of the second device.

FIG. 14 illustrates a schematic flowchart of an authentication method according to an embodiment of the disclosure. The method may include at least part of the following content.

At S1410, a first device calculates, based on a third shared key shared with a target second device, a target verification code for authenticating the first device.

At S1420, the first device transmits a third message to the target second device. The third message carries the target verification code.

FIG. 15 illustrates a schematic flowchart of an authentication method according to another embodiment of the disclosure. The method may include at least part of the following content.

At S1510, a target second device receives a third message from a first device. The third message carries a target verification code for authenticating the first device. The target verification code is related to a third shared key shared by the target second device and the first device.

At S1520, the target second device authenticates the first device based on a target check code and the target verification code.

The method further includes: the target second device calculates the target check code based on the third shared key and at least one of: a fifth random number, an identifier of the target second device, or an identifier of the first device.

In this embodiment, description of the calculation of the target authentication code, calculation of the target check code or the like performed by the first device and the target second device, description of the third shared key, the interaction flow between the first device and the target second device and related messages are the same as those in the above embodiment, and thus will not be described again.

By means of the authentication method, the second device may realize verification of the first device by authenticating the first device the target authentication code of the first device, thereby accessing the core network side through the first device. In this way, the second device can realize the authentication without performing more complicated interaction with the core network side, avoiding complex calculation on the second device side, thereby alleviating calculation burden of the second device.

FIG. 16 illustrates a schematic flowchart of an authentication method according to an embodiment of the disclosure. The method may include at least part of the following content.

At S1610, a first device receives a fourth message from a target second device. The fourth message carries a third response for authenticating the target second device, and the third response is related to a third shared key shared by the target second device and the first device.

At S1620, the first device authenticates the target second device based on the third response and a third expected response.

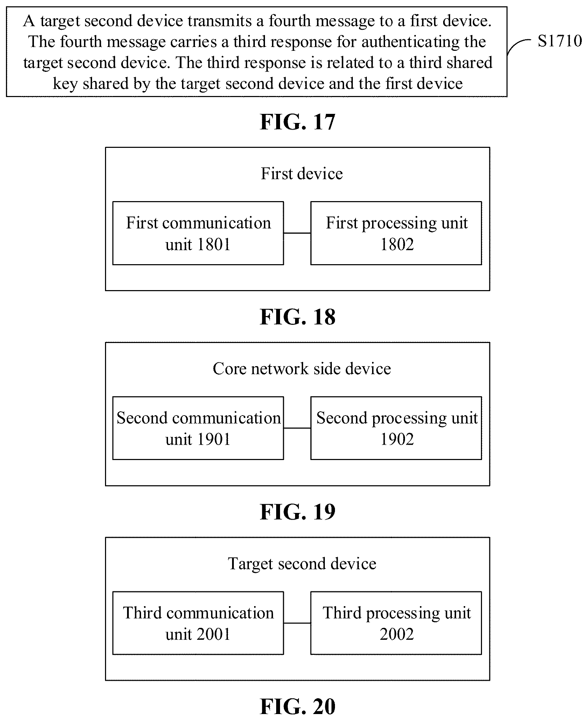

FIG. 17 illustrates a schematic flowchart of an authentication method according to another embodiment of the disclosure. The method may include at least part of the following content.

At S1710, a target second device transmits a fourth message to a first device. The fourth message carries a third response for authenticating the target second device. The third response is related to a third shared key shared by the target second device and the first device.

The method further includes: the target second device calculates the third response based on the third shared key and at least one of: a fifth random number, an identifier of the target second device, or an identifier of the first device.

In this embodiment, description of the calculation of the third response, the third expected response or the like performed by the first device and the target second device, description of the third shared key, the interaction flow between the first device and the target second device and related messages are the same as those in the above embodiment, and thus will not be described again.

By means of the authentication method, authentication of the second device can be realized between the first device and the second device through an expected response. In this way, the second device can realize the authentication without performing more complicated interaction with the core network side, avoiding complex calculation on the second device side, thereby alleviating calculation burden of the second device.

Finally, the beneficial effects of the solution provided by this embodiment will be described in combination with the related art.

Ambient IoT is a new type of IoT terminal studied by 3GPP R19, and is an IoT device powered by energy harvesting with no battery or limited energy storage capabilities. The ambient IoT has extremely low device cost and extremely limited computing power. There are currently two of network architecture in the industry for the ambient IoT, which can be summarized as a direct mode and an indirect mode.

In the related art, when accessing a 5G network, UE must perform authentication and key negotiation processes to successfully access the 5G network and use network resources, and the network authorizes the UE to use network resources and services according to an authentication result. The 3GPP security series standards define the 5G AKA process and use cryptographic algorithms. The authentication and authorization credential used in the AKA procedure of the UE is a symmetric root key K, which is stored by the UDM/ARPF network element of the core network in a centralized manner on the network side. Each time of authorization requires the authorization credential being acquired at the UDM, and the corresponding authentication calculation being completed by the core network.

Through the above analysis, it can be seen that the functions used in the AKA authentication procedure and the key negotiation procedure in the related art have high calculation complexity and a complex key architecture, which are not suitable for security authentication of an A-IoT device, and do not support authentication and key negotiation between the A-IoT device and the UE/gNB. Authentication and key negotiation performed between a tag and a reader cannot support authentication and key negotiation between the A-IoT device and the network. Compared with the above related technologies, in the above various embodiments of the disclosure, the A-IoT device completes authentication calculation through a first device (which may be a terminal or an access network device), and mutual authentication between the network and the A-IoT device is performed through the first device, which has the advantage that the A-IoT device has no need to perform complex authentication calculation. Moreover, the first device can complete calculation of the authentication parameter RES' by acting as a proxy for a group of A-IoT devices, enabling the network to complete authentication of a group of A-IoT devices by one procedure, improving the authentication efficiency of the group of A-IoT devices. Through the method of the first device performing authentication as a proxy, the first device is supported to manage the security procedure of the A-IoT device, the capability of the first device is improved, and the flexibility and security management efficiency are enhanced.

FIG. 18 illustrates a schematic diagram of composition of a first device according to an embodiment of the disclosure.

The first device includes a first communication unit 1801. The first communication unit 1801 configured to transmit a first message to a core network side device. The first message carries a first response used by the core network side device to perform authentication related to one or more second devices.

The first device further includes a first processing unit 1802. The first processing unit 1802 is configured to calculate the first response based on at least one shared key. The at least one shared key includes at least one of: one or more first shared keys, or a second shared key. Different first shared keys of the one or more first shared keys are shared by different second devices with the first device and the core network side device. The second shared key is shared by the first device and the core network side device.

The first processing unit is configured to calculate the first response based on identifiers of the one or more second devices, and the one or more first shared keys,. The first response is used by the core network side device to authenticate the one or more second devices.

The first processing unit is configured to calculate the first response based on the identifiers of the one or more second devices, the one or more first shared keys, an identifier of the first device, and one or more first random numbers.

The first processing unit is configured to perform one of: calculating, using a first calculation mode, the first response based on the identifiers of the one or more second devices, the one or more first shared keys, the identifier of the first device, and the one or more first random numbers; obtaining one or more intermediate keys based on the one or more first shared keys, and calculating, using the first calculation mode, the first response based on the identifiers of the one or more second devices, the one or more intermediate keys, the identifier of the first device, and the one or more first random numbers; or calculating one or more first intermediate responses based on the identifiers of the one or more second devices, the one or more first shared keys, the identifier of the first device, and the one or more first random numbers, and calculating the first response based on the one or more first intermediate responses.

The first processing unit is configured to perform one of: calculating, using the first calculation mode, the first response based on one or more second responses, the identifiers of the one or more second devices, the one or more first shared keys, the identifier of the first device, and the one or more first random numbers, the one or more second responses being obtained based on one or more second random numbers; calculating, using the first calculation mode, the first response based on the second shared key, the identifiers of the one or more second devices, the one or more first shared keys, the identifier of the first device, and the one or more first random numbers; or calculating a third intermediate key based on the second shared key, an identifier of a first network device, and a third random number, and calculating, using the first calculation mode, the first response based on the third intermediate key, the identifiers of the one or more second devices, the one or more first shared keys, the identifier of the first device, and the one or more first random numbers.

The first processing unit is configured to perform one of: obtaining one or more first intermediate keys based on the one or more first shared keys, and calculating, using the first calculation mode, the first response based on one or more second responses, the identifiers of the one or more second devices, the one or more first intermediate keys, the identifier of the first device, and the one or more first random numbers, the one or more second responses being obtained based on one or more second random numbers; obtaining the one or more intermediate keys based on the one or more first shared keys, and calculating, using the first calculation mode, the first response based on the second shared key, the identifiers of the one or more second devices, the one or more first intermediate keys, the identifier of the first device, and the one or more first random numbers, the second shared key being shared by the first device and the core network side device; calculating one or more second intermediate keys based on the one or more first shared keys, an identifier of a first network device, and one or more fourth random numbers, and calculating, using the first calculation mode, the first response based on the identifiers of the one or more second devices, the one or more second intermediate keys, the identifier of the first device, and the one or more first random numbers; or obtaining a third intermediate key based on the second shared key, the identifier of the first network device, and a third random number, obtaining the one or more first intermediate keys based on the one or more first shared keys, and calculating, using the first calculation mode, the first response based on the third intermediate key, the identifiers of the one or more second devices, the one or more first intermediate keys, the identifier of the first device, and the one or more first random numbers.

The first processing unit is configured to perform one of: calculating, using the first calculation mode, the one or more first intermediate responses respectively based on one or more second responses, the identifiers of the one or more second devices, the one or more first shared keys, the identifier of the first device, and the one or more first random numbers, the one or more second responses being obtained based on one or more second random numbers; calculating, using the first calculation mode, the one or more first intermediate responses respectively based on the second shared key, the identifiers of the one or more second devices, the one or more first shared keys, the identifier of the first device, and the one or more first random numbers; calculating a third intermediate key based on the second shared key, an identifier of a first network device, and a third random number, and calculating, using the first calculation mode, the one or more first intermediate responses respectively based on the third intermediate key, the identifiers of the one or more second devices, one or more first intermediate keys, the identifier of the first device, and the one or more first random numbers; obtaining the one or more first intermediate keys respectively based on the one or more first shared keys, and calculating, using the first calculation mode, the one or more first intermediate responses respectively based on the one or more second responses, the identifiers of the one or more second devices, the one or more first intermediate keys, the identifier of the first device, and the one or more first random numbers; obtaining the one or more first intermediate keys based on the one or more first shared keys, and calculating, using the first calculation mode, the one or more first intermediate responses respectively based on the second shared key, the identifiers of the one or more second devices, the one or more first intermediate keys, the identifier of the first device, and the one or more first random numbers; calculating one or more second intermediate keys based on the one or more first shared keys, the identifier of the first network device, and one or more fourth random numbers, and calculating, using the first calculation mode, the one or more first intermediate responses respectively based on the identifiers of the one or more second devices, the one or more second intermediate keys, the identifier of the first device, and the one or more first random numbers; or obtaining the third intermediate key based on the second shared key, the identifier of the first network device, and a third random number, obtaining the one or more first intermediate keys based on the one or more first shared keys, and calculating, using the first calculation mode, the one or more first intermediate responses respectively based on the third intermediate key, the identifiers of the one or more second devices, the one or more first intermediate keys, the identifier of the first device, and the one or more first random numbers.

The first processing unit is configured to calculate, using the first calculation mode, the first response based on the one or more first intermediate responses and at least one of: an identifier of a first network device, or a third random number.

The first communication unit is configured to receive the one or more first shared keys.

The first processing unit is configured to calculate the first response based on the second shared key and at least one of following parameters: an identifier of the first device, identifiers of the one or more second devices, or an identifier of a first network device. The first response is used by the core network side device to authenticate the first device serving as an intermediate node for the one or more second devices.

The first communication unit is configured to receive a second message from the core network side device. The second message carries at least one of: identifiers of the one or more second devices, or an identifier of a device group. The device group includes multiple second devices.

The second message further carries one or more first message authentication codes for authenticating the core network side device. The first processing unit is configured to calculate a second message authentication code based on the at least one shared key, and authenticate the core network side device based on the second message authentication code and the one or more first message authentication codes.

The second message carries a first message authentication code. The first processing unit 1602 is configured to calculate the second message authentication code based on the at least one shared key and at least one of following parameters: an identifier of a first network device, identifiers of the one or more second devices, or an identifier of the first device.

The second message carries the one or more first message authentication codes. The first processing unit 1602 is configured to: calculate the second message authentication code based on a first shared key corresponding to a target second device among the one or more second devices; and authenticate the core network side device based on the target second message authentication code and a target first message authentication code of the one or more first message authentication codes. The target first message authentication code is associated with the target second device.

The first communication unit is configured to transmit an authentication request to the core network side device. The authentication request carries the identifiers of the one or more second devices.

The second message is used for requesting authentication.

The first communication unit is configured to receive an authentication request from each of the one or more second devices. The authentication request carries an identifier of the second device.

The first communication unit is configured to transmit a third message to a target second device among the one or more second devices. The third message is used for instructing the target second device to authenticate the first device. The first communication unit is configured to receive a pilot signal transmitted by the target second device; transmit the target verification code to the target second device; and receive a fourth message from the target second device. The fourth message indicates an authentication result of the target second device for the first device.

The first processing unit is configured to calculate a target verification code corresponding to the target second device based on the pilot signal transmitted by the target second device.

The first processing unit is configured to calculate, based on a third shared key shared with a target second device among the one or more second devices, a target verification code for authenticating the first device.

The first communication unit is configured to transmit a third message to the target second device. The third message carries the target verification code.

The first processing unit is configured to calculate the target verification code for authenticating the first device based on the third shared key shared with the target second device among the one or more second devices and at least one of: a fifth random number, the identifier of the target second device, or an identifier of the first device.

The first communication unit is configured to receive a fourth message from a target second device among the one or more second devices. The fourth message carries a third response for authenticating the target second device, and the third response is related to a third shared key shared by the target second device and the first device.

The first processing unit is configured to authenticate the target second device based on the third response and a third expected response.

The first processing unit is configured to calculate the third expected response based on the third shared key and at least one of following parameters: a fifth random number, an identifier of the target second device, or an identifier of the first device.

The first communication unit is configured to receive binding information from a fourth network device. The binding information includes one or more second devices having a binding relationship with the first device; and/or the first processing unit 1602 is configured to determine, based on preset binding information, the one or more second devices having the binding relationship; and/or the first device takes the one or more second devices that have passed the authentication as the one or more second devices having the binding relationship. The authentication includes physical layer authentication and/or air interface authentication.

The first device includes at least one of: a terminal device, or a first access network device. The second device is an ambient Internet of Things (AIoT) device. The first network device includes one of: an authentication server function (AUSF), or an authentication device. The authentication device includes one of: a second access network device, an access and mobility management function (AMF), a security anchor function (SEAF), a user plane function (UPF), a service server, or an AIoT network element.

FIG. 19 illustrates a schematic diagram of composition of a core network side device according to an embodiment of the disclosure. The core network side device includes a second communication unit 1901.

The second communication unit 1901 is configured to receive a first message from a first device. The first message carries a first response used by the core network side device to perform authentication related to one or more second devices.

The core network side device further includes a second processing unit 1902. The second processing unit 1902 is configured to perform authentication related to the one or more second devices based on a first expected response and the first response. The first expected response is calculated based on at least one first shared key. The at least one shared key includes at least one of: one or more first shared keys, or a second shared key. Different first shared keys of the one or more first shared keys are shared by different second devices with the first device and the core network side device. The second shared key is shared by the first device and the core network side device.

The second processing unit is configured to calculate the first expected response based on the at least one shared key.

The second processing unit is configured to calculate the first expected response based on the identifiers of the one or more second devices, and the one or more first shared keys; and performing authentication of the one or more second devices based on the first expected response and the first response.

The second processing unit is configured to perform one of: calculating, using a first calculation mode, the first expected response based on the identifiers of the one or more second devices, the one or more first shared keys, an identifier of the first device, and one or more first random numbers; obtaining one or more intermediate keys based on the one or more first shared keys, and calculating, using the first calculation mode, the first expected response based on the identifiers of the one or more second devices, the one or more intermediate keys, the identifier of the first device, and the one or more first random numbers; or calculating one or more second intermediate responses based on the identifiers of the one or more second devices, the one or more first shared keys, the identifier of the first device, and the one or more first random numbers, and calculating the first expected response based on the one or more second intermediate responses.

The second processing unit is configured to perform one of: calculating, using the first calculation mode, the first expected response based on one or more second expected responses, the identifiers of the one or more second devices, the one or more first shared keys, the identifier of the first device, and the one or more first random numbers, the one or more second expected responses being obtained based on one or more second random numbers; calculating, using the first calculation mode, the first expected response based on the second shared key, the identifiers of the one or more second devices, the one or more first shared keys, the identifier of the first device, and the one or more first random numbers; or calculating a third intermediate key based on the second shared key, an identifier of a first network device, and a third random number, and calculating, using the first calculation mode, the first expected response based on the third intermediate key, the identifiers of the one or more second devices, the one or more first shared keys, the identifier of the first device, and the one or more first random numbers.

The second processing unit is configured to perform one of: obtaining one or more first intermediate keys based on the one or more first shared keys, and calculating, using the first calculation mode, the first expected response based on one or more second responses, the identifiers of the one or more second devices, the one or more first intermediate keys, the identifier of the first device, and the one or more first random numbers, the one or more second expected responses being obtained based on one or more second random numbers; obtaining, the one or more first intermediate keys based on the one or more first shared keys, and calculating, using the first calculation mode, the first expected response based on the second shared key, the identifiers of the one or more second devices, the one or more first intermediate keys, the identifier of the first device, and the one or more first random numbers; calculating one or more second intermediate keys based on the one or more first shared keys, an identifier of a first network device, and one or more fourth random numbers, and calculating, using the first calculation mode, the first expected response based on the identifiers of the one or more second devices, the one or more second intermediate keys, the identifier of the first device, and the one or more first random numbers; or obtaining a third intermediate key based on the second shared key, the identifier of the first network device, and a third random number, obtaining the one or more first intermediate keys based on the one or more first shared keys, and calculating, using the first calculation mode, the first expected response based on the third intermediate key, the identifiers of the one or more second devices, the one or more first intermediate keys, the identifier of the first device, and the one or more first random numbers.

The second processing unit is configured to perform one of: calculating, using the first calculation mode, the one or more second intermediate responses respectively based on one or more second expected responses, the identifiers of the one or more second devices, the one or more first shared keys, the identifier of the first device, and the one or more first random numbers, the one or more second expected responses being obtained based on one or more second random numbers; calculating, using the first calculation mode, the one or more second intermediate responses respectively based on the second shared key, the identifiers of the one or more second devices, the one or more first shared keys, the identifier of the first device, and the one or more first random numbers; calculating a third intermediate key based on the second shared key, an identifier of a first network device, and a third random number, and calculating, using the first calculation mode, the one or more second intermediate responses respectively based on the third intermediate key, the identifiers of the one or more second devices, one or more first intermediate keys, the identifier of the first device, and the one or more first random numbers; obtaining the one or more first intermediate keys respectively based on the one or more first shared keys, and calculating, using the first calculation mode, the one or more second intermediate responses respectively based on the one or more second responses, the identifiers of the one or more second devices, the one or more first intermediate keys, the identifier of the first device, and the one or more first random numbers; obtaining the one or more first intermediate keys based on the one or more first shared keys, and calculating, using the first calculation mode, the one or more second intermediate responses respectively based on the second shared key, the identifiers of the one or more second devices, the one or more first intermediate keys, the identifier of the first device, and the one or more first random numbers; calculating, using a third calculation mode, the one or more second intermediate responses based on the one or more first shared keys, the identifier of the first network device and one or more fourth random numbers; calculating, using the first calculation mode, the one or more second intermediate responses respectively based on the identifiers of the one or more second devices, the one or more second shared keys, the identifier of the first device, and the one or more first random numbers; or obtaining the third intermediate key based on the second shared key, the identifier of the first network device, and the third random number, obtaining the one or more first intermediate keys based on the one or more first shared keys, and calculating, using the first calculation mode, the one or more second intermediate responses respectively based on the third intermediate key, the identifiers of the one or more second devices, the one or more first intermediate keys, the identifier of the first device, and the one or more first random numbers.

The second processing unit is configured to calculate, using the first calculation mode, the first expected response based on the one or more second intermediate responses and at least one of: an identifier of a first network device, or a third random number.

The second communication unit is configured to transmit the one or more first shared keys to the first device.

The second processing unit is configured to calculate the first expected response based on the second shared key and at least one of following parameters: an identifier of the first device, identifiers of the one or more second devices, or an identifier of a first network device; and performing, based on the first expected response and the first response, authentication of the first device serving as an intermediate node for the one or more second devices.

The core network side device includes a first network device, and the first communication unit is provided in the first network device. The first communication unit is configured to receive the first expected response from a second network device.

The first communication unit is configured to transmit a second message to the first device. The second message carries at least one of: identifiers of the one or more second devices, or an identifier of a device group. The device group includes multiple second devices.

The second message further carries one or more first message authentication codes for authenticating the core network side device. The second processing unit is configured to calculate the one or more first message authentication codes based on the at least one shared key.

The second processing unit is configured to calculate a first message authentication code based on the at least one shared key and at least one of following parameters: an identifier of a first network device, identifiers of the one or more second devices, or an identifier of the first device.

The second processing unit is configured to calculate, for each of the one or more second devices, a corresponding first message authentication code based on the one or more first shared keys.

The second communication unit is configured to receive an authentication request from the first device. The authentication request carries the identifiers of the one or more second devices.

The second message is used for requesting authentication. The core network side device includes a first network device, and the first communication unit is provided in the first network device. The first communication unit is configured to receive an authentication request from a third network device. The authentication request carries at least one of: identifiers of the one or more second devices, or an identifier of a device group. The device group includes multiple second devices.

The first device includes at least one of: a terminal device, or a first access network device. The second device is an ambient Internet of Things (AIoT) device. The first network device includes one of: an authentication server function (AUSF), or an authentication device. The authentication device includes one of: a second access network device, an access and mobility management function (AMF), a security anchor function (SEAF), a user plane function (UPF), a service server, or an AIoT network element.

A first device according to an embodiment of the disclosure includes a first communication unit and a first processing unit.

The first communication unit is configured to receive a second message from a core network side device. The second message carries one or more first message authentication codes for authenticating the core network side device.

The first processing unit is configured to calculate a second message authentication code based on at least one shared key. The at least one shared key includes at least one of: one or more first shared keys, or a second shared key. Different first shared keys of the one or more first shared keys are shared by different second devices with the first device and the core network side device. The second shared key is shared by the first device and the core network side device. The first processing unit is configured to authenticate the core network side device based on the second message authentication code and the one or more first message authentication codes.

A core network side device according to an embodiment of the disclosure includes a second communication unit and a second processing unit.

The second communication unit is configured to transmit a second message to the first device. The second message carries one or more first message authentication codes for authenticating the core network side device.

The second processing unit is configured to calculate the one or more first message authentication codes based on at least one shared key. The at least one shared key includes at least one of: one or more first shared keys, or a second shared key. Different first shared keys of the one or more first shared keys are shared by different second devices with the first device and the core network side device. The second shared key is shared by the first device and the core network side device.

A first device according to an embodiment of the disclosure includes a first processing unit and a first communication unit.

The first processing unit is configured to calculate, based on a third shared key shared with a target second device, a target verification code for authenticating the first device.

The first communication unit is configured to transmit a third message to the target second device. The third message carries the target verification code.

As illustrated in FIG. 20, a target second device according to an embodiment of the disclosure includes a third communication unit 2001 and a third processing unit 2002.

The third communication unit 2001 is configured to receive a third message from a first device. The third message carries a target verification code for authenticating the first device, and the target verification code is related to a third shared key shared by the target second device and the first device.

The third processing unit 2002 is configured to authenticate the first device based on a target check code and the target verification code.

The third processing unit is configured to calculate the target check code based on the third shared key and at least one of: a fifth random number, an identifier of the target second device, or an identifier of the first device.

A first device according to an embodiment of the disclosure includes a first processing unit and a first communication unit.

The first communication unit is configured to receive a fourth message from a target second device. The fourth message carries a third response for authenticating the target second device, and the third response is related to a third shared key shared by the target second device and the first device.

The first processing unit is configured to authenticate the target second device based on the third response and a third expected response.

A target second device according to an embodiment of the disclosure includes a third communication unit and a third processing unit.

The third communication unit is configured to transmit a fourth message to a first device. The fourth message carries a third response for authenticating the target second device, and the third response is related to a third shared key shared by the target second device and the first device.

The third processing unit is configured to calculate the third response based on the third shared key and at least one of: a fifth random number, an identifier of the target second device, or an identifier of the first device.

The device according to the embodiment of the disclosure can implement corresponding functions of the devices in the embodiments of the above authentication method. For the procedures, functions, implementations and beneficial effects of the modules (submodules, units, components or the like) in the first device, or the core network side device or the target second device, reference can be made to the corresponding description in the above method embodiments, which will not be described here again. It is to be noted that, the described functions of the modules (submodules, units, components or the like) in the first device, or the core network side device or the target second device according to the embodiments of the disclosure may be realized by different modules (submodules, units, components or the like) or may be implemented by the same module (submodule, unit, component or the like).

It is to be understood that, in the embodiments of the disclosure, the sizes of the serial numbers of the above operations do not imply the sequential order in which the operations are performed, and shall not construe any limitation to the implementation of the embodiments of the disclosure. The order in which the operations are performed should be decided by their functions and internal logics. Those skilled in the art may clearly appreciate that for convenience and simplicity of description, the particular operation procedures of the system, apparatus and units described above may refer to corresponding procedures in the foregoing method embodiment, which will not be described herein again. Stated above is merely detailed description of the disclosure, but the scope of protection of the disclosure is not limited thereto. Any modification or replacement that are easily conceivable by those familiar with the related art within the technical range disclosed by the disclosure shall fall within the scope of protection of the disclosure. Therefore, the scope of protection of the disclosure should be subjected to the claimed scope of the claims.

## Claims

1. An authentication method, comprising:
transmitting, by a first device, a first message to a core network side device, wherein the first message carries a first response used by the core network side device to perform authentication related to one or more second devices.

2. The method of claim 1, further comprising:
calculating, by the first device, the first response based on at least one shared key, wherein the at least one shared key comprises at least one of: one or more first shared keys, or a second shared key, different first shared keys of the one or more first shared keys are shared by different second devices with the first device and the core network side device, and the second shared key is shared by the first device and the core network side device.

3. The method of claim 2, wherein calculating, by the first device, the first response based on the at least one shared key comprises:
calculating, by the first device, the first response based on identifiers of the one or more second devices, and the one or more first shared keys, wherein the first response is used by the core network side device to authenticate the one or more second devices.

4. The method of claim 3, wherein calculating, by the first device, the first response based on the identifiers of the one or more second devices, and the one or more first shared keys comprises:
calculating, by the first device, the first response based on the identifiers of the one or more second devices, the one or more first shared keys, an identifier of the first device, and one or more first random numbers.

5. The method of claim 4, wherein calculating, by the first device, the first response based on the identifiers of the one or more second devices, and the one or more first shared keys comprises one of:
calculating, by the first device using a first calculation mode, the first response based on the identifiers of the one or more second devices, the one or more first shared keys, the identifier of the first device, and the one or more first random numbers;
obtaining, by the first device, one or more intermediate keys based on the one or more first shared keys, and calculating, by the first device using the first calculation mode, the first response based on the identifiers of the one or more second devices, the one or more intermediate keys, the identifier of the first device, and the one or more first random numbers; or
calculating, by the first device, one or more first intermediate responses based on the identifiers of the one or more second devices, the one or more first shared keys, the identifier of the first device, and the one or more first random numbers, and calculating, by the first device, the first response based on the one or more first intermediate responses.

6. The method of claim 5, wherein calculating, by the first device using the first calculation mode, the first response based on the identifiers of the one or more second devices, the one or more first shared keys, the identifier of the first device, and the one or more first random numbers comprises one of:
calculating, by the first device using the first calculation mode, the first response based on one or more second responses, the identifiers of the one or more second devices, the one or more first shared keys, the identifier of the first device, and the one or more first random numbers, wherein the one or more second responses are obtained based on one or more second random numbers;
calculating, by the first device using the first calculation mode, the first response based on the second shared key, the identifiers of the one or more second devices, the one or more first shared keys, the identifier of the first device, and the one or more first random numbers; or
calculating, by the first device, a third intermediate key based on the second shared key, an identifier of a first network device, and a third random number, and calculating, by the first device using the first calculation mode, the first response based on the third intermediate key, the identifiers of the one or more second devices, the one or more first shared keys, the identifier of the first device, and the one or more first random numbers.

7. The method of claim 5, wherein obtaining, by the first device, the one or more intermediate keys based on the one or more first shared keys, and calculating, by the first device using the first calculation mode, the first response based on the identifiers of the one or more second devices, the one or more intermediate keys, the identifier of the first device, and the one or more first random numbers comprises one of:
obtaining, by the first device, one or more first intermediate keys based on the one or more first shared keys, and calculating, by the first device using the first calculation mode, the first response based on one or more second responses, the identifiers of the one or more second devices, the one or more first intermediate keys, the identifier of the first device, and the one or more first random numbers, wherein the one or more second responses are obtained based on one or more second random numbers;
obtaining, by the first device, the one or more intermediate keys based on the one or more first shared keys, and calculating, by the first device using the first calculation mode, the first response based on the second shared key, the identifiers of the one or more second devices, the one or more first intermediate keys, the identifier of the first device, and the one or more first random numbers, wherein the second shared key is shared by the first device and the core network side device;
calculating, by the first device, one or more second intermediate keys based on the one or more first shared keys, an identifier of a first network device, and one or more fourth random numbers, and calculating, by the first device using the first calculation mode, the first response based on the identifiers of the one or more second devices, the one or more second intermediate keys, the identifier of the first device, and the one or more first random numbers; or
obtaining, by the first device, a third intermediate key based on the second shared key, the identifier of the first network device, and a third random number, obtaining, by the first device, the one or more first intermediate keys based on the one or more first shared keys, and calculating, by the first device using the first calculation mode, the first response based on the third intermediate key, the identifiers of the one or more second devices, the one or more first intermediate keys, the identifier of the first device, and the one or more first random numbers.

8. The method of claim 5, wherein calculating, by the first device, the one or more first intermediate responses based on the identifiers of the one or more second devices, the one or more first shared keys, the identifier of the first device, and the one or more first random numbers comprises one of:
calculating, by the first device using the first calculation mode, the one or more first intermediate responses respectively based on one or more second responses, the identifiers of the one or more second devices, the one or more first shared keys, the identifier of the first device, and the one or more first random numbers, wherein the one or more second responses are obtained based on one or more second random numbers;
calculating, by the first device using the first calculation mode, the one or more first intermediate responses respectively based on the second shared key, the identifiers of the one or more second devices, the one or more first shared keys, the identifier of the first device, and the one or more first random numbers;
calculating, by the first device, a third intermediate key based on the second shared key, an identifier of a first network device, and a third random number, and calculating, by the first device using the first calculation mode, the one or more first intermediate responses respectively based on the third intermediate key, the identifiers of the one or more second devices, one or more first intermediate keys, the identifier of the first device, and the one or more first random numbers;
obtaining, by the first device, the one or more first intermediate keys respectively based on the one or more first shared keys, and calculating, by the first device using the first calculation mode, the one or more first intermediate responses respectively based on the one or more second responses, the identifiers of the one or more second devices, the one or more first intermediate keys, the identifier of the first device, and the one or more first random numbers;
obtaining, by the first device, the one or more first intermediate keys based on the one or more first shared keys, and calculating, by the first device using the first calculation mode, the one or more first intermediate responses respectively based on the second shared key, the identifiers of the one or more second devices, the one or more first intermediate keys, the identifier of the first device, and the one or more first random numbers;
calculating, by the first device, one or more second intermediate keys based on the one or more first shared keys, the identifier of the first network device, and one or more fourth random numbers, and calculating, by the first device using the first calculation mode, the one or more first intermediate responses respectively based on the identifiers of the one or more second devices, the one or more second intermediate keys, the identifier of the first device, and the one or more first random numbers; or
obtaining, by the first device, the third intermediate key based on the second shared key, the identifier of the first network device, and a third random number, obtaining, by the first device, the one or more first intermediate keys based on the one or more first shared keys, and calculating, by the first device using the first calculation mode, the one or more first intermediate responses respectively based on the third intermediate key, the identifiers of the one or more second devices, the one or more first intermediate keys, the identifier of the first device, and the one or more first random numbers.

9. The method of claim 5 or 8, wherein calculating, by the first device, the first response based on the one or more first intermediate responses comprises:
calculating, by the first device using the first calculation mode, the first response based on the one or more first intermediate responses and at least one of: an identifier of a first network device, or a third random number.

10. The method of any one of claims 2 to 9, further comprising:
receiving, by the first device, the one or more first shared keys.

11. The method of claim 2, wherein calculating, by the first device, the first response based on the at least one shared key comprises:
calculating, by the first device, the first response based on the second shared key and at least one of following parameters: an identifier of the first device, identifiers of the one or more second devices, or an identifier of a first network device, wherein the first response is used by the core network side device to authenticate the first device serving as an intermediate node for the one or more second devices.

12. The method of any one of claims 2 to 11, further comprising:
receiving, by the first device, a second message from the core network side device, wherein the second message carries at least one of: identifiers of the one or more second devices, or an identifier of a device group, and the device group comprises a plurality of second devices.

13. The method of claim 12, wherein the second message further carries one or more first message authentication codes for authenticating the core network side device, and the method further comprises:
calculating, by the first device, a second message authentication code based on the at least one shared key; and
authenticating, by the first device, the core network side device based on the second message authentication code and the one or more first message authentication codes.

14. The method of claim 13, wherein the second message carries one first message authentication code, and calculating, by the first device, the second message authentication code based on the at least one shared key comprises:
calculating, by the first device, the second message authentication code based on the at least one shared key and at least one of following parameters: an identifier of a first network device, identifiers of the one or more second devices, or an identifier of the first device.

15. The method of claim 13, wherein the second message carries the one or more first message authentication codes, and calculating, by the first device, the second message authentication code based on the at least one shared key comprises: calculating, by the first device, the second message authentication code based on a first shared key corresponding to a target second device among the one or more second devices; and
authenticating, by the first device, the core network side device based on the one or more second message authentication codes and the one or more first message authentication codes comprise: authenticating the core network side device based on the target second message authentication code and a target first message authentication code of the one or more first message authentication codes, wherein the target first message authentication code is associated with the target second device.

16. The method of any one of claims 12 to 15, further comprising:
transmitting, by the first device, an authentication request to the core network side device, wherein the authentication request carries the identifiers of the one or more second devices.

17. The method of any one of claims 12 to 15, wherein the second message is used for requesting authentication.

18. The method of any one of claims 1 to 16, further comprising:
receiving, by the first device, an authentication request from each of the one or more second devices, wherein the authentication request carries an identifier of the second device.

19. The method of any one of claims 1 to 18, further comprising:
transmitting, by the first device, a third message to a target second device among the one or more second devices, wherein the third message is used for instructing the target second device to authenticate the first device;
receiving, by the first device, a pilot signal transmitted by the target second device;
calculating, by the first device, a target verification code corresponding to the target second device based on the pilot signal transmitted by the target second device;
transmitting, by the first device, the target verification code to the target second device; and
receiving, by the first device, a fourth message from the target second device, wherein the fourth message indicates an authentication result of the target second device for authenticating the first device.

20. The method of any one of claims 1 to 18, further comprising:
calculating, by the first device based on a third shared key shared with a target second device among the one or more second devices, a target verification code for authenticating the first device; and
transmitting, by the first device, a third message to the target second device, wherein the third message carries the target verification code.

21. The method of claim 20, wherein calculating, by the first device based on the third shared key shared with the target second device among the one or more second devices, the target verification code for authenticating the first device comprises:
calculating, by the first device, the target verification code for authenticating the first device based on the third shared key shared with the target second device among the one or more second devices and at least one of: a fifth random number, an identifier of the target second device, or an identifier of the first device.

22. The method of any one of claims 1 to 21, further comprising:
receiving, by the first device, a fourth message from a target second device among the one or more second devices, wherein the fourth message carries a third response for authenticating the target second device, and the third response is related to a third shared key shared by the target second device and the first device; and
authenticating, by the first device, the target second device based on the third response and a third expected response.

23. The method of claim 22, further comprising:
calculating, by the first device, the third expected response based on the third shared key and at least one of following parameters: a fifth random number, an identifier of the target second device, or an identifier of the first device.

24. The method of any one of claims 1 to 23, further comprising at least one of:
receiving, by the first device, binding information from a fourth network device, wherein the binding information comprises one or more second devices having a binding relationship with the first device;
determining, by the first device based on preset binding information, the one or more second devices having the binding relationship; or
taking, by the first device, the one or more second devices that have passed the authentication as the one or more second devices having the binding relationship, wherein the authentication comprises physical layer authentication and/or air interface authentication.

25. The method of any one of claims 6-9, 11 and 14, wherein the first device comprises at least one of: a terminal device, or a first access network device; the second device is an ambient Internet of Things, AIoT, device; the first network device comprises one of: an authentication server function, AUSF, or an authentication device; and the authentication device comprises one of: a second access network device, an access and mobility management function, AMF, a security anchor function, SEAF, a user plane function, UPF, a service server, or an AIoT network element.

26. An authentication method, comprising:
receiving, by a core network side device, a first message from a first device, wherein the first message carries a first response used by the core network side device to perform authentication related to one or more second devices.

27. The method of claim 26, further comprising:
performing, by the core network side device, authentication related to the one or more second devices based on a first expected response and the first response, wherein the first expected response is calculated based on at least one first shared key, the at least one shared key comprises at least one of: one or more first shared keys, or a second shared key, different first shared keys of the one or more first shared keys are shared by different second devices with the first device and the core network side device, and the second shared key is shared by the first device and the core network side device.

28. The method of claim 27, further comprising:
calculating, by the core network side device, the first expected response based on the at least one shared key.

29. The method of claim 28, wherein calculating, by the core network side device, the first expected response based on the at least one shared key comprises: calculating, by the core network side device, the first expected response based on identifiers of the one or more second devices, and the one or more first shared keys; and
performing, by the core network side device, the authentication related to the one or more second devices based on the first expected response and the first response comprises: performing, by the core network side device, authentication of the one or more second devices based on the first expected response and the first response.

30. The method of claim 29, wherein calculating, by the core network side device, the first expected response based on the identifiers of the one or more second devices, and the one or more first shared keys comprises one of:
calculating, by the core network side device using a first calculation mode, the first expected response based on the identifiers of the one or more second devices, the one or more first shared keys, an identifier of the first device, and one or more first random numbers;
obtaining, by the core network side device, one or more intermediate keys based on the one or more first shared keys, and calculating, by the core network side device using the first calculation mode, the first expected response based on the identifiers of the one or more second devices, the one or more intermediate keys, the identifier of the first device, and the one or more first random numbers; or
calculating, by the core network side device, one or more second intermediate responses based on the identifiers of the one or more second devices, the one or more first shared keys, the identifier of the first device, and the one or more first random numbers, and calculating, by the core network side device, the first expected response based on the one or more second intermediate responses.

31. The method of claim 30, wherein calculating, by the core network side device using the first calculation mode, the first expected response based on the identifiers of the one or more second devices, the one or more first shared keys, the identifier of the first device, and the one or more first random numbers comprises one of:
calculating, by the core network side device using the first calculation mode, the first expected response based on one or more second expected responses, the identifiers of the one or more second devices, the one or more first shared keys, the identifier of the first device, and the one or more first random numbers, wherein the one or more second expected responses are obtained based on one or more second random numbers;
calculating, by the core network side device using the first calculation mode, the first expected response based on the second shared key, the identifiers of the one or more second devices, the one or more first shared keys, the identifier of the first device, and the one or more first random numbers; or
calculating, by the core network side device, a third intermediate key based on the second shared key, an identifier of a first network device, and a third random number, and calculating, by the core network side device using the first calculation mode, the first expected response based on the third intermediate key, the identifiers of the one or more second devices, the one or more first shared keys, the identifier of the first device, and the one or more first random numbers.

32. The method of claim 30, wherein obtaining, by the core network side device, the one or more intermediate keys based on the one or more first shared keys, and calculating, by the core network side device using the first calculation mode, the first expected response based on the identifiers of the one or more second devices, the one or more intermediate keys, the identifier of the first device, and the one or more first random numbers comprises one of:
obtaining, by the core network side device, one or more first intermediate keys based on the one or more first shared keys, and calculating, by the core network side device using the first calculation mode, the first expected response based on one or more second responses, the identifiers of the one or more second devices, the one or more first intermediate keys, the identifier of the first device, and the one or more first random numbers, wherein the one or more second expected responses are obtained based on one or more second random numbers;
obtaining, by the core network side device, the one or more first intermediate keys based on the one or more first shared keys, and calculating, by the core network side device using the first calculation mode, the first expected response based on the second shared key, the identifiers of the one or more second devices, the one or more first intermediate keys, the identifier of the first device, and the one or more first random numbers; or
calculating, by the core network side device, one or more second intermediate keys based on the one or more first shared keys, an identifier of a first network device, and one or more fourth random numbers, and calculating, by the core network side device using the first calculation mode, the first expected response based on the identifiers of the one or more second devices, the one or more second intermediate keys, the identifier of the first device, and the one or more first random numbers; or
obtaining, by the core network side device, a third intermediate key based on the second shared key, the identifier of the first network device, and a third random number, obtaining, by the core network side device, the one or more first intermediate keys based on the one or more first shared keys, and calculating, by the core network side device using the first calculation mode, the first expected response based on the third intermediate key, the identifiers of the one or more second devices, the one or more first intermediate keys, the identifier of the first device, and the one or more first random numbers.

33. The method of claim 30, wherein calculating, by the core network side device, the one or more second intermediate responses based on the identifiers of the one or more second devices, the one or more first shared keys, the identifier of the first device, and the one or more first random numbers comprises one of:
calculating, by the core network side device using the first calculation mode, the one or more second intermediate responses respectively based on one or more second expected responses, the identifiers of the one or more second devices, the one or more first shared keys, the identifier of the first device, and the one or more first random numbers, wherein the one or more second expected responses are obtained based on one or more second random numbers;
calculating, by the core network side device using the first calculation mode, the one or more second intermediate responses respectively based on the second shared key, the identifiers of the one or more second devices, the one or more first shared keys, the identifier of the first device, and the one or more first random numbers;
calculating, by the core network side device, a third intermediate key based on the second shared key, an identifier of a first network device, and a third random number, and calculating, by the core network side device using the first calculation mode, the one or more second intermediate responses respectively based on the third intermediate key, the identifiers of the one or more second devices, one or more first intermediate keys, the identifier of the first device, and the one or more first random numbers;
obtaining, by the core network side device, the one or more first intermediate keys respectively based on the one or more first shared keys, and calculating, by the core network side device using the first calculation mode, the one or more second intermediate responses respectively based on the one or more second responses, the identifiers of the one or more second devices, the one or more first intermediate keys, the identifier of the first device, and the one or more first random numbers;
obtaining, by the core network side device, the one or more first intermediate keys based on the one or more first shared keys, and calculating, by the core network side device using the first calculation mode, the one or more second intermediate responses respectively based on the second shared key, the identifiers of the one or more second devices, the one or more first intermediate keys, the identifier of the first device, and the one or more first random numbers;
calculating, by the core network side device, one or more second intermediate keys based on the one or more first shared keys, the identifier of the first network device, and one or more fourth random numbers, and calculating, by the core network side device using the first calculation mode, the one or more second intermediate responses respectively based on the identifiers of the one or more second devices, the one or more second intermediate keys, the identifier of the first device, and the one or more first random numbers; or
obtaining, by the core network side device, the third intermediate key based on the second shared key, the identifier of the first network device, and the third random number, obtaining, by the core network side device, the one or more first intermediate keys based on the one or more first shared keys, and calculating, by the core network side device using the first calculation mode, the one or more second intermediate responses respectively based on the third intermediate key, the identifiers of the one or more second devices, the one or more first intermediate keys, the identifier of the first device, and the one or more first random numbers.

34. The method of claim 30 or 33, wherein calculating, by the core network side device, the first expected response based on the one or more second intermediate responses comprises:
calculating, by the core network side device using the first calculation mode, the first expected response based on the one or more second intermediate responses and at least one of: an identifier of a first network device, or a third random number.

35. The method of any one of claims 27 to 34, further comprising:
transmitting, by the core network side device, the one or more first shared keys to the first device.

36. The method of claim 28, wherein calculating, by the core network side device, the first expected response based on the at least one shared key comprises: calculating, by the core network side device, the first expected response based on the second shared key and at least one of following parameters: an identifier of the first device, identifiers of the one or more second devices, or an identifier of a first network device; and
performing, by the core network side device, the authentication related to the one or more second devices based on the first expected response and the first response comprises: performing, by the core network side device based on the first expected response and the first response, authentication of the first device serving as an intermediate node for the one or more second devices.

37. The method of claim 27, wherein the core network side device comprises a first network device, and the method further comprises:
receiving, by the first network device, the first expected response from a second network device.

38. The method of any one of claims 27 to 37, further comprising:
transmitting, by the core network side device, a second message to the first device, wherein the second message carries at least one of: identifiers of the one or more second devices, or an identifier of a device group, and the device group comprises a plurality of second devices.

39. The method of claim 38, wherein the second message further carries one or more first message authentication codes for authenticating the core network side device, and the method further comprises:
calculating, by the core network side device, the one or more first message authentication codes based on the at least one shared key.

40. The method of claim 39, wherein calculating, by the core network side device, the one or more first message authentication codes based on the at least one shared key comprises:
calculating, by the core network side device, one first message authentication code based on the at least one shared key and at least one of following parameters: an identifier of a first network device, identifiers of the one or more second devices, or an identifier of the first device.

41. The method of claim 39, wherein calculating, by the core network side device, the one or more first message authentication codes based on the at least one shared key comprises:
for each of the one or more second devices, calculating, by the core network side device, a corresponding first message authentication code based on the one or more first shared keys.

42. The method of any one of claims 38 to 41, further comprising:
receiving, by the core network side device, an authentication request from the first device, wherein the authentication request carries the identifiers of the one or more second devices.

43. The method of any one of claims 38 to 41, wherein the second message is used for requesting authentication, the core network side device comprises a first network device, and the method further comprises:
receiving, by the first network device, an authentication request from a third network device, wherein the authentication request carries at least one of: identifiers of the one or more second devices, or an identifier of a device group, and the device group comprises a plurality of second devices.

44. The method of any one of claims 31-34, 36, 37, 40 and 43, wherein the first device comprises at least one of: a terminal device, or a first access network device; the second device is an ambient Internet of Things, AIoT, device; the first network device comprises one of: an authentication server function, AUSF, or an authentication device; and the authentication device comprises one of: a second access network device, an access and mobility management function, AMF, a security anchor function, SEAF, a user plane function, UPF, a service server, or an AIoT network element.

45. An authentication method, comprising:
receiving, by the first device, a second message from a core network side device, wherein the second message carries one or more first message authentication codes for authenticating the core network side device.

46. The method of claim 45, further comprising:
calculating, by the first device, a second message authentication code based on at least one shared key, wherein the at least one shared key comprises at least one of: one or more first shared keys, or a second shared key, different first shared keys of the one or more first shared keys are shared by different second devices with the first device and the core network side device, and the second shared key is shared by the first device and the core network side device; and
authenticating, by the first device, the core network side device based on the second message authentication code and the one or more first message authentication codes.

47. An authentication method, comprising:
transmitting, by the core network side device, a second message to the first device, wherein the second message carries one or more first message authentication codes for authenticating the core network side device.

48. The method of claim 47, further comprising:
calculating, by the core network side device, the one or more first message authentication codes based on at least one shared key, wherein the at least one shared key comprises at least one of: one or more first shared keys, or a second shared key, different first shared keys of the one or more first shared keys are shared by different second devices with the first device and the core network side device, and the second shared key is shared by the first device and the core network side device.

49. An authentication method, comprising:
calculating, by a first device based on a third shared key shared with a target second device, a target verification code for authenticating the first device; and
transmitting, by the first device, a third message to the target second device, wherein the third message carries the target verification code.

50. An authentication method, comprising:
receiving, by a target second device, a third message from a first device, wherein the third message carries a target verification code for authenticating the first device, and the target verification code is related to a third shared key shared by the target second device and the first device; and
authenticating, by the target second device, the first device based on a target check code and the target verification code.

51. The method of claim 50, further comprising:
calculating, by the target second device, the target check code based on the third shared key and at least one of: a fifth random number, an identifier of the target second device, or an identifier of the first device.

52. An authentication method, comprising:
receiving, by a first device, a fourth message from a target second device, wherein the fourth message carries a third response for authenticating the target second device, and the third response is related to a third shared key shared by the target second device and the first device; and
authenticating, by the first device, the target second device based on the third response and a third expected response.

53. An authentication method, comprising:
transmitting, by a target second device, a fourth message to a first device, wherein the fourth message carries a third response for authenticating the target second device, and the third response is related to a third shared key shared by the target second device and the first device.

54. The method of claim 53, further comprising:
calculating, by the target second device, the third response based on the third shared key and at least one of: a fifth random number, an identifier of the target second device, or an identifier of the first device.

55. A first device, comprising:
a first communication unit, configured to transmit a first message to a core network side device, wherein the first message carries a first response used by the core network side device to perform authentication related to one or more second devices.

56. A core network side device, comprising:
a second communication unit, configured to receive a first message from a first device, wherein the first message carries a first response used by the core network side device to perform authentication related to one or more second devices.

57. A first device, comprising:
a first communication unit, configured to receive a second message from a core network side device, wherein the second message carries one or more first message authentication codes for authenticating the core network side device.

58. A core network side device, comprising:
a second communication unit, configured to transmit a second message to the first device, wherein the second message carries one or more first message authentication codes for authenticating the core network side device.

59. A first device, comprising:
a first processing unit, configured to calculate, based on a third shared key shared with a target second device, a target verification code for authenticating the first device; and
a first communication unit, configured to transmit a third message to the target second device, wherein the third message carries the target verification code.

60. A target second device, comprising:
a third communication unit, configured to receive a third message from a first device, wherein the third message carries a target verification code for authenticating the first device, and the target verification code is related to a third shared key shared by the target second device and the first device; and
a third processing unit, configured to authenticate the first device based on a target check code and the target verification code.

61. A first device, comprising:
a first communication unit, configured to receive a fourth message from a target second device, wherein the fourth message carries a third response for authenticating the target second device, and the third response is related to a third shared key shared by the target second device and the first device; and
a first processing unit, configured to authenticate the target second device based on the third response and a third expected response.

62. A target second device, comprising:
a third communication unit, configured to transmit a fourth message to a first device, wherein the fourth message carries a third response for authenticating the target second device, and the third response is related to a third shared key shared by the target second device and the first device.
